# EUROPEAN PATENT SPECIFICATION

(11) **EP 3 275 972 B1**
(45) Date of publication and mention of the grant of the patent: **19.06.2019**
(21) Application number: 16768202.0
(22) Date of filing: 10.02.2016
(51) Int. Cl.: C09K 19/54, C09K 19/12, C09K 19/14, C09K 19/30, C09K 19/32, C09K 19/34, C09K 19/42, G02F 1/13, C09K 19/20, C09K 19/46, C09K 19/04, G02F 1/1362

(54) **LIQUID CRYSTAL COMPOSITION AND LIQUID CRYSTAL DISPLAY ELEMENT**
FLÜSSIGKRISTALLZUSAMMENSETZUNG UND FLÜSSIGKRISTALLANZEIGEELEMENT
COMPOSITION DE CRISTAUX LIQUIDES ET ÉLÉMENT D'AFFICHAGE À CRISTAUX LIQUIDES

(30) Priority: 24.03.2015 JP 2015061522
(43) Date of publication of application: 31.01.2018
(73) Proprietor: JNC Corporation, Chiyoda-ku Tokyo 100-8105 (JP); JNC Petrochemical Corporation, Tokyo 100-0004 (JP)
(72) Inventor: FURUSATO, Yoshimasa, Ichihara-shi Chiba 290-8551 (JP); SAITO, Masayuki, Ichihara-shi Chiba 290-8551 (JP)
(74) Representative: TBK
(86) International application number: PCT/JP2016/053999
(87) International publication number: WO 2016/152299

(56) References cited:
- WO-A1-2015/076077
- WO-A1-2016/006524
- JP-A- S5 350 181
- JP-A- H06 157 539
- JP-A- 2010 244 015
- JP-A- 2012 224 632
- JP-A- 2014 084 460
- JP-B1- 5 850 187

## Description

### Technical Field

The invention relates to a liquid crystal composition, a liquid crystal display device including the composition, and so forth. In particular, the invention relates to a liquid crystal composition having positive dielectric anisotropy, and an active matrix (AM) device that includes the composition and has a mode such as a TN mode, an OCB mode, an IPS mode, an FFS mode or an FPA mode.

### Background Art

In a liquid crystal display device, a classification based on an operating mode for liquid crystal molecules includes a phase change (PC) mode, a twisted nematic (TN) mode, a super twisted nematic (STN) mode, an electrically controlled birefringence (ECB) mode, an optically compensated bend (OCB) mode, an in-plane switching (IPS) mode, a vertical alignment (VA) mode, a fringe field switching (FFS) mode and a field-induced photo-reactive alignment (FPA) mode. A classification based on a driving mode in the device includes a passive matrix (PM) and an active matrix (AM). The PM is classified into static, multiplex and so forth, and the AM is classified into a thin film transistor (TFT), a metal insulator metal (MIM) and so forth. The TFT is further classified into amorphous silicon and polycrystal silicon. The latter is classified into a high temperature type and a low temperature type based on a production process . A classification based on a light source includes a reflective type utilizing natural light, a transmissive type utilizing backlight and a transflective type utilizing both the natural light and the backlight.

The liquid crystal display device includes a liquid crystal composition having a nematic phase. The composition has suitable characteristics. An AM device having good characteristics can be obtained by improving characteristics of the composition. Table 1 below summarizes a relationship in two characteristics. The characteristics of the composition will be further described based on a commercially available AM device. A temperature range of the nematic phase relates to a temperature range in which the device can be used. A preferred maximum temperature of the nematic phase is about 70°C or higher, and a preferred minimum temperature of the nematic phase is about -10°C or lower. Viscosity of the composition relates to a response time in the device. A short response time is preferred for displaying moving images on the device. A shorter response time even by one millisecond is desirable. Accordingly, a small viscosity in the composition is preferred. A small viscosity at low temperature is further preferred. An elastic constant of the composition relates to a contrast of the device. In order to increase the contrast of the device, a large elastic constant in the composition is further preferred.

**Table 1. Characteristics of Composition and AM Device**

| No. | Characteristics of Composition | Characteristics of AM Device |
|---|---|---|
| 1 | Wide temperature range of a nematic phase | Wide usable temperature range |
| 2 | Small viscosity | Short response time |
| 3 | Suitable optical anisotropy | Large contrast ratio |
| 4 | Large positive or negative dielectric anisotropy | Low threshold voltage and small electric power consumption |
| | | Large contrast ratio |
| 5 | Large specific resistance | Large voltage holding ratio and large contrast ratio |
| 6 | High stability to ultraviolet light and heat | Long service life |
| 7 | Large elastic constant | Large contrast ratio and short response time |

Optical anisotropy of the composition relates to a contrast ratio in the device. According to a mode of the device, large optical anisotropy or small optical anisotropy, more specifically, suitable optical anisotropy is required. A product (Δn × d) of the optical anisotropy (Δn) of the composition and a cell gap (d) in the device is designed so as to maximize the contrast ratio. A suitable value of the product depends on a type of the operating mode. In a device having a mode such as TN mode, a suitable value is about 0.45 micrometer. In the above case, a composition having the large optical anisotropy is preferred for a device having a small cell gap. Large dielectric anisotropy in the composition contributes to low threshold voltage, small electric power consumption and a large contrast ratio in the device. Accordingly, the large dielectric anisotropy is preferred. Large specific resistance in the composition contributes to a large voltage holding ratio and the large contrast ratio in the device. Accordingly, a composition having large specific resistance at room temperature and also at a temperature close to the maximum temperature of the nematic phase in an initial stage is preferred. The composition having the large specific resistance at room temperature and also at a temperature close to the maximum temperature of the nematic phase even after the device has been used for a long period of time is preferred. Stability of the composition to ultraviolet light and heat relates to a service life of the liquid crystal display device. In the case where the stability is high, the device has a long service life. Such characteristics are preferred for an AM device use in a liquid crystal projector, a liquid crystal television and so forth.

If the liquid crystal display device is used for a long period of time, an electric charge is accumulated in a part of picture element to cause image persistence in an image. Therefore, in order to prevent the image persistence, an additive to accelerate discharge of the electric charge accumulated in the picture element has been studied. A DC luminance relaxation time constant described in Patent literature No. 1 is used as a measure of discharge. As a result, a liquid crystal display device including a liquid crystal composition to which compound (1) described herein is added has been found to have a large negative DC luminance relaxation time constant.

### Citation List

### Patent Literature

Patent literature No. 1: JP 2012-053394 A.
Patent literature No. 2: JP 2007-137921 A.

### Summary of Invention

### Technical Problem

One of aims of the invention is to provide a liquid crystal composition satisfying at least one of characteristics such as high maximum temperature of a nematic phase, low minimum temperature of the nematic phase, small viscosity, suitable optical anisotropy, large dielectric anisotropy, large specific resistance, high stability to ultraviolet light, high stability to heat and a large elastic constant. Another aim is to provide a liquid crystal composition having a suitable balance regarding at least two of the characteristics. Another aim is to provide a liquid crystal display device including such a composition. Another aim is to provide an AM device having characteristics such as a short response time, a large voltage holding ratio, low threshold voltage, a large contrast ratio, a large negative DC luminance relaxation time constant and a long service life.

### Solution to Problem

The invention concerns a liquid crystal composition that has a nematic phase and positive dielectric anisotropy, and contains at least one compound selected from the group of compounds represented by formula (1) as an additive component, and at least one compound selected from the group of compounds represented by formula (2) as a first component, and a liquid crystal display device including the composition: 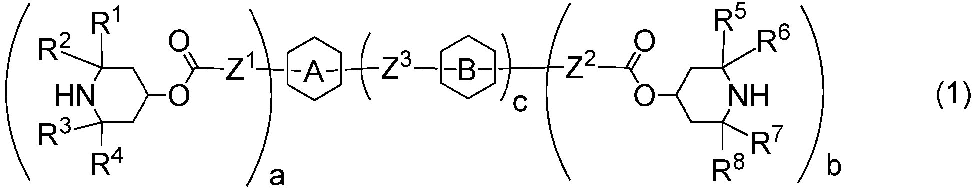 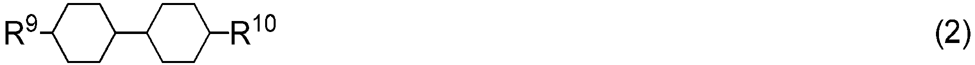
wherein, in formula (1), R¹, R², R³, R⁴, R⁵, R⁶, R⁷ and R⁸ are independently hydrogen or alkyl having 1 to 4 carbons; ring A and ring B are independently cyclohexylene, cyclohexenylene, decahydronaphthalenediyl, dihydropyrandiyl, tetrahydropyrandiyl, dioxanediyl, phenylene, naphthalenediyl, pyrimidinediyl or pyridinediyl, and in the rings, at least one hydrogen may be replaced by fluorine, chlorine, alkyl having 1 to 5 carbons, alkoxy having 1 to 5 carbons, or alkyl having 1 to 5 carbons in which at least one hydrogen is replaced by fluorine or chlorine; Z¹, Z² and Z³ are independently a single bond or alkylene having 1 to 10 carbons, and in the alkylene, at least one piece of -CH₂- may be replaced by -O-, -S-, -CO-, -COO-, -OCO- or -SiH₂-, and at least one piece of -CH₂-CH₂- may be replaced by -CH=CH- or -C≡C-, and in the groups, at least one hydrogen may be replaced by fluorine or chlorine; a and b are independently 1 or 2; c is 0, 1 or 2, and ring A when c is 0 is cyclohexenylene, decahydronaphthalenediyl, dihydropyrandiyl, tetrahydropyrandiyl, dioxanediyl, naphthalenediyl, pyrimidinediyl or pyridinediyl, and in the rings, at least one hydrogen may be replaced by fluorine, chlorine, alkyl having 1 to 5 carbons, alkoxy having 1 to 5 carbons, or alkyl having 1 to 5 carbons in which at least one hydrogen is replaced by fluorine or chlorine; and
in formula (2), R⁹ and R¹⁰ are independently alkyl having 1 to 12 carbons, alkoxy having 1 to 12 carbons, alkenyl having 2 to 12 carbons, alkyl having 1 to 12 carbons in which at least one hydrogen is replaced by fluorine or chlorine, or alkenyl having 2 to 12 carbons in which at least one hydrogen is replaced by fluorine or chlorine.

### Advantageous Effects of Invention

An advantage of the invention is a liquid crystal composition satisfying at least one of characteristics such as high maximum temperature of a nematic phase, low minimum temperature of the nematic phase, small viscosity, suitable optical anisotropy, large dielectric anisotropy, large specific resistance, high stability to ultraviolet light, high stability to heat and a large elastic constant. Another advantage is a liquid crystal composition having a suitable balance regarding at least two of the characteristics. Another advantage is a liquid crystal display device including such a composition. Another advantage is an AM device having characteristics such as a short response time, a large voltage holding ratio, low threshold voltage, a large contrast ratio, a large negative DC luminance relaxation time constant and a long service life.

### Description of Embodiments

Usage of terms herein is as described below. Terms "liquid crystal composition" and "liquid crystal display device" may be occasionally abbreviated as "composition" and "device," respectively. "Liquid crystal display device" is a generic term for a liquid crystal display panel and a liquid crystal display module. "Liquid crystal compound" is a generic term for a compound having a liquid crystal phase such as a nematic phase and a smectic phase, and a compound having no liquid crystal phase but to be mixed with the composition for the purpose of adjusting characteristics such as a temperature range of the nematic phase, viscosity and dielectric anisotropy. The compound has a six-membered ring such as 1, 4-cyclohexylene and 1,4-phenylene, and has rod-like molecular structure. "Polymerizable compound" is a compound to be added for the purpose of forming a polymer in the composition. At least one compound selected from the group of compounds represented by formula (1) may be occasionally abbreviated as "compound (1)." "Compound (1)" means one compound, a mixture of two compounds or a mixture of three or more compounds represented by formula (1). A same rule applies also to any other compound represented by any other formula.

The liquid crystal composition is prepared by mixing a plurality of liquid crystal compounds. A proportion (content) of the liquid crystal compounds is expressed in terms of weight percent (% by weight) based on the weight of the liquid crystal composition. An additive such as an optically active compound, an antioxidant, an ultraviolet light absorber, a dye, an antifoaming agent, the polymerizable compound, a polymerization initiator and a polymerization inhibitor is added to the liquid crystal composition when necessary. A proportion (amount of addition) of the additive is expressed in terms of weight percent (% by weight) based on the weight of the liquid crystal composition in a manner similar to the proportion of the liquid crystal compounds. Weight parts per million (ppm) may be occasionally used. A proportion of the polymerization initiator and the polymerization inhibitor is exceptionally expressed based on the weight of the polymerizable compound.

"Maximum temperature of the nematic phase" may be occasionally abbreviated as "maximum temperature." "Minimum temperature of the nematic phase" may be occasionally abbreviated as "minimum temperature." An expression "having large specific resistance" means that the composition has large specific resistance at room temperature and also at a temperature close to the maximum temperature of the nematic phase in an initial stage, and the composition has the large specific resistance at room temperature and also at a temperature close to the maximum temperature of the nematic phase even after the device has been used for a long period of time. An expression "having a large voltage holding ratio" means that the device has a large voltage holding ratio at room temperature and also at a temperature close to the maximum temperature of the nematic phase in the initial stage, and the device has the large voltage holding ratio at room temperature and also at a temperature close to the maximum temperature of the nematic phase even after the device has been used for a long period of time.

An expression "at least one piece of 'A'" means that the number of 'A' is arbitrary. An expression "at least one piece of 'A' may be replaced by 'B'" means that, when the number of 'A' is 1, a position of 'A' is arbitrary, and also when the number of 'A' is 2 or more, positions thereof can be selected without restriction. A same rule applies also to an expression "at least one piece of 'A' is replaced by 'B'.

A symbol of terminal group R¹¹ is used in a plurality of compounds in chemical formulas of component compounds. In the compounds, two groups represented by two pieces of arbitrary R¹¹ may be identical or different. For example, in one case, R¹¹ of compound (3) is ethyl and R¹¹ of compound (3-1) is ethyl. In another case, R¹¹ of compound (3) is ethyl and R¹¹ of compound (3-1) is propyl. A same rule applies also to a symbol of any other terminal group or the like. In formula (3), when d is 2, two of ring C exists. In the compound, two rings represented by two of ring C may be identical or different. A same rule applies also to two of arbitrary ring C when d is larger than 2. A same rule applies also to a symbol of Z⁵, ring D or the like.

Then, 2-fluoro-1,4-phenylene means two divalent groups described below. In a chemical formula, fluorine may be leftward (L) or rightward (R). A same rule applies also to an asymmetrical divalent group such as tetrahydropyran-2,5-diyl. A same rule applies also to a bonding group such as carbonyloxy (-COO- and -OCO-).

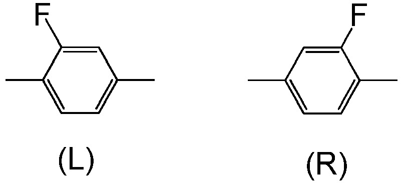

The invention includes items described below.
Item 1. A liquid crystal composition that has a nematic phase and positive dielectric anisotropy, and contains at least one compound selected from the group of compounds represented by formula (1) as an additive component, and at least one compound selected from the group of compounds represented by formula (2) as a first component: 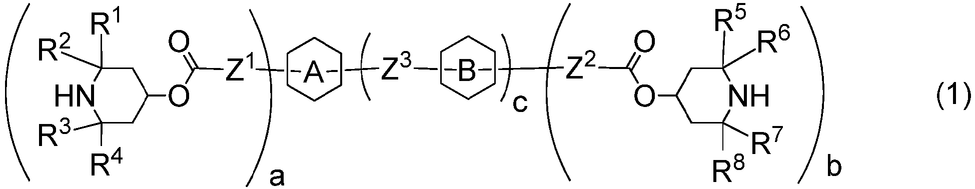 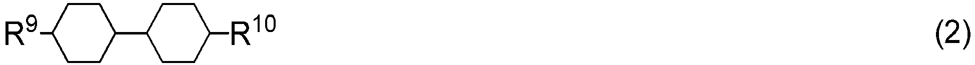 wherein, in formula (1), R¹, R², R³, R⁴, R⁵, R⁶, R⁷ and R⁸ are independently hydrogen or alkyl having 1 to 4 carbons; ring A and ring B are independently cyclohexylene, cyclohexenylene, decahydronaphthalenediyl, dihydropyrandiyl, tetrahydropyrandiyl, dioxanediyl, phenylene, naphthalenediyl, pyrimidinediyl or pyridinediyl, and in the rings, at least one hydrogen may be replaced by fluorine, chlorine, alkyl having 1 to 5 carbons, alkoxy having 1 to 5 carbons, or alkyl having 1 to 5 carbons in which at least one hydrogen is replaced by fluorine or chlorine; Z¹, Z² and Z³ are independently a single bond or alkylene having 1 to 10 carbons, and in the alkylene, at least one piece of -CH₂- may be replaced by -O-, -S-, -CO-, -COO-, -OCO- or -SiH₂-, and at least one piece of -CH₂-CH₂- may be replaced by -CH=CH- or -C≡C-, and in the groups, at least one hydrogen may be replaced by fluorine or chlorine; a and b are independently 1 or 2; c is 0, 1 or 2, and ring A when c is 0 is cyclohexenylene, decahydronaphthalenediyl, dihydropyrandiyl, tetrahydropyrandiyl, dioxanediyl, naphthalenediyl, pyrimidinediyl or pyridinediyl, and in the rings, at least one hydrogen may be replaced by fluorine, chlorine, alkyl having 1 to 5 carbons, alkoxy having 1 to 5 carbons, or alkyl having 1 to 5 carbons in which at least one hydrogen is replaced by fluorine or chlorine; and
   in formula (2), R⁹ and R¹⁰ are independently alkyl having 1 to 12 carbons, alkoxy having 1 to 12 carbons, alkenyl having 2 to 12 carbons, alkyl having 1 to 12 carbons in which at least one hydrogen is replaced by fluorine or chlorine, or alkenyl having 2 to 12 carbons in which at least one hydrogen is replaced by fluorine or chlorine.
Item 2. The liquid crystal composition according to item 1, containing at least one compound selected from the group of compounds represented by formula (1-1) to formula (1-5) as the additive component: 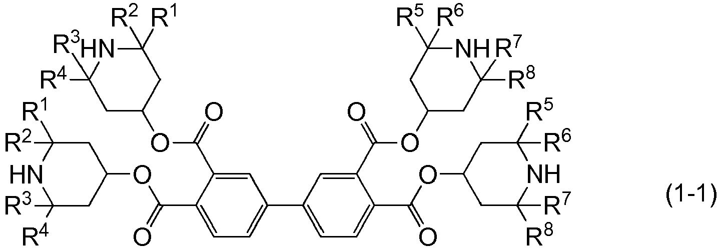 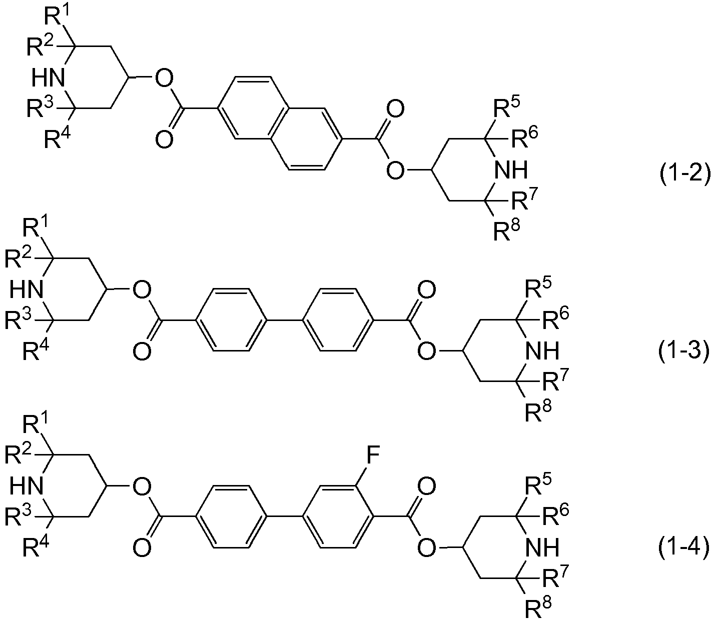 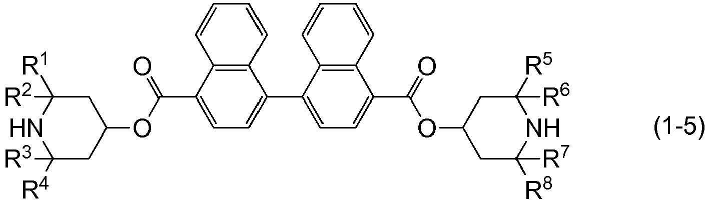 wherein, in formula (1-1) to formula (1-5), R¹, R², R³, R⁴, R⁵, R⁶, R⁷ and R⁸ are independently hydrogen or alkyl having 1 to 4 carbons.
Item 3. The liquid crystal composition according to item 1 or 2, wherein a proportion of the additive component is in the range of 0.005% by weight to 1% by weight, and a proportion of the first component is in the range of 5% by weight to 60% by weight, based on the weight of the liquid crystal composition.
Item 4. The liquid crystal composition according to any one of items 1 to 3, containing at least one compound selected from the group of compounds represented by formula (3) as a second component: 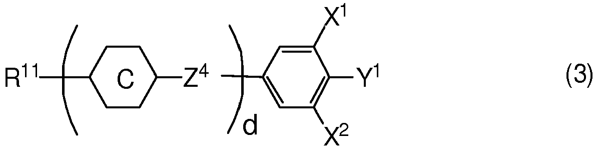 wherein, in formula (3), R¹¹ is alkyl having 1 to 12 carbons, alkoxy having 1 to 12 carbons or alkenyl having 2 to 12 carbons; ring C is 1,4-cyclohexylene, 1,4-phenylene, 2-fluoro-1,4-phenylene, 2,3-difluoro-1,4-phenylene, 2,6-difluoro-1,4-phenylene, pyrimidine-2,5-diyl, 1,3-dioxane-2,5-diyl or tetrahydropyran-2,5-diyl; Z⁴ is a single bond, ethylene, carbonyloxy or difluoromethyleneoxy; X¹ and X² are independently hydrogen or fluorine; Y¹ is fluorine, chlorine, alkyl having 1 to 12 carbons in which at least one hydrogen is replaced by fluorine or chlorine, alkoxy having 1 to 12 carbons in which at least one hydrogen is replaced by fluorine or chlorine, or alkenyloxy having 2 to 12 carbons in which at least one hydrogen is replaced by fluorine or chlorine; and d is 1, 2, 3 or 4.
Item 5. The liquid crystal composition according to any one of items 1 to 4, containing at least one compound selected from the group of compounds represented by formula (3-1) to formula (3-35) as the second component: 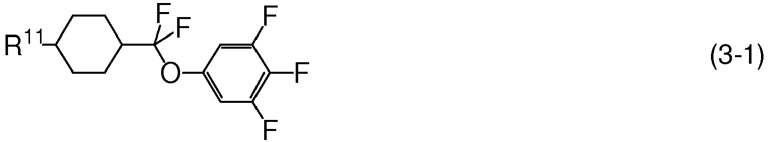 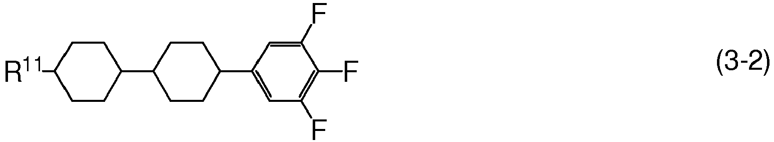 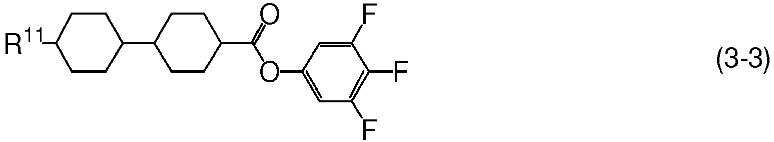 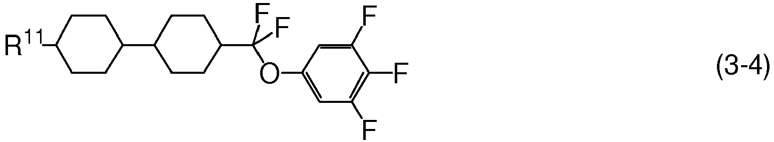 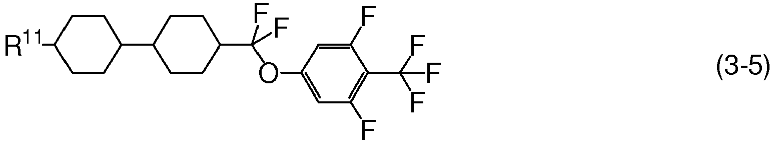 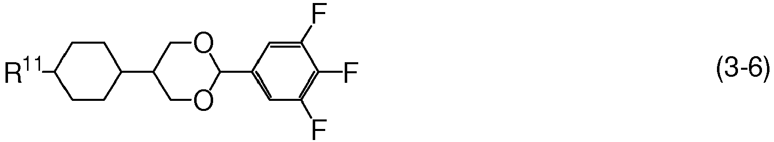 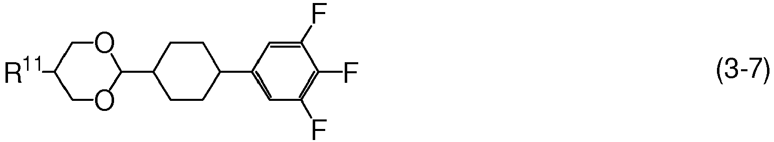 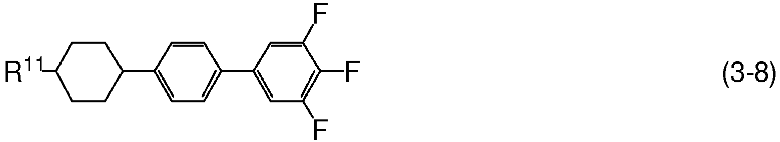 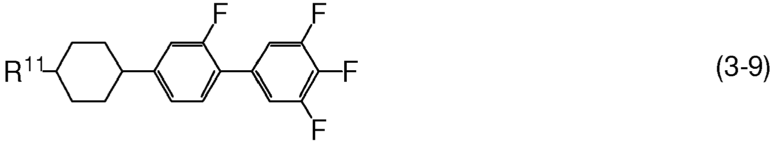 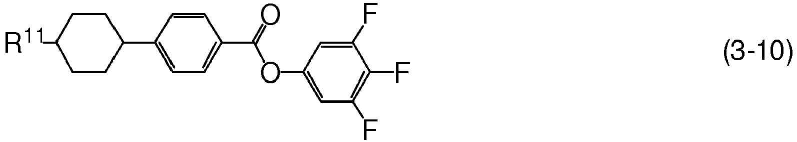 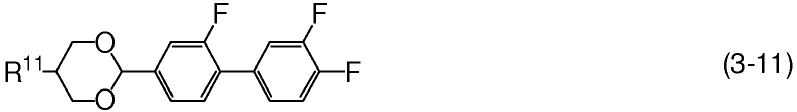 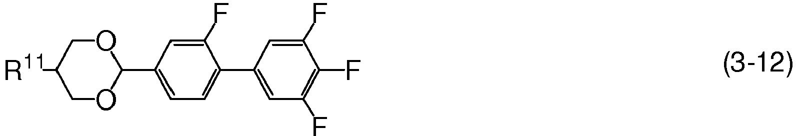 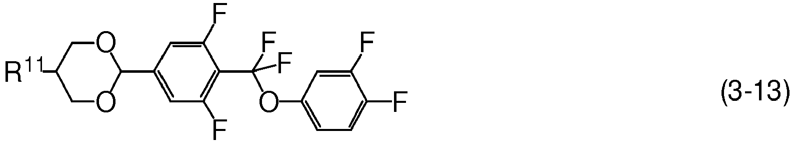 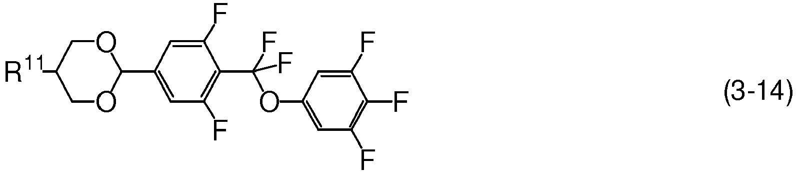 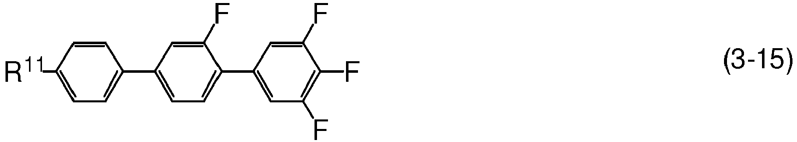 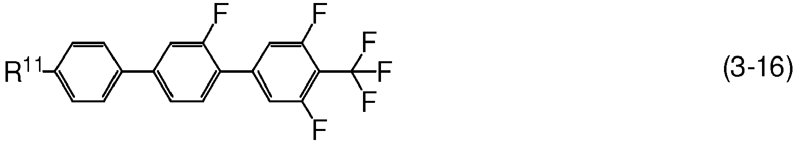 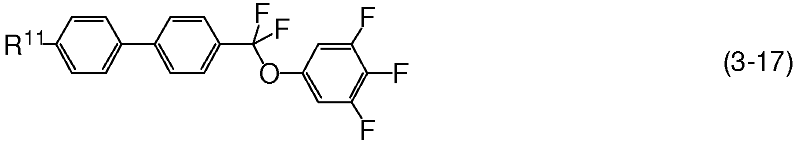 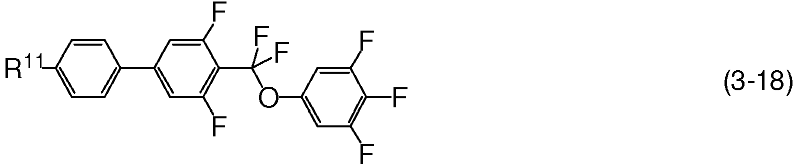 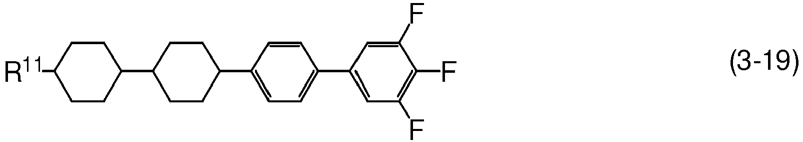 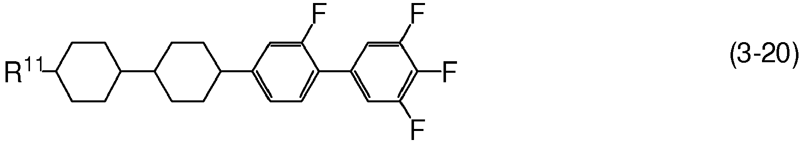 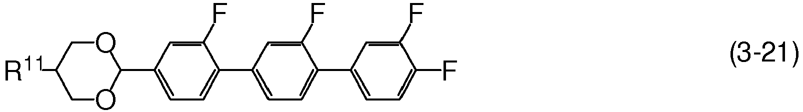 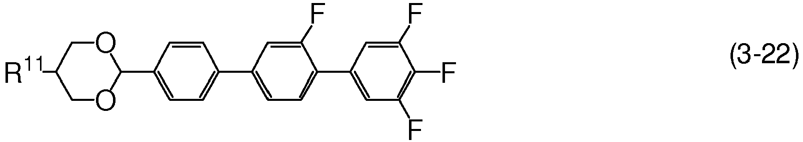 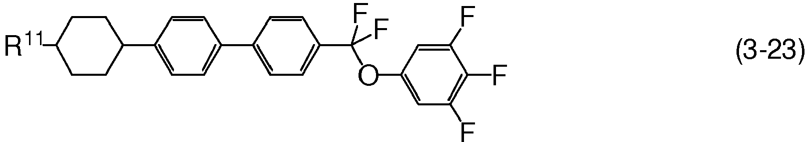 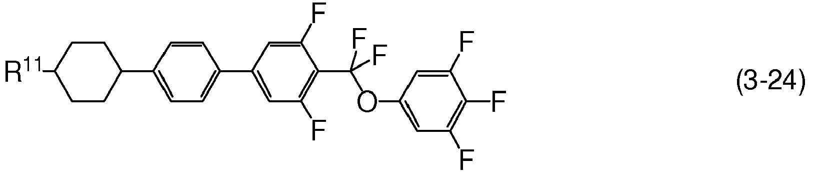 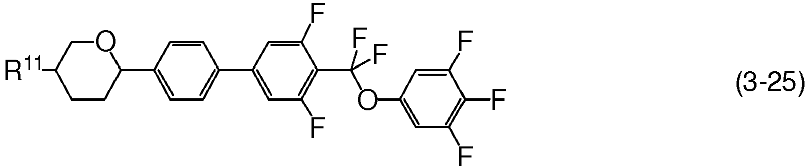 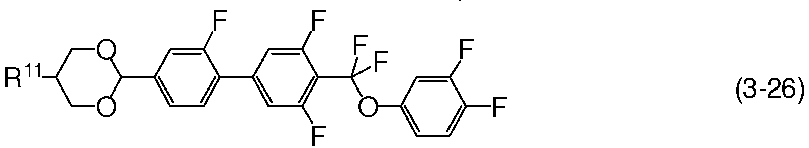 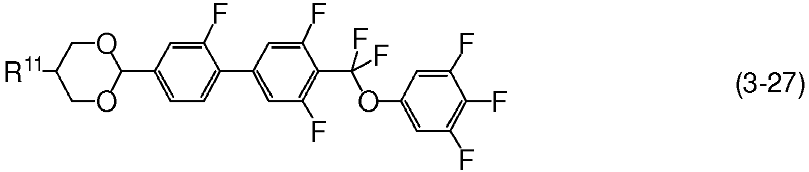 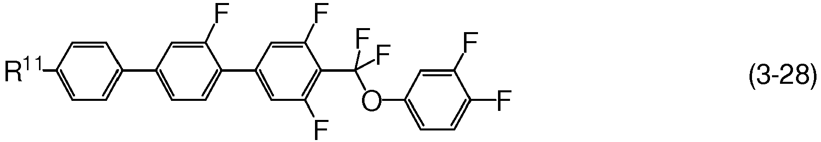 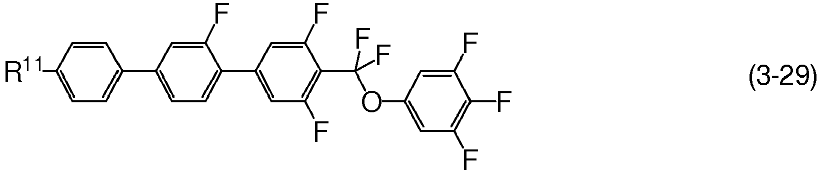 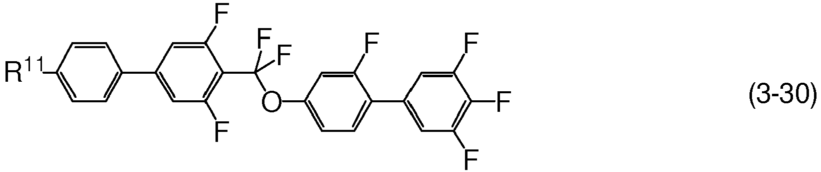 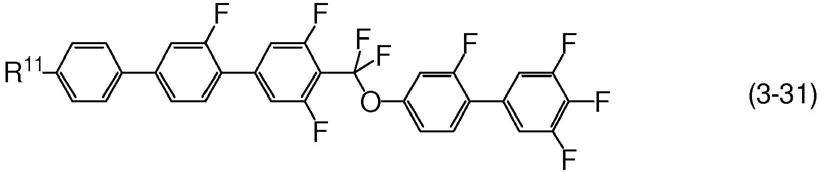 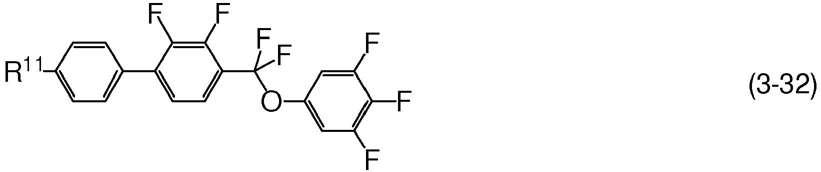 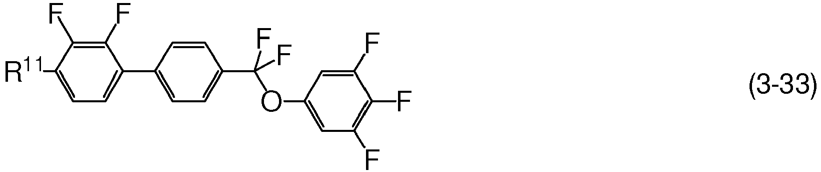 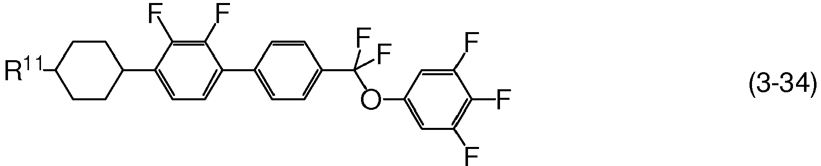 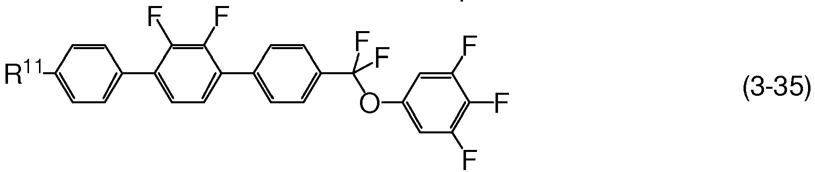 wherein, in formula (3-1) to formula (3-35), R¹¹ is alkyl having 1 to 12 carbons, alkoxy having 1 to 12 carbons or alkenyl having 2 to 12 carbons.
Item 6. The liquid crystal composition according to item 4 or 5, wherein a proportion of the second component is in the range of 10% by weight to 90% by weight based on the weight of the liquid crystal composition.
Item 7. The liquid crystal composition according to any one of items 1 to 6, containing at least one compound selected from the group of compounds represented by formula (4) as a third component: 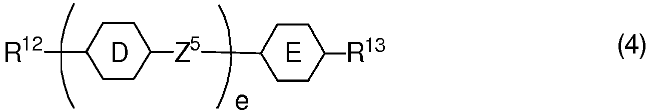 wherein, in formula (4), R¹² and R¹³ are independently alkyl having 1 to 12 carbons, alkoxy having 1 to 12 carbons, alkenyl having 2 to 12 carbons, or alkenyl having 2 to 12 carbons in which at least one hydrogen is replaced by fluorine or chlorine; ring D and ring E are independently 1,4-cyclohexylene, 1,4-phenylene, 2-fluoro-1,4-phenylene or 2,5-difluoro-1,4-phenylene; Z⁵ is a single bond, ethylene or carbonyloxy; and e is 1, 2 or 3, and ring E when e is 1 is 1,4-phenylene.
Item 8. The liquid crystal composition according to any one of items 1 to 7, containing at least one compound selected from the group of compounds represented by formula (4-1) to formula (4-12) as the third component: 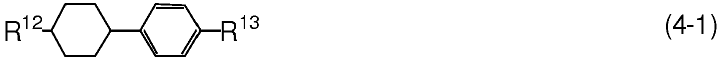 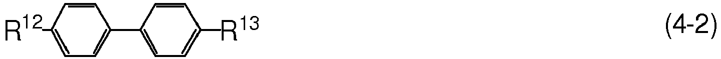 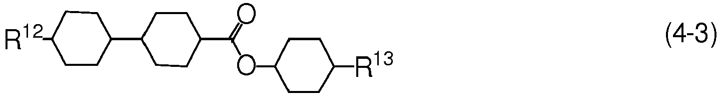 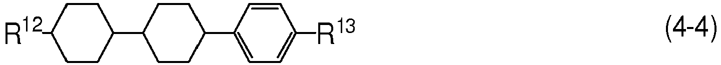 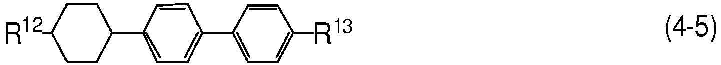 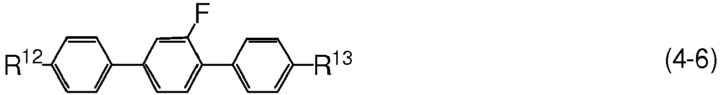 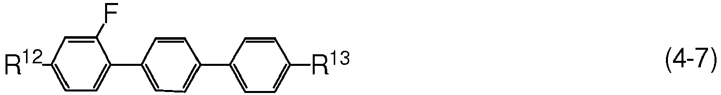 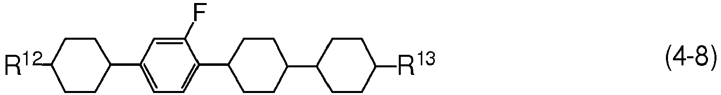 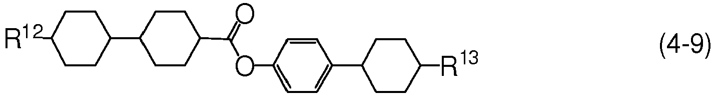 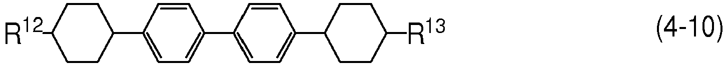 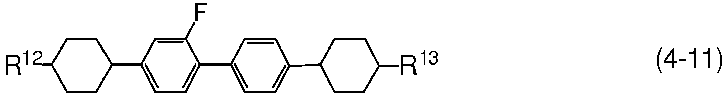 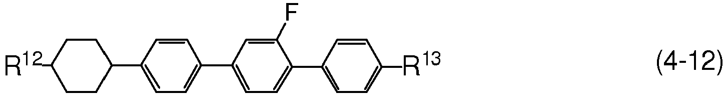 wherein, in formula (4-1) to formula (4-12), R¹² and R¹³ are independently alkyl having 1 to 12 carbons, alkoxy having 1 to 12 carbons, alkenyl having 2 to 12 carbons, or alkenyl having 2 to 12 carbons in which at least one hydrogen is replaced by fluorine or chlorine.
Item 9. The liquid crystal composition according to item 7 or 8, wherein a proportion of the third component is in the range of 5% by weight to 60% by weight based on the weight of the liquid crystal composition.
Item 10. The liquid crystal composition according to any one of items 1 to 9, containing at least one compound selected from the group of compounds represented by formula (5) as a fourth component: 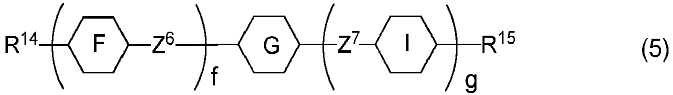 wherein, in formula (5), R¹⁴ and R¹⁵ are independently alkyl having 1 to 12 carbons, alkoxy having 1 to 12 carbons, alkenyl having 2 to 12 carbons or alkenyloxy having 2 to 12 carbons; ring F and ring I are independently 1, 4-cyclohexylene, 1, 4-cyclohexenylene, 1, 4-phenylene, 1, 4-phenylene in which at least one hydrogen is replaced by fluorine or chlorine, or tetrahydropyran-2,5-diyl; ring G is 2,3-difluoro-1,4-phenylene, 2-chloro-3-fluoro-1,4-phenylene, 2, 3-difluoro-5-methyl-1,4-phenylene, 3,4,5-trifluoronaphthalene-2,6-diyl or 7, 8-difluorochroman-2, 6-diyl; Z⁶ and Z⁷ are independently a single bond, ethylene, carbonyloxy or methyleneoxy; f is 1, 2 or 3, and g is 0 or 1; and a sum of f and g is 3 or less.
Item 11. The liquid crystal composition according to any one of items 1 to 10, containing at least one compound selected from the group of compounds represented by formula (5-1) to formula (5-21) as the fourth component: 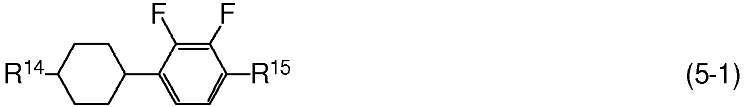 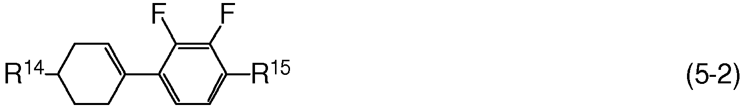 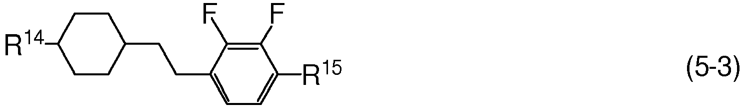 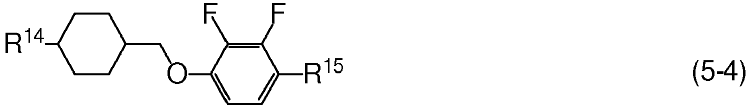 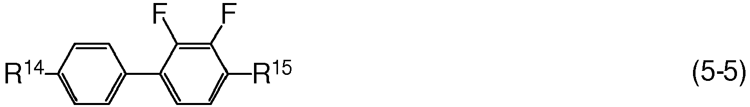 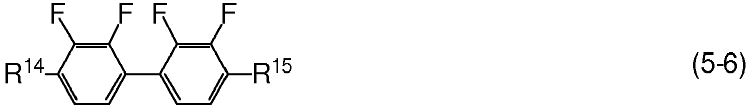 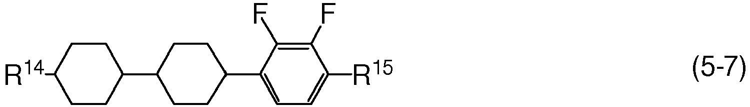 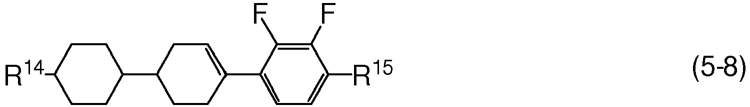 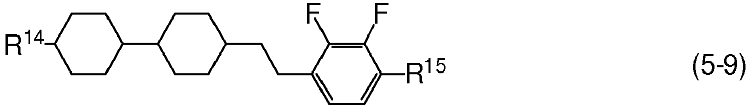 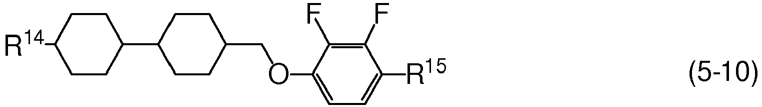 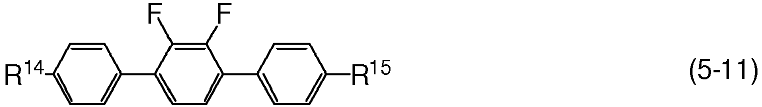 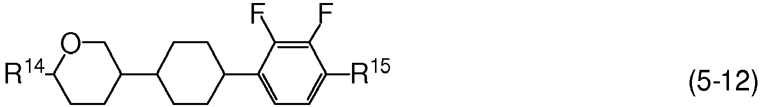 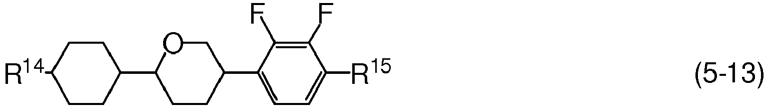 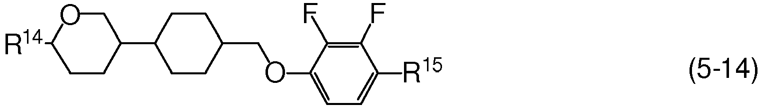 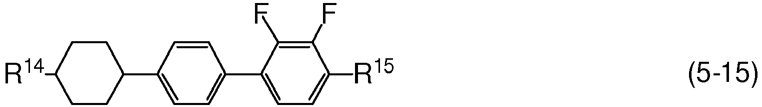 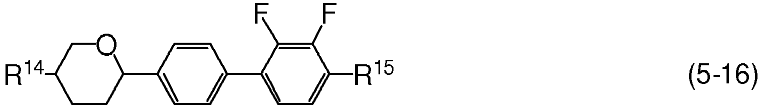 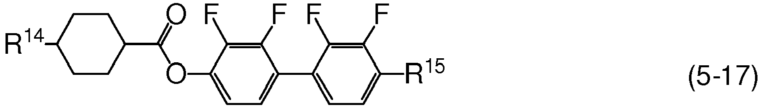 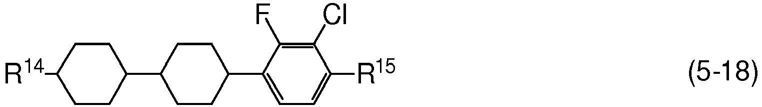 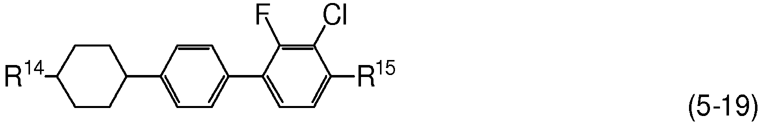 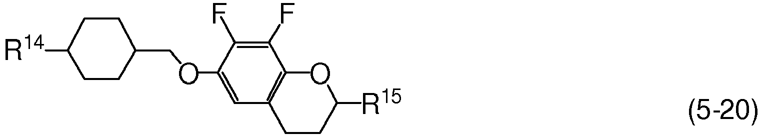 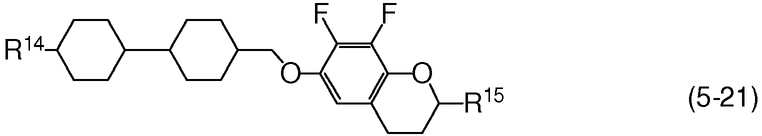 wherein, in formula (5-1) to formula (5-21), R¹⁴ and R¹⁵ are independently alkyl having 1 to 12 carbons, alkoxy having 1 to 12 carbons, alkenyl having 2 to 12 carbons or alkenyloxy having 2 to 12 carbons.
Item 12. The liquid crystal composition according to item 10 or 11, wherein a proportion of the fourth component is in the range of 3% by weight to 25% by weight based on the weight of the liquid crystal composition.
Item 13. The liquid crystal composition according to any one of items 1 to 12, wherein a maximum temperature of a nematic phase is 70°C or higher, an optical anisotropy (measured at 25°C) at a wavelength of 589 nanometers is 0.07 or more and a dielectric anisotropy (measured at 25°C) at a frequency of 1 kHz is 2 or more.
Item 14. A liquid crystal display device, including the liquid crystal composition according to any one of items 1 to 13.
Item 15. The liquid crystal display device according to item 14, wherein an operating mode in the liquid crystal display device includes a TN mode, an ECB mode, an OCB mode, an IPS mode, an FFS mode or an FPA mode, and a driving mode in the liquid crystal display device includes an active matrix mode.
Item 16. Use of the liquid crystal composition according to any one of items 1 to 13 in a liquid crystal display device.

The invention further includes the following items: (a) the composition, further containing at least one of additives such as an optically active compound, an antioxidant, an ultraviolet light absorber, a dye, an antifoaming agent, a polymerizable compound, a polymerization initiator and a polymerization inhibitor; (b) an AM device including the composition; (c) the composition further containing a polymerizable compound, and a polymer sustained alignment (PSA) mode AM device including the composition; (d) the polymer sustained alignment (PSA) mode AM device, wherein the device includes the composition, and the polymerizable compound in the composition is polymerized; (e) a device including the composition and having the PC mode, the TN mode, the STN mode, the ECB mode, the OCB mode, the IPS mode, the VA mode, the FFS mode or the FPA mode; (f) a transmissive device including the composition; (g) use of the composition as the composition having the nematic phase; and (h) use as an optically active composition by adding the optically active compound to the composition.

The composition of the invention will be described in the following order. First, a constitution of the component compounds in the composition will be described. Second, main characteristics of the component compounds and main effects of the compounds on the composition will be described. Third, a combination of the component in the composition, a preferred proportion of the component compounds and the basis thereof will be described. Fourth, a preferred embodiment of the component compounds will be described. Fifth, a preferred component compound will be described. Sixth, an additive that may be added to the composition will be described. Seventh, methods for synthesizing the component compounds will be described. Last, an application of the composition will be described.

First, the constitution of the component compounds in the composition will be described. The composition of the invention is classified into composition A and composition B. Composition A may further contain any other liquid crystal compound, an additive or the like in addition to a liquid crystal compound selected from compound (2), compound (3), compound (4) and compound (5). "Any other liquid crystal compound" means a liquid crystal compound different from compound (2), compound (3), compound (4) and compound (5). Such a compound is mixed with the composition for the purpose of further adjusting the characteristics. The additive includes compound (1), the optically active compound, the antioxidant, the ultraviolet light absorber, the dye, the antifoaming agent, the polymerizable compound, the polymerization initiator and the polymerization inhibitor.

Composition B consists essentially of liquid crystal compounds selected from compound (2), compound (3), compound (4) and compound (5). An expression "essentially" means that the composition may contain the additive, but contains no any other liquid crystal compound. An example of composition B is a composition containing compound (1), compound (2), compound (3) and compound (4) as an essential component. Composition B has a smaller number of components than composition A has. Composition B is preferred to composition A in view of cost reduction. Composition A is preferred to composition B in view of possibility of further adjusting the characteristics by mixing any other liquid crystal compound.

Second, the main characteristics of the component compounds and the main effects of the compounds on the characteristics of the composition will be described. The main characteristics of the component compounds are summarized in Table 2 on the basis of advantageous effects of the invention. In Table 2, a symbol L stands for "large" or "high," a symbol M stands for "medium" and a symbol S stands for "small" or "low." The symbols L, M and S represent a classification based on a qualitative comparison among the component compounds, and 0 (zero) means that "a value is zero" or "a value is nearly zero."

**Table 2. Characteristics of Compounds**

| Compounds | Compound (2) | Compound (3) | Compound (4) | Compound (5) |
|---|---|---|---|---|
| Maximum temperature | S to M | S to L | S to L | S to M |
| Viscosity | S | M to L | S to M | L |
| Optical anisotropy | S | M to L | S to L | M to L |
| Dielectric anisotropy | 0 | S to L¹⁾ | 0 | L²⁾ |
| Specific resistance | L | L | L | L |

| | | | | |
|---|---|---|---|---|
| 1) A compound having positive dielectric anisotropy. 2) A compound having negative dielectric anisotropy. | | | | |

Upon mixing the component compounds with the composition, the main effects of the component compounds on the characteristics of the composition are as described below. Compound (1) contributes to high stability to heat or ultraviolet light. Compound (1) contributes also to a large negative DC luminance relaxation time constant. Compound (1) has no influence on characteristics such as maximum temperature, optical anisotropy and dielectric anisotropy. Compound (2) decreases the viscosity. Compound (3) increases the dielectric anisotropy. Compound (4) increases the maximum temperature or decreases the viscosity. Compound (5) increases a dielectric constant in a minor axis direction.

Third, the combination of the component in the composition, the preferred proportion of the component compounds and the basis thereof will be described. A preferred combination of components in the composition includes a combination of the additive component and the first component, a combination of the additive component, the first component and the second component, a combination of the additive component, the first component and the third component, a combination of the additive component, the first component and the fourth component, a combination of the additive component, the first component, the second component and the third component, a combination of the additive component, the first component, the second component and the fourth component, a combination of the additive component, the first component, the third component and the fourth component, or a combination of the additive component, the first component, the second component, the third component and the fourth component. A further preferred combination includes a combination of the additive component, the first component, the second component and the third component, or a combination of the additive component, the first component, the second component, the third component and the fourth component.

A preferred proportion of the additive component is about 0.005% by weight or more for contributing to high stability to heat or ultraviolet light and contributing to the large negative DC luminance relaxation time constant, and about 1% by weight or less for decreasing the minimum temperature. A further preferred proportion is in the range of about 0.01% by weight to about 0.5% by weight. A particularly preferred proportion is in the range of about 0.03% by weight to about 0.3% by weight based thereon.

A preferred proportion of the first component is about 5% by weight or more for decreasing the viscosity, and about 60% by weight or less for decreasing the minimum temperature or increasing the dielectric anisotropy. A further preferred proportion is in the range of about 10% by weight to about 55% by weight. A particularly preferred proportion is in the range of about 20% by weight to about 50% by weight based thereon.

A preferred proportion of the second component is about 10% by weight or more for increasing the dielectric anisotropy, and about 90% by weight or less for decreasing the minimum temperature or decreasing the viscosity. A further preferred proportion is in the range of about 20% by weight to about 80% by weight. A particularly preferred proportion is in the range of about 25% by weight to about 70% by weight based thereon.

A preferred proportion of the third component is about 5% by weight or more for increasing the maximum temperature or decreasing the viscosity, and about 60% by weight or less for increasing the dielectric anisotropy. A further preferred proportion is in the range of about 5% by weight to about 50% by weight. A particularly preferred proportion is in the range of about 10% by weight to about 45% by weight based thereon.

A preferred proportion of the fourth component is about 3% by weight or more for increasing the dielectric anisotropy, and about 25% by weight or less for decreasing the minimum temperature. A further preferred proportion is in the range of about 5% by weight to about 20% by weight. A particularly preferred proportion is in the range of about 5% by weight to about 15% by weight based thereon.

Fourth, the preferred embodiment of the component compounds will be described. In formula (1), R¹, R², R³, R⁴, R⁵, R⁶, R⁷ and R⁸ are independently hydrogen or alkyl having 1 to 4 carbons. Preferred R¹, R², R³, R⁴, R⁵, R⁶, R⁷ or R⁸ is hydrogen or methyl. Further preferred R¹, R², R³, R⁴, R⁵, R⁶, R⁷ or R⁸ is methyl.

Ring A and ring B are independently cyclohexylene, cyclohexenylene, decahydronaphthalenediyl, dihydropyrandiyl, tetrahydropyrandiyl, dioxanediyl, phenylene, naphthalenediyl, pyrimidinediyl or pyridinediyl, and in the rings, at least one hydrogen may be replaced by fluorine, chlorine, alkyl having 1 to 5 carbons, alkoxy having 1 to 5 carbons, or alkyl having 1 to 5 carbons in which at least one hydrogen is replaced by fluorine or chlorine. Preferred ring A or ring B is 1,4-cyclohexylene, 1,4-cyclohexenylene, decahydronaphthalene-2,6-diyl, 3,4-dihydro-2H-pyran-3,6-diyl, 3,4-dihydro-2H-pyran-2,5-diyl, 3,6-dihydro-2H-pyran-2,5-diyl, tetrahydropyran-2,5-diyl, 1,3-dioxane-2,5-diyl, 1,2-phenylene, 1,3-phenylene, 1,4-phenylene, naphthalene-1,3-diyl, naphthalene-1,4-diyl, naphthalene-1,5-diyl, naphthalene-1,6-diyl, naphthalene-1,7-diyl, naphthalene-1,8-diyl, naphthalene-2,3-diyl, naphthalene-2,6-diyl, naphthalene-2,7-diyl, pyrimidine-2,5-diyl or pyridine-2,5-diyl, and in the rings, at least one hydrogen may be replaced by fluorine, chlorine, alkyl having 1 to 5 carbons, alkoxy having 1 to 5 carbons, or alkyl having 1 to 5 carbons in which at least one hydrogen is replaced by fluorine or chlorine. Further preferred ring A or ring B is 1,4-phenylene, 2-fluoro-1,4-phenylene, naphthalene-1,4-diyl or naphthalene-2,6-diyl.

Then, a and b are independently 1 or 2. Preferred a or b is 1. Then, c is 0, 1 or 2, and ring A when c is 0 is cyclohexenylene, decahydronaphthalenediyl, dihydropyrandiyl, tetrahydropyrandiyl, dioxanediyl, naphthalenediyl, pyrimidinediyl or pyridinediyl, and in the rings, at least one hydrogen may be replaced by fluorine, chlorine, alkyl having 1 to 5 carbons, alkoxy having 1 to 5 carbons, or alkyl having 1 to 5 carbons in which at least one hydrogen is replaced by fluorine or chlorine. Preferred c is 0 or 1.

Z¹, Z² and Z³ are independently a single bond or alkylene having 1 to 10 carbons, and in the alkylene, at least one piece of -CH₂- may be replaced by -O-, -S-, -CO-, -COO-, -OCO- or -SiH₂-, and at least one piece of -CH₂-CH₂- may be replaced by -CH=CH- or -C≡C-, and in the groups, at least one hydrogen may be replaced by fluorine or chlorine. Preferred Z¹, Z² or Z³ is a single bond or alkylene having 1 to 10 carbons, and in the alkylene, at least one piece of -CH₂- may be replaced by -O-, and at least one hydrogen may be replaced by fluorine. Further preferred example is a single bond.

In formula (2), formula (3), formula (4) and formula (5), R⁹ and R¹⁰ are independently alkyl having 1 to 12 carbons, alkoxy having 1 to 12 carbons, alkenyl having 2 to 12 carbons, alkyl having 1 to 12 carbons in which at least one hydrogen is replaced by fluorine or chlorine, or alkenyl having 2 to 12 carbons in which at least one hydrogen is replaced by fluorine or chlorine. Preferred R⁹ or R¹⁰ is alkenyl having 2 to 12 carbons for decreasing the viscosity, and alkyl having 1 to 12 carbons for increasing the stability. R¹¹ is alkyl having 1 to 12 carbons, alkoxy having 1 to 12 carbons or alkenyl having 2 to 12 carbons. Preferred R¹¹ is alkyl having 1 to 12 carbons for increasing the stability to ultraviolet light or heat. R¹² and R¹³ are independently alkyl having 1 to 12 carbons, alkoxy having 1 to 12 carbons, alkenyl having 2 to 12 carbons, or alkenyl having 2 to 12 carbons in which at least one hydrogen is replaced by fluorine or chlorine. Preferred R¹² or R¹³ is alkenyl having 2 to 12 carbons for decreasing the viscosity, and alkyl having 1 to 12 carbons for increasing the stability. R¹⁴ and R¹⁵ are independently alkyl having 1 to 12 carbons, alkoxy having 1 to 12 carbons, alkenyl having 2 to 12 carbons or alkenyloxy having 2 to 12 carbons. Preferred R¹⁴ or R¹⁵ is alkyl having 1 to 12 carbons for increasing the stability, and alkoxy having 1 to 12 carbons for increasing the dielectric anisotropy.

Preferred alkyl is methyl, ethyl, propyl, butyl, pentyl, hexyl, heptyl or octyl. Further preferred alkyl is ethyl, propyl, butyl, pentyl or heptyl for decreasing the viscosity.

Preferred examples of alkyl in which at least one hydrogen is replaced by fluorine or chlorine are fluoromethyl, 2-fluoroethyl, 3-fluoropropyl, 4-fluorobutyl, 5-fluoropentyl, 6-fluorohexyl, 7-fluoroheptyl or 8-fluorooctyl. Further preferred examples are 2-fluoroethyl, 3-fluoropropyl, 4-fluorobutyl or 5-fluoropentyl for increasing the dielectric anisotropy.

Preferred alkoxy is methoxy, ethoxy, propoxy, butoxy, pentyloxy, hexyloxy or heptyloxy. Further preferred alkoxy is methoxy or ethoxy for decreasing the viscosity.

Preferred alkenyl is vinyl, 1-propenyl, 2-propenyl, 1-butenyl, 2-butenyl, 3-butenyl, 1-pentenyl, 2-pentenyl, 3-pentenyl, 4-pentenyl, 1-hexenyl, 2-hexenyl, 3-hexenyl, 4-hexenyl or 5-hexenyl. Further preferred alkenyl is vinyl, 1-propenyl, 3-butenyl or 3-pentenyl for decreasing the viscosity. A preferred configuration of -CH=CH- in the alkenyl depends on a position of a double bond. Trans is preferred in alkenyl such as 1-propenyl, 1-butenyl, 1-pentenyl, 1-hexenyl, 3-pentenyl and 3-hexenyl for decreasing the viscosity, for instance. Cis is preferred in alkenyl such as 2-butenyl, 2-pentenyl and 2-hexenyl. In the alkenyl, straight-chain alkenyl is preferred to branched-chain alkenyl.

Preferred examples of alkenyl in which at least one hydrogen is replaced by fluorine or chlorine are 2,2-difluorovinyl, 3,3-difluoro-2-propenyl, 4,4-difluoro-3-butenyl, 5,5-difluoro-4-pentenyl or 6,6-difluoro-5-hexenyl. Further preferred examples are 2,2-difluorovinyl or 4,4-difluoro-3-butenyl for decreasing the viscosity.

Preferred alkenyloxy is vinyloxy, allyloxy, 3-butenyloxy, 3-pentenyloxy or 4-pentenyloxy. Further preferred alkenyloxy is allyloxy or 3-butenyloxy for decreasing the viscosity.

Then, d is 1, 2, 3 or 4. Preferred d is 2 for decreasing the minimum temperature, and 3 for increasing the dielectric anisotropy. Then, e is 1, 2 or 3. Preferred e is 1 for decreasing the viscosity, and 2 or 3 for increasing the maximum temperature. Then, f is 1, 2 or 3, g is 0 or 1, and a sum of f and g is 3 or less. Preferred f is 1 for decreasing the viscosity, and 2 or 3 for increasing the maximum temperature. Preferred g is 0 for decreasing the viscosity, and 1 for decreasing the minimum temperature.

Z⁴ is a single bond, ethylene, carbonyloxy or difluoromethyleneoxy. Preferred Z⁴ is a single bond for decreasing the viscosity, and difluoromethyleneoxy for increasing the dielectric anisotropy. Z⁵ is a single bond, ethylene or carbonyloxy. Preferred Z⁵ is a single bond for decreasing the viscosity. Z⁶ and Z⁷ are independently a single bond, ethylene, carbonyloxy or methyleneoxy. Preferred Z⁶ or Z⁷ is a single bond for decreasing the viscosity, and methyleneoxy for increasing the dielectric anisotropy.

Ring C is 1,4-cyclohexylene, 1,4-phenylene, 2-fluoro-1,4-phenylene, 2,3-difluoro-1,4-phenylene, 2,6-difluoro-1,4-phenylene, pyrimidine-2,5-diyl, 1,3-dioxane-2,5-diyl or tetrahydropyran-2,5-diyl. Preferred ring C is 1,4-phenylene or 2-fluoro-1,4-phenylene for increasing the optical anisotropy. Ring D and ring E are independently 1,4-cyclohexylene, 1,4-phenylene, 2-fluoro-1,4-phenylene or 2,5-difluoro-1,4-phenylene, and ring E when e is 1 is 1,4-phenylene. Preferred ring D or ring E is 1,4-cyclohexylene for decreasing the viscosity, or 1,4-phenylene for increasing the optical anisotropy.

Ring F and ring I are independently 1,4-cyclohexylene, 1,4-cyclohexenylene, 1,4-phenylene, 1,4-phenylene in which at least one hydrogen is replaced by fluorine or chlorine, or tetrahydropyran-2,5-diyl. Preferred examples of "1,4-phenylene in which at least one hydrogen is replaced by fluorine or chlorine" are 2-fluoro-1,4-phenylene, 2,3-difluoro-1,4-phenylene or 2-chloro-3-fluoro-1,4-phenylene. Preferred ring F or ring I is 1,4-cyclohexylene for decreasing the viscosity, tetrahydropyran-2,5-diyl for increasing the dielectric anisotropy, and 1,4-phenylene for increasing the optical anisotropy. Ring G is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7,8-difluorochroman-2,6-diyl. Preferred ring G is 2,3-difluoro-1,4-phenylene for increasing the dielectric anisotropy. With regard to a configuration of 1, 4-cyclohexylene, trans is preferred to cis for increasing the maximum temperature. Tetrahydropyran-2,5-diyl includes: 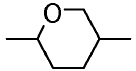 or 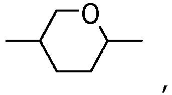 and preferably

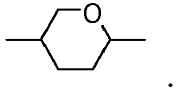

X¹ and X² are independently hydrogen or fluorine. Preferred X¹ or X² is fluorine for increasing the dielectric anisotropy.

Y¹ is fluorine, chlorine, alkyl having 1 to 12 carbons in which at least one hydrogen is replaced by fluorine or chlorine, alkoxy having 1 to 12 carbons in which at least one hydrogen is replaced by fluorine or chlorine, or alkenyloxy having 2 to 12 carbons in which at least one hydrogen is replaced by fluorine or chlorine. Preferred example of alkyl in which at least one hydrogen is replaced by fluorine or chlorine is trifluoromethyl. Preferred example of alkoxy in which at least one hydrogen is replaced by fluorine or chlorine is trifluoromethoxy. Preferred example of alkenyloxy in which at least one hydrogen is replaced by fluorine or chlorine is trifluorovinyloxy. Preferred Y¹ is fluorine or trifluoromethyl. Further preferred Y¹ is fluorine for decreasing the minimum temperature.

Fifth, the preferred component compound will be described. Preferred compound (1) includes compound (1-1) to compound (1-5) described in item 2. In the compounds, at least one of the additive components preferably includes compound (1-2), compound (1-3) or compound (1-4). At least two of the additive components preferably includes a combination of compound (1-2) and compound (1-3) or a combination of compound (1-3) and compound (1-4).

Preferred compound (3) includes compound (3-1) to compound (3-35) described in item 5. In the compounds, at least one of the second components preferably includes compound (3-4), compound (3-12), compound (3-14), compound (3-15), compound (3-17), compound (3-18), compound (3-23), compound (3-27), compound (3-29) or compound (3-30) . At least two of the second components preferably includes a combination of compound (3-12) and compound (3-15), a combination of compound (3-14) and compound (3-27), a combination of compound (3-18) and compound (3-24), a combination of compound (3-18) and compound (3-29), a combination of compound (3-24) and compound (3-29), or a combination of compound (3-29) and compound (3-30).

Preferred compound (4) includes compound (4-1) to compound (4-12) described in item 8. In the compounds, at least one of the third components preferably includes compound (4-1), compound (4-2), compound (4-4), compound (4-5), compound (4-6) or compound (4-12) . At least two of the third components preferably includes a combination of compound (4-1) and compound (4-4), a combination of compound (4-2) and compound (4-4), or a combination of compound (4-2) and compound (4-5) .

Preferred compound (5) includes compound (5-1) to compound (5-21) described in item 11. In the compounds, at least one of the fourth components preferably includes compound (5-1), compound (5-4), compound (5-5), compound (5-7), compound (5-10) or compound (5-15). At least two of the fourth components preferably includes a combination of compound (5-1) and compound (5-7), a combination of compound (5-1) and compound (5-15), a combination of compound (5-4) and compound (5-7), a combination of compound (5-4) and compound (5-15), a combination of compound (5-5) and compound (5-7), or a combination of compound (5-5) and compound (5-10).

Sixth, the additive that may be added to the composition will be described. Such an additive includes the optically active compound, the antioxidant, the ultraviolet light absorber, the dye, the antifoaming agent, the polymerizable compound, the polymerization initiator and the polymerization inhibitor. The optically active compound is added to the composition for the purpose of inducing a helical structure in liquid crystal molecules to give a twist angle. Examples of such a compound include compound (6-1) to compound (6-5) . A preferred proportion of the optically active compound is about 5% by weight or less. A further preferred proportion is in the range of about 0.01% by weight to about 2% by weight based thereon.

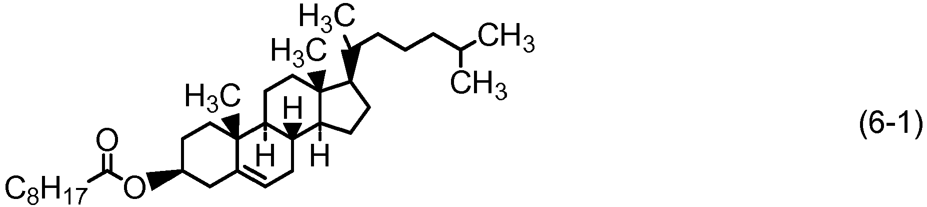

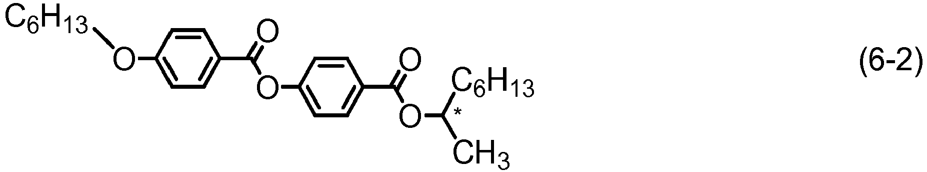

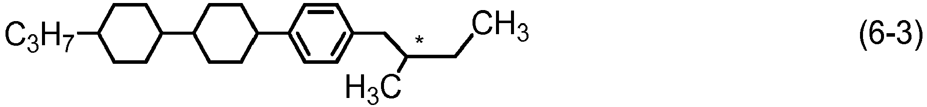

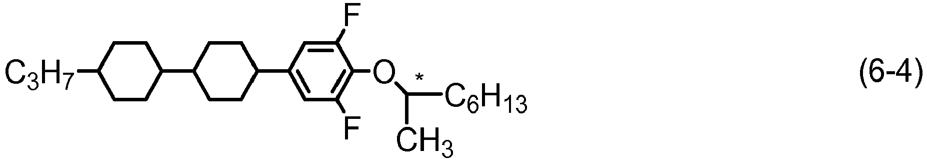

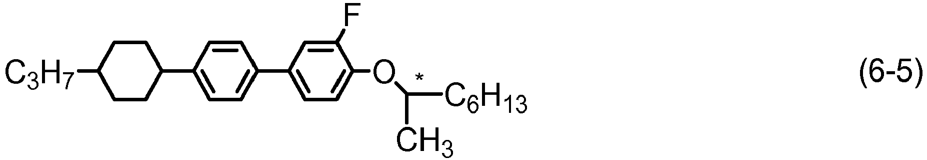

The antioxidant is added to the composition for preventing a decrease in the specific resistance caused by heating in air, or for maintaining a large voltage holding ratio at room temperature and also at a temperature close to the maximum temperature even after the device has been used for a long period of time. Specific examples of a preferred antioxidant include compound (7) in which t is an integer from 1 to 9.

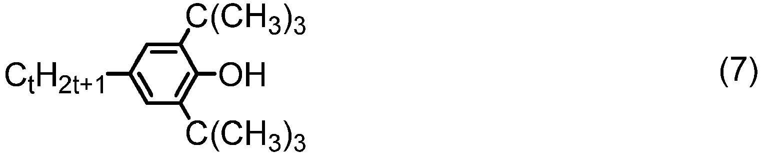

In compound (7), preferred t is 1, 3, 5, 7 or 9. Further preferred t is 7. Compound (7) in which t is 7 is effective in maintaining a large voltage holding ratio at room temperature and also at a temperature close to the maximum temperature even after the device has been used for a long period of time because such compound (7) has small volatility. A preferred proportion of the antioxidant is about 50 ppm or more for achieving an effect thereof, and about 600 ppm or less for avoiding a decrease in the maximum temperature or an increase in the minimum temperature. A further preferred proportion is in the range of about 100 ppm to about 300 ppm.

Specific examples of a preferred ultraviolet light absorber include a benzophenone derivative, a benzoate derivative and a triazole derivative. A light stabilizer such as an amine having steric hindrance is also preferred. A preferred proportion of the absorber or the stabilizer is about 50 ppm or more for achieving an effect thereof, and about 10,000 ppm or less for avoiding a decrease in the maximum temperature or an increase in the minimum temperature. A further preferred proportion is in the range of about 100 ppm to about 10,000 ppm.

A dichroic dye such as an azo dye or an anthraquinone dye is added to the composition to be adapted for a device having a guest host (GH) mode. A preferred proportion of the dye is in the range of about 0.01% by weight to about 10% by weight. The antifoaming agent such as dimethyl silicone oil or methyl phenyl silicone oil is added to the composition for preventing foam formation. A preferred proportion of the antifoaming agent is about 1 ppm or more for achieving an effect thereof, and about 1,000 ppm or less for preventing poor display. A further preferred proportion is in the range of about 1 ppm to about 500 ppm.

The polymerizable compound is added to the composition to be adapted for a polymer sustained alignment (PSA) mode device. Specific examples of a preferred polymerizable compound include a compound having a polymerizable group such as acrylate, methacrylate, a vinyl compound, a vinyloxy compound, propenyl ether, an epoxy compound (oxirane, oxetane) and vinyl ketone. Further preferred examples include an acrylate derivative or a methacrylate derivative. A preferred proportion of the polymerizable compound is about 0.05% by weight or more for achieving an effect thereof, and about 10% by weight or less for preventing a poor display. A further preferred proportion is in the range of about 0.1% by weight to about 2% by weight. The polymerizable compound is polymerized by irradiation with ultraviolet light. The polymerizable compound may be polymerized in the presence of an initiator such as a photopolymerization initiator. Suitable conditions for polymerization, suitable types of the initiator and suitable amounts thereof are known to those skilled in the art and are described in literature. For example, Irgacure 651 (registered trademark; BASF), Irgacure 184 (registered trademark; BASF) or Darocur 1173 (registered trademark; BASF), each being a photoinitiator, is suitable for radical polymerization. A preferred proportion of the photopolymerization initiator is in the range of about 0.1% by weight to about 5% by weight based on the weight of the polymerizable compound. A further preferred proportion is in the range of about 1% by weight to about 3% by weight based thereon.

Upon storing the polymerizable compound, the polymerization inhibitor may be added thereto for preventing polymerization. The polymerizable compound is ordinarily added to the composition without removing the polymerization inhibitor. Specific examples of the polymerization inhibitor include hydroquinone, a hydroquinone derivative such as methylhydroquinone, 4-t-butylcatechol, 4-methoxyphenol and phenothiazine.

Seventh, the methods for synthesizing the component compounds will be described. The compounds can be prepared according to known methods. Examples of the synthetic methods are described. Compound (2) is prepared according to a method described in JP S59-176221 A. Compound (3-2) and compound (3-8) are prepared according to a method described in JP H2-233626 A. Compound (4-1) is prepared according to a method described in JP S56-68636 A. Compound (5-1) and compound (5-7) are prepared according to a method described in JP H2-503441 A. The antioxidant is commercially available. A compound in which t in formula (7) is 1 is available from Sigma-Aldrich Corporation. Compound (7) in which t is 7 or the like is prepared according to a method described in US 3660505 B. Compound (1-3) is prepared according to a method described below.

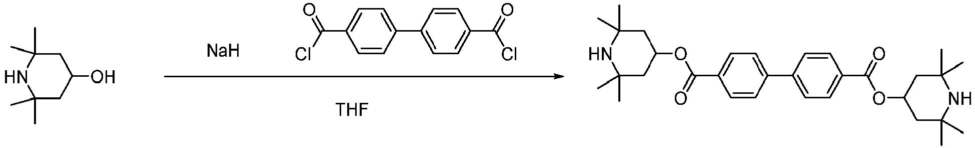

### First step:

A mixture of 2,2,6,6-tetramethyl-4-piperidinol (15.00 g, 95.39 mmol) and NaH (60%, 3.80 g, 95.01 mmol) was heated and refluxed in THF for 2 hours. The resulting reaction mixture was cooled down to -10°C or lower, and while keeping the temperature, a THF solution of 1,1'-biphenyl-4,4'-dicarbonyl dichloride (12.00 g, 43.00 mmol) was slowly added dropwise thereto. The resulting reaction mixture was stirred at room temperature for 1 hour, and then quenched with water, and the resulting mixture was subjected to extraction with MTBE (methyl t-butyl ether) . Silica gel was added to a combined organic layer, the resulting mixture was filtrated, and a solvent was distilled off to obtain bis(2,2,6,6-tetramethylpiperidine-4-yl) 1,1'-biphenyl-4,4'-dicarboxylate (6 g, yield: 26.7%).
¹H-NMR (CDCl₃; δ ppm) : 8.12 (dd, 4H), 7.69 (dd, 4H), 5.48 (tt, 2H), 2.08 (dd, 4H), 1.57 (br, 2H), 1.36 - 1.31 (m, 16H), 1.21 (s, 12H).

Any compounds whose synthetic methods are not described above can be prepared according to methods described in books such as Organic Syntheses (John Wiley & Sons, Inc.), Organic Reactions (John Wiley & Sons, Inc.), Comprehensive Organic Synthesis (Pergamon Press) and New Experimental Chemistry Course (Shin Jikken Kagaku Koza in Japanese) (Maruzen Co., Ltd.). The composition is prepared according to a publicly known method using the thus obtained compounds. For example, the component compounds are mixed and dissolved in each other by heating.

Last, the application of the composition will be described. The composition of the invention mainly has a minimum temperature of about -10°C or lower, a maximum temperature of about 70°C or higher, and optical anisotropy in the range of about 0.07 to about 0.20. The composition having optical anisotropy in the range of about 0.08 to about 0.25 and further the composition having optical anisotropy in the range of about 0.10 to about 0.30 may be prepared by controlling the proportion of the component compounds or by mixing any other liquid crystal compound. A device including the composition has the large voltage holding ratio. The composition is suitable for use in the AM device. The composition is particularly suitable for use in a transmissive AM device. The composition can be used as the composition having the nematic phase, and as the optically active composition by adding the optically active compound.

The composition can be used in the AM device. The composition can also be used in a PM device. The composition can also be used in the AM device and the PM device each having a mode such as the PC mode, the TN mode, the STN mode, the ECB mode, the OCB mode, the IPS mode, the FFS mode, the VA mode and the FPA mode. Use in the AM device having the TN mode, the OCB mode, the IPS mode or the FFS mode is particularly preferred. In the AM device having the IPS mode or the FFS mode, alignment of liquid crystal molecules when no voltage is applied may be parallel or perpendicular to a glass substrate. The devices may be of a reflective type, a transmissive type or a transflective type. Use in the transmissive device is preferred. The composition can also be used in an amorphous silicon-TFT device or a polycrystal silicon-TFT device. The composition can also be used in a nematic curvilinear aligned phase (NCAP) device prepared by microencapsulating the composition, or a polymer dispersed (PD) device in which a three-dimensional network-polymer is formed in the composition.

### Examples

The invention will be described in greater detail by way of Examples. However, the invention is not limited by the Examples. The invention includes a mixture of a composition in Example 1 and a composition in Example 2. The invention also includes a mixture in which at least two compositions in Examples were mixed. The thus prepared compound was identified by methods such as an NMR analysis. Characteristics of the compound, the composition and a device were measured by methods described below.

NMR analysis: For measurement, DRX-500 made by Bruker BioSpin Corporation was used. In ¹H-NMR measurement, a sample was dissolved in a deuterated solvent such as CDCl₃, and measurement was carried out under conditions of room temperature, 500 MHz and 16 times of accumulation. Tetramethylsilane was used as an internal standard. In ¹⁹F-NMR measurement, CFCl₃ was used as an internal standard, and measurement was carried out under conditions of 24 times of accumulation. In explaining nuclear magnetic resonance spectra obtained, s, d, t, q, quin, sex and m stand for a singlet, a doublet, a triplet, a quartet, a quintet, a sextet and a multiplet, and br being broad, respectively.

Gas chromatographic analysis: For measurement, GC-14B Gas Chromatograph made by Shimadzu Corporation was used. A carrier gas was helium (2 mL per minute) . A sample vaporizing chamber and a detector (FID) were set to 280°C and 300°C, respectively. A capillary column DB-1 (length 30 m, bore 0.32 mm, film thickness 0.25 µm; dimethylpolysiloxane as a stationary liquid phase; non-polar) made by Agilent Technologies, Inc. was used for separation of component compounds. After the column was kept at 200°C for 2 minutes, the column was heated to 280°C at a rate of 5°C per minute. A sample was prepared in an acetone solution (0.1% by weight), and then 1 microliter of the solution was injected into the sample vaporizing chamber. A recorder was C-R5A Chromatopac made by Shimadzu Corporation or the equivalent thereof. The resulting gas chromatogram showed a retention time of a peak and a peak area corresponding to each of the component compounds.

As a solvent for diluting the sample, chloroform, hexane or the like may also be used. The following capillary columns may also be used for separating component compounds: HP-1 (length 30 m, bore 0.32 mm, film thickness 0.25 µm) made by Agilent Technologies, Inc., Rtx-1 (length 30 m, bore 0.32 mm, film thickness 0.25 µm) made by Restek Corporation and BP-1 (length 30 m, bore 0.32 mm, film thickness 0.25 µm) made by SGE International Pty. Ltd. A capillary column CBP1-M50-025 (length 50 m, bore 0.25 mm, film thickness 0.25 µm) made by Shimadzu Corporation may also be used for the purpose of preventing an overlap of peaks of the compounds.

A proportion of liquid crystal compounds contained in the composition may be calculated by the method as described below. A mixture of the liquid crystal compounds is detected by gas chromatograph (FID) . An area ratio of each peak in the gas chromatogram corresponds to the ratio (weight ratio) of the liquid crystal compounds. When the capillary columns described above were used, a correction coefficient of each of the liquid crystal compounds may be regarded as 1 (one). Accordingly, the proportion (% by weight) of the liquid crystal compounds can be calculated from the area ratio of each peak.

Sample for measurement: When characteristics of the composition or the device were measured, the composition was used as a sample as was. Upon measuring characteristics of the compound, a sample for measurement was prepared by mixing the compound (15% by weight) with a base liquid crystal (85% by weight). Values of characteristics of the compound were calculated, according to an extrapolation method, using values obtained by measurement. (Extrapolated value) = { (measured value of a sample) - 0.85 × (measured value of a base liquid crystal)} / 0.15. When a smectic phase (or crystals) precipitates at the ratio thereof at 25°C, a ratio of the compound to the base liquid crystal was changed step by step in the order of (10% by weight : 90% by weight), (5% by weight : 95% by weight) and (1% by weight : 99% by weight) . Values of maximum temperature, optical anisotropy, viscosity and dielectric anisotropy with regard to the compound were determined according to the extrapolation method.

A base liquid crystal described below was used. A proportion of the component compound was expressed in terms of weight percent (% by weight) .

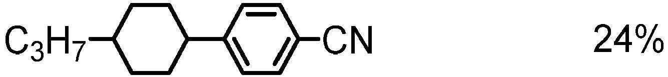

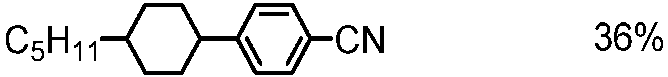

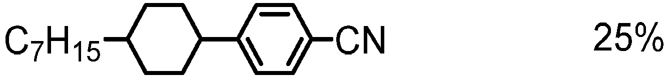

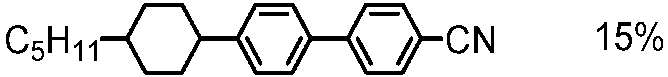

Measuring method: Characteristics were measured according to the methods described below. Most of the measuring methods are applied as described in the Standard of Japan Electronics and Information Technology Industries Association (hereinafter abbreviated as JEITA) (JEITA ED-2521B) discussed and established by JEITA, or modified thereon. No thin film transistor (TFT) was attached to a TN device used for measurement.
(1) Maximum temperature of nematic phase (NI; °C): A sample was placed on a hot plate in a melting point apparatus equipped with a polarizing microscope, and heated at a rate of 1°C per minute. Temperature when part of the sample began to change from a nematic phase to an isotropic liquid was measured.
(2) Minimum temperature of nematic phase (T_{C}; °C): Samples each having a nematic phase were put in glass vials and kept in freezers at temperatures of 0°C, -10°C, -20°C, -30°C and -40°C for 10 days, and then liquid crystal phases were observed. For example, when the sample was maintained in the nematic phase at -20°C and changed to crystals or a smectic phase at -30°C, T_{C} was expressed as T_{C} < -20°C.
(3) Viscosity (bulk viscosity; η; measured at 20°C; mPa·s) : For measurement, a cone-plate (E type) rotational viscometer made by Tokyo Keiki Inc. was used.
(4) Viscosity (rotational viscosity; γ1; measured at 25°C; mPa·s) : Measurement was carried out according to a method described in M. Imai et al., Molecular Crystals and Liquid Crystals, Vol. 259, p. 37 (1995). A sample was put in a TN device in which a twist angle was 0 degrees and a distance (cell gap) between two glass substrates was 5 micrometers. Voltage was applied stepwise to the device in the range of 16 V to 19.5 V at an increment of 0.5 V. After a period of 0.2 second with no voltage application, voltage was repeatedly applied under conditions of only one rectangular wave (rectangular pulse; 0.2 second) and no voltage application (2 seconds) . A peak current and a peak time of transient current generated by the applied voltage were measured. A value of rotational viscosity was obtained from the measured values and calculation equation (8) described on page 40 of the paper presented by M. Imai et al. A value of dielectric anisotropy required for the calculation was determined using the device by which the rotational viscosity was measured and by a method described below.
(5) Optical anisotropy (refractive index anisotropy; Δn; measured at 25°C): Measurement was carried out by an Abbe refractometer with a polarizing plate mounted on an ocular, using light at a wavelength of 589 nanometers. A surface of a main prism was rubbed in one direction, and then a sample was added dropwise onto the main prism. A refractive index (n∥) was measured when a direction of polarized light was parallel to a direction of rubbing. A refractive index (n⊥) was measured when the direction of polarized light was perpendicular to the direction of rubbing. A value of optical anisotropy was calculated from an equation: Δn = n∥ - n⊥.
(6) Dielectric anisotropy (Δε; measured at 25°C) : A sample was put in a TN device in which a distance (cell gap) between two glass substrates was 9 micrometers and a twist angle was 80 degrees. Sine waves (10 V, 1 kHz) were applied to the device, and after 2 seconds, a dielectric constant (ε∥) of liquid crystal molecules in a major axis direction was measured. Sine waves (0.5 V, 1 kHz) were applied to the device, and after 2 seconds, a dielectric constant (ε⊥) of liquid crystal molecules in a minor axis direction was measured. A value of dielectric anisotropy was calculated from an equation: Δε = s∥ - ε⊥.
(7) Threshold voltage (Vth; measured at 25°C; V) : For measurement, an LCD-5100 luminance meter made by Otsuka Electronics Co., Ltd. was used. A light source was a halogen lamp. A sample was put in a normally white mode TN device in which a distance (cell gap) between two glass substrates was 0.45/Δn (µm) and a twist angle was 80 degrees. A voltage (32 Hz, rectangular waves) to be applied to the device was stepwise increased from 0 V to 10 V at an increment of 0.02 V. On the occasion, the device was irradiated with light from a direction perpendicular to the device, and an amount of light transmitted through the device was measured. A voltage-transmittance curve was prepared, in which the maximum amount of light corresponds to 100% transmittance and the minimum amount of light corresponds to 0% transmittance. A threshold voltage is expressed in terms of voltage at 90% transmittance.
(8) Voltage holding ratio (VHR-1; measured at 25°C; %) : A TN device used for measurement had a polyimide alignment film, and a distance (cell gap) between two glass substrates was 5 micrometers. A sample was put in the device, and then the device was sealed with an ultraviolet-curable adhesive. A pulse voltage (60 microseconds at 5 V) was applied to the TN device and the device was charged. A decaying voltage was measured for 16.7 milliseconds with a high-speed voltmeter, and area A between a voltage curve and a horizontal axis in a unit cycle was determined. Area B is an area without decay. A voltage holding ratio is expressed in terms of a percentage of area A to area B.
(9) Voltage holding ratio (VHR-2; measured at 80°C; %) : A voltage holding ratio was measured according to procedures identical with the procedures described above except that measurement was carried out at 80°C in place of 25°C. The thus obtained value was expressed in terms of VHR-2.
(10) Voltage holding ratio (VHR-3; measured at 25°C; %) : Stability to ultraviolet light was evaluated by measuring a voltage holding ratio after a device was irradiated with ultraviolet light. A TN device used for measurement had a polyimide alignment film, and a cell gap was 5 micrometers. A sample was injected into the device, and the device was irradiated with light for 20 minutes. A light source was an ultra high-pressure mercury lamp USH-500D (made by Ushio, Inc.), and a distance between the device and the light source was 20 centimeters. In measurement of VHR-3, a decaying voltage was measured for 16.7 milliseconds. A composition having large VHR-3 has large stability to ultraviolet light. A value of VHR-3 is preferably 90% or more, and further preferably 95% or more.
(11) Voltage holding ratio (VHR-4; measured at 25°C; %) : Stability to heat was evaluated by measuring a voltage holding ratio after a TN device into which a sample was injected was heated in a constant-temperature bath at 80°C for 500 hours. In measurement of VHR-4, a decaying voltage was measured for 16.7 milliseconds. A composition having large VHR-4 has large stability to heat.
(12) Response time (τ; measured at 25°C; ms) : For measurement, an LCD-5100 luminance meter made by Otsuka Electronics Co., Ltd. was used. A light source was a halogen lamp. A low-pass filter was set to 5 kHz. A sample was put in a normally white mode TN device in which a distance (cell gap) between two glass substrates was 5.0 micrometers and a twist angle was 80 degrees. A voltage (rectangular waves; 60 Hz, 5 V, 0.5 second) was applied to the device. On the occasion, the device was irradiated with light from a direction perpendicular to the device, and an amount of light transmitted through the device was measured. The maximum amount of light corresponds to 100% transmittance, and the minimum amount of light corresponds to 0% transmittance. A rise time (τr; millisecond) was expressed in terms of time required for a change from 90% transmittance to 10% transmittance. A fall time (τf; millisecond) was expressed in terms of time required for a change from 10% transmittance to 90% transmittance. A response time was expressed by a sum of the rise time and the fall time thus determined.
(13) Elastic constant (K; measured at 25°C; pN) : For measurement, HP4284A LCR Meter made by Yokogawa-Hewlett-Packard Co. was used. A sample was put in a horizontal alignment device in which a distance (cell gap) between two glass substrates was 20 micrometers. An electric charge of 0 V to 20 V was applied to the device, and electrostatic capacity and applied voltage were measured. The measured values of electrostatic capacity (C) and applied voltage (V) were fitted to equation (2.98) and equation (2.101) on page 75 of "Liquid Crystal Device Handbook" (Ekisho Debaisu Handobukku in Japanese; Nikkan Kogyo Shimbun, Ltd.), and values of K11 and K33 were obtained from equation (2.99) . Next, K22 was calculated using the previously determined values of K11 and K33 in equation (3.18) on page 171. Elastic constant K was expressed in terms of a mean value of the thus determined K11, K22 and K33.
(14) Specific resistance (ρ; measured at 25°C; Ω cm) : Into a vessel equipped with electrodes, 1.0 milliliter of sample was injected. A direct current voltage (10 V) was applied to the vessel, and a direct current after 10 seconds was measured. Specific resistance was calculated from the following equation: (specific resistance) = {(voltage) × (electric capacity of a vessel)} / {(direct current) × (dielectric constant of vacuum)}.
(15) Helical pitch (P; measured at room temperature; µm) : A helical pitch was measured according to a wedge method. Refer to page 196 in "Handbook of Liquid Crystals (Ekisho Binran in Japanese)" (issued in 2000, Maruzen Co., Ltd.) . A sample was injected into a wedge cell and left to stand at room temperature for 2 hours, and then a gap (d2 - d1) between disclination lines was observed by a polarizing microscope (trade name: MM40/60 Series, Nikon Corporation). A helical pitch (P) was calculated according to the following equation in which an angle of the wedge cell was expressed as θ: P = 2 × (d2 - d1) × tanθ.
(16) Dielectric constant (ε⊥; measured at 25°C) in minor axis direction: A sample was put in a TN device in which a distance (cell gap) between two glass substrates was 9 micrometers and a twist angle was 80 degrees. Sine waves (0.5 V, 1 kHz) were applied to the device, and after 2 seconds, a dielectric constant (ε⊥) of liquid crystal molecules in a minor axis direction was measured.
(17) DC luminance relaxation time constant (τ_{DC}; measured at 50°C; %/s) : A method for measuring the time constant was described in Patent literature No. 1, but a simple method was used herein. For measurement, 3298F Multimedia Display Tester made by Yokogawa Electric Corporation was used. A light source was a halogen lamp. First, a sample was put in an FFS device in which a distance (cell gap) between two glass substrates was 3.2 micrometers. A DC voltage of 0 V to 10 V was applied to the device, and voltage (V_{21.1}) when an amount of light transmitted through the device was 21.1% (127 gradations) of the maximum amount of light was read. Next, voltage in which offset voltage (DC 1V) was added to the above voltage was applied to the device, and measurement was carried out for 300 seconds until an amount of light transmitted through the device became constant. A graph was prepared by plotting the results, and a DC luminance relaxation time constant was determined from an inclination of a straight line from 0 seconds to 60 seconds. As a value thereof is negatively larger, an electric charge accumulated in picture element is further quickly discharged, and therefore image persistence is decreased.

The compounds in Examples were represented using symbols according to definitions in Table 3 described below. In Table 3, the configuration of 1,4-cyclohexylene is trans. A parenthesized number next to a symbolized compound corresponds to the number of the compound. A symbol (-) means any other liquid crystal compound. A proportion (percentage) of the liquid crystal compound is expressed in terms of weight percent (% by weight) based on the weight of the liquid crystal composition. Values of the characteristics of the composition were summarized in a last part.

**Table 3 Method for Description of Compounds using Symbols**

| R-(A₁ )-Z₁-·····-Zₙ-(Aₙ)-R' | | | |
|---|---|---|---|
| 1) Left-terminal Group R- | Symbol | 4) Ring -Aₙ- | Symbol |
| CₙH₂ₙ₊₁- | n- | 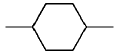 | H |
| CₙH₂ₙ₊₁O- | nO- | | |
| CₘH₂ₘ₊₁OCₙH₂ₙ- | mOn- | | |
| CH₂=CH- | V- | 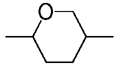 | Dh |
| CₙH₂ₙ₊₁-CH=CH- | nV- | | |
| CH₂=CH-CₙH₂ₙ- | Vn- | 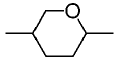 | dh |
| CₘH₂ₘ₊₁-CH=CH-CₙH₂ₙ- | mVn- | | |
| CF₂=CH- | VFF- | | |
| CF₂=CH-CₙH₂ₙ- | VFFn- | 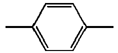 | B |
| F-CₙH₂ₙ- | Fn- | | |
| 2) Right-terminal Group -R' | Symbol | 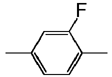 | B(F) |
| -CₙH₂ₙ₊₁ | -n | | |
| -OCₙH₂ₙ₊₁ | -On | 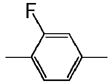 | B(2F) |
| -CH=CH₂ | -V | | |
| -CH=CH-CₙH₂ₙ₊₁ | -Vn | | |
| -CₙH₂ₙ-CH=CH₂ | -nV | 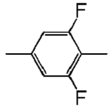 | B(F,F) |
| -CₙH₂ₙ-CH=CH-CₘH₂ₘ₊₁ | -nVm | | |
| -CH=CF₂ | -VFF | | |
| -COOCH₃ | -EMe | | |
| -F | -F | 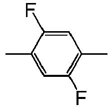 | B(2F,5F) |
| -Cl | -CL | | |
| -OCF₃ | -OCF3 | | |
| -CF₃ | -CF3 | 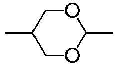 | G |
| -CN | -C | | |
| 3) Bonding Group -Zₙ- | Symbol | | |
| -C₂H₄- | 2 | 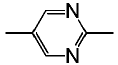 | Py |
| -COO- | E | | |
| -CH=CH- | V | 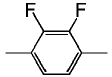 | B(2F,3F) |
| -C≡C- | T | | |
| -CF₂O- | X | | |
| -CH₂O- | 1O | | |
| 5) Examples of Description | | | |
| Example 1 V-HHB-1 | | Example 2 3-BB(F)B(F ,F)-F | |
| 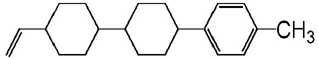 | | 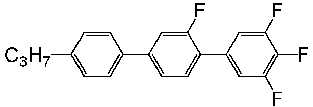 | |
| Example 3 4-BB(F)B(F,F)X B(F,F)-F | | Example 4 5-GB(F,F)X B(F,F)-F | |
| 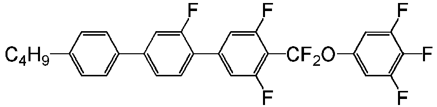 | | 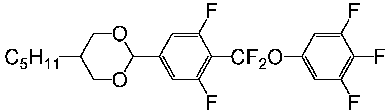 | |

### Example 1

| | | |
|---|---|---|
| 3-HH-V | (2) | 30% |
| 4-HH-V1 | (2) | 5% |
| 3-HHXB(F,F)-F | (3-4) | 10% |
| 3-HHXB(F,F)-CF3 | (3-5) | 3% |
| 2-HHBB(F,F)-F | (3-19) | 4% |
| 3-HHBB(F,F)-F | (3-19) | 5% |
| 4-HHBB(F,F)-F | (3-19) | 4% |
| 5-HHBB(F,F)-F | (3-19) | 4% |
| 4-GB(F)B(F,F)XB(F,F)-F | (3-27) | 7% |
| 3-BB(F)B(F,F)XB(F)-F | (3-28) | 4% |
| 3-BB(F)B(F,F)XB(F,F)-F | (3-29) | 3% |
| 4-BB(F)B(F,F)XB(F,F)-F | (3-29) | 8% |
| 5-BB(F)B(F,F)XB(F,F)-F | (3-29) | 6% |
| 7-HB-1 | (4-1) | 3% |
| 3-HHB-O1 | (4-4) | 4% |

NI = 107.1°C; T_{C} < -20°C; Δn = 0.113; Δε = 11.2; Vth = 1.45 V; η = 16.8 mPa·s; γ1 = 102.9 mPa·s. Compound (1-1) was added to the composition in a proportion of 0.1% by weight, and a DC luminance relaxation time constant was measured. τ_{DC} = -0.062 %/s.

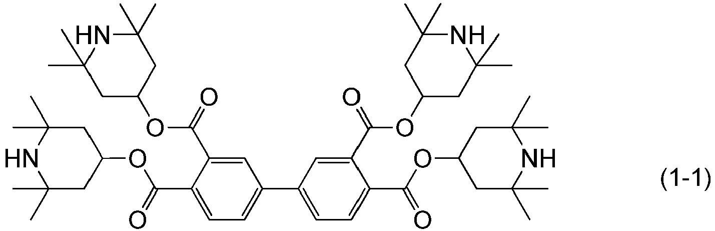

### Comparative Example 1

A DC luminance relaxation time constant of a composition before adding compound (1-1) in Example 1 was measured. τ_{DC} = -0.024 %/s.

### Example 2

| | | |
|---|---|---|
| 3-HH-V | (2) | 29% |
| 3-HH-VFF | (2) | 4% |
| 4-GHB(F,F)-F | (3-7) | 5% |
| 3-GB(F)B(F)-F | (3-11) | 5% |
| 3-GB(F,F)XB(F)-F | (3-13) | 4% |
| 2-HHBB(F,F)-F | (3-19) | 4% |
| 3-HHBB(F,F)-F | (3-19) | 6% |
| 4-HHBB(F,F)-F | (3-19) | 5% |
| 4-GB(F)B(F,F)XB(F,F)-F | (3-27) | 7% |
| 4-BB(F)B(F,F)XB(F,F)-F | (3-29) | 9% |
| 5-BB(F)B(F,F)XB(F,F)-F | (3-29) | 7% |
| 3-HHB-CL | (3) | 3% |
| 3-HB-O2 | (4-1) | 3% |
| 3-HHB-3 | (4-4) | 3% |
| 5-HBB-2 | (4-5) | 3% |
| 3-HBBH-1O1 | (-) | 3% |

NI = 104.1°C; Tc < -20°C; Δn = 0.114; Δε = 10.9; Vth = 1.55 V; η = 16.9 mPa·s; γ1 = 112.1 mPa·s; VHR-1 = 99.2%; VHR-2 = 98.2%; VHR-3 = 98.1%. Compound (1-2) was added to the composition in a proportion of 0.1% by weight, and a DC luminance relaxation time constant was measured. τ_{DC} = -0.074 %/s.

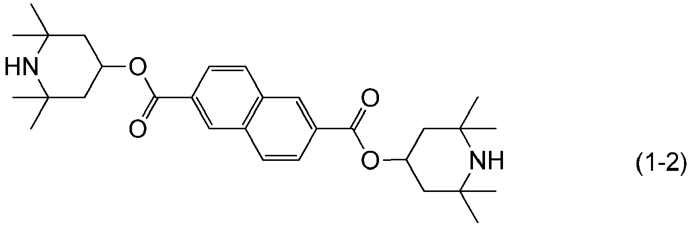

### Example 3

| | | |
|---|---|---|
| 3-HH-V | (2) | 20% |
| 3-HHXB(F,F)-F | (3-4) | 11% |
| 3-HGB(F,F)-F | (3-6) | 3% |
| 4-GHB(F, F) -F | (3-7) | 10% |
| 3-BB(F,F)XB(F,F)-F | (3-18) | 9% |
| 2-HHBB(F,F)-F | (3-19) | 4% |
| 3-HHBB(F,F)-F | (3-19) | 5% |
| 4-BB(F)B(F,F)XB(F,F)-F | (3-29) | 9% |
| 5-BB(F)B(F,F)XB(F,F)-F | (3-29) | 3% |
| 3-HB(2F,3F)BXB(F,F)-F | (3-34) | 10% |
| 1-BB-5 | (4-2) | 5% |
| 3-HHB-1 | (4-4) | 8% |
| 3-HBB-2 | (4-5) | 3% |

NI = 94.9°C; Tc < -20°C; Δn = 0.113; Δε = 12.1; Vth = 1.44 V; η = 18.1 mPa·s; γ1 = 113.4 mPa·s. Compound (1-2) was added to the composition in a proportion of 0.08% by weight, and a DC luminance relaxation time constant was measured. τ_{DC} = -0.066 %/s.

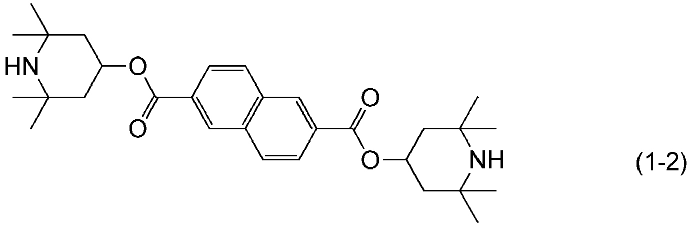

### Example 4

| | | |
|---|---|---|
| 3-HH-V | (2) | 24% |
| 3-HH-V1 | (2) | 7% |
| 3-HHB(F,F)-F | (3-2) | 3% |
| 3-HHXB(F,F)-F | (3-4) | 13% |
| 3-HB(F)B(F,F)-F | (3-9) | 5% |
| 3-BB(F)B(F,F)-F | (3-15) | 13% |
| 3-HHBB(F,F)-F | (3-19) | 3% |
| 4-GBB(F)B(F,F)-F | (3-22) | 3% |
| 3-HBBXB(F,F)-F | (3-23) | 8% |
| 3-HBB(F, F)XB (F, F) -F | (3-24) | 6% |
| 3-BB(2F,3F)BXB(F,F)-F | (3-35) | 3% |
| V2-BB-1 | (4-2) | 3% |
| 3-HHEH-3 | (4-3) | 3% |
| 1-BB(F)B-2V | (4-6) | 3% |
| 5-HBB(F)B-2 | (4-12) | 3% |

NI = 93.7°C; Tc < -20°C; Δn = 0.121; Δε = 7.5; Vth = 1.59 V; η = 18.5 mPa·s; γ1 = 97.6 mPa·s. Compound (1-1) was added to the composition in a proportion of 0.07% by weight, and a DC luminance relaxation time constant was measured. τ_{DC} = -0.060 %/s.

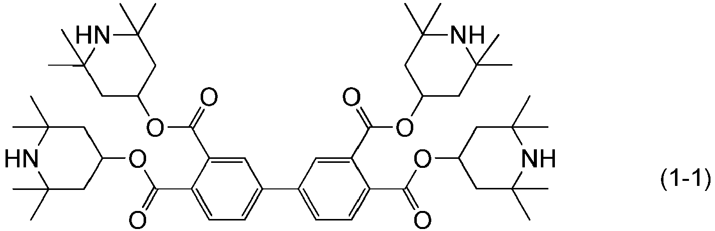

### Example 5

| | | |
|---|---|---|
| 3-HH-V | (2) | 7% |
| 3-HH-V1 | (2) | 10% |
| 5-HH-V | (2) | 7% |
| 5-HXB(F,F)-F | (3-1) | 5% |
| 3-HHB(F,F)-F | (3-2) | 10% |
| 3-HHEB(F,F)-F | (3-3) | 9% |
| 3-HHXB(F,F)-F | (3-4) | 13% |
| 2-HBEB(F,F)-F | (3-10) | 3% |
| 3-HBEB(F,F)-F | (3-10) | 3% |
| 3-BBXB(F,F)-F | (3-17) | 3% |
| 3-BB(F,F)XB(F,F)-F | (3-18) | 7% |
| 3-dhBB(F,F)XB(F,F)-F | (3-25) | 4% |
| 3-BB(F)B(F,F)XB(F)B(F,F)-F | (3-31) | 3% |
| 3-HB-CL | (3) | 6% |
| 3-HHEBH-3 | (4-9) | 4% |
| 3-BB(2F,3F)-O2 | (5-5) | 3% |
| 3-dhBB(2F,3F)-O2 | (5-16) | 3% |

NI = 77.8°C; Tc < -20°C; Δn = 0.090; Δε = 9.1; Vth = 1.19 V; η = 17.8 mPa·s; γ1 = 86.2 mPa·s. Compound (1-3) was added to the composition in a proportion of 0.1% by weight, and a DC luminance relaxation time constant was measured. τ_{DC} = -0.070 %/s.

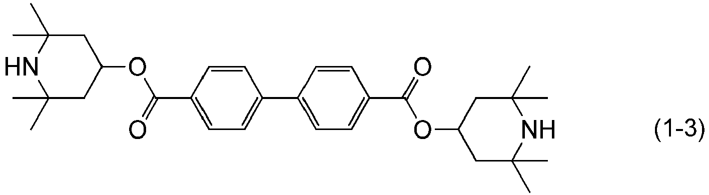

### Example 6

| | | |
|---|---|---|
| 3-HH-V | (2) | 25% |
| 3-HH-O1 | (2) | 3% |
| 3-GB(F,F)XB(F,F)-F | (3-14) | 4% |
| 3-BB(F)B(F,F)-CF3 | (3-16) | 3% |
| 3-BB(F,F)XB(F,F)-F | (3-18) | 16% |
| 3-HHB(F)B(F,F)-F | (3-20) | 4% |
| 3-HBBXB(F,F)-F | (3-23) | 10% |
| 4-GB(F)B(F,F)XB(F,F)-F | (3-27) | 4% |
| 5-GB(F)B(F,F)XB(F,F)-F | (3-27) | 4% |
| 4-BB(F)B(F,F)XB(F,F)-F | (3-29) | 4% |
| 3-B(2F,3F)BXB(F,F)-F | (3-33) | 3% |
| 1-BB-3 | (4-2) | 3% |
| V-HHB-1 | (4-4) | 5% |
| 2-BB(F)B-3 | (4-6) | 3% |
| 5-B(F)BB-2 | (4-7) | 3% |
| V-HHB(2F,3F)-O2 | (5-7) | 3% |
| 3-HBB(2F,3F)-O2 | (5-15) | 3% |

NI = 71.2°C; Tc < -20°C; Δn = 0.120; Δε = 11.9; Vth = 1.24 V; η = 18.2 mPa·s; γ1 = 89.8 mPa·s. Compound (1-3) was added to the composition in a proportion of 0.11% by weight, and a DC luminance relaxation time constant was measured. τ_{DC} = -0.072 %/s.

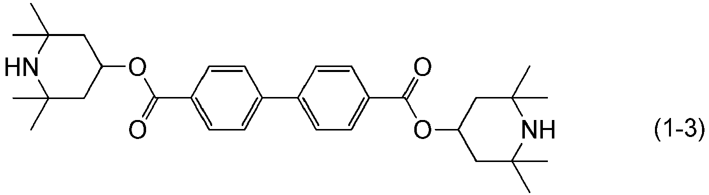

### Example 7

| | | |
|---|---|---|
| 3-HH-V | (2) | 29% |
| 3-HBB(F,F)-F | (3-8) | 4% |
| 3-GB(F)B(F,F)-F | (3-12) | 3% |
| 3-BB(F)B(F,F)-F | (3-15) | 6% |
| 3-BB(F,F)XB(F,F)-F | (3-18) | 18% |
| 3-HBBXB(F,F)-F | (3-23) | 3% |
| 3-BB(F)B(F,F)XB(F,F)-F | (3-29) | 3% |
| 4-BB(F)B(F,F)XB(F,F)-F | (3-29) | 7% |
| 4-BB(F,F)XB(F)B(F,F)-F | (3-30) | 3% |
| V-HHB-1 | (4-4) | 11% |
| 2-BB(F)B-2V | (4-6) | 4% |
| 3-HB(F)HH-5 | (4-8) | 3% |
| 5-HBBH-3 | (4-10) | 3% |
| 3-HB(F)BH-3 | (4-11) | 3% |

NI = 80.6°C; Tc < -30°C; Δn = 0.124; Δε = 9.9; Vth = 1.54 V; η = 20.6 mPa · s; γ1 = 81.1 mPa · s. Compound (1-4) was added to the composition in a proportion of 0.06% by weight, and a DC luminance relaxation time constant was measured. τ_{DC} = -0.053 %/s.

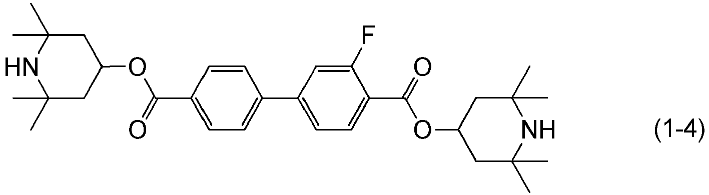

### Example 8

| | | |
|---|---|---|
| 3-HH-V | (2) | 19% |
| 2-HH-3 | (2) | 4% |
| 3-HH-4 | (2) | 3% |
| 3-HHXB(F,F)-F | (3-4) | 10% |
| 4-GHB(F, F) -F | (3-7) | 10% |
| 3-BB(F,F)XB(F,F)-F | (3-18) | 6% |
| 2-HHBB(F,F)-F | (3-19) | 4% |
| 3-HHBB(F,F)-F | (3-19) | 6% |
| 4-HHBB(F,F)-F | (3-19) | 5% |
| 5-HHBB(F,F)-F | (3-19) | 5% |
| 3-GBB(F)B(F,F)-F | (3-22) | 3% |
| 4-GB(F)B(F,F)XB(F)-F | (3-26) | 8% |
| 4-BB(F)B(F,F)XB(F,F)-F | (3-29) | 3% |
| V2-BB-1 | (4-2) | 6% |
| 3-HHB-1 | (4-4) | 5% |
| 5-HBB(F)B-3 | (4-12) | 3% |

NI = 107.6°C; Tc < -20°C; Δn = 0.111; Δε = 10.6; Vth = 1.55 V; η = 19.4 mPa·s; γ1 = 121.9 mPa·s. Compound (1-5) was added to the composition in a proportion of 0.1% by weight, and a DC luminance relaxation time constant was measured. τ_{DC} = -0.067 %/s.

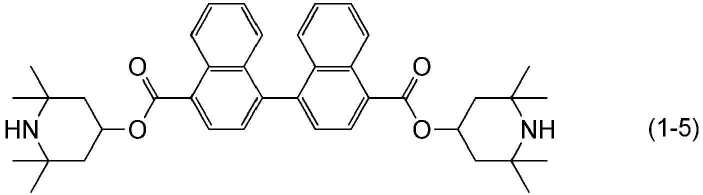

### Example 9

| | | |
|---|---|---|
| 3-HH-V | (2) | 22% |
| 3-HH-V1 | (2) | 10% |
| 3-HH-2V1 | (2) | 9% |
| 3-HHXB(F,F)-CF3 | (3-5) | 12% |
| 3-GB(F,F)XB(F,F)-F | (3-14) | 8% |
| 3-GBB(F)B(F,F)-F | (3-22) | 3% |
| 4-GBB(F)B(F,F)-F | (3-22) | 3% |
| 3-HBBXB(F,F)-F | (3-23) | 3% |
| 4-GB(F)B(F,F)XB(F,F)-F | (3-27) | 5% |
| 5-GB(F)B(F,F)XB(F,F)-F | (3-27) | 5% |
| 4-BB(F)B(F,F)XB(F,F)-F | (3-29) | 7% |
| 5-BB(F)B(F,F)XB(F,F)-F | (3-29) | 5% |
| V2-HHB-1 | (4-4) | 8% |

NI = 89.7°C; Tc < -20°C; Δn = 0.102; Δε = 13.7; Vth = 1.35 V; η = 20.6 mPa·s; γ1 = 126.5 mPa·s. Compound (1-2) was added to the composition in a proportion of 0.1% by weight, and a DC luminance relaxation time constant was measured. τ_{DC} = -0.075 %/s.

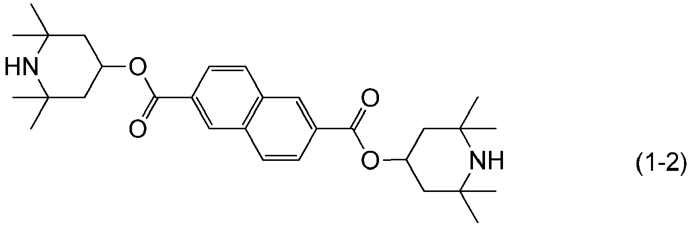

### Example 10

| | | |
|---|---|---|
| 3-HH-V | (2) | 17% |
| 3-HH-4 | (2) | 11% |
| 3-HHB(F,F)-F | (3-2) | 10% |
| 3-HHXB(F,F)-F | (3-4) | 3% |
| 3-GHB(F,F)-F | (3-7) | 4% |
| 3-BB(F)B(F,F)-F | (3-15) | 7% |
| 3-BB(F,F)XB(F,F)-F | (3-18) | 13% |
| 3-GB(F)B(F)B(F)-F | (3-21) | 6% |
| 4-BB(F)B(F,F)XB(F,F)-F | (3-29) | 10% |
| 5-HB-O2 | (4-1) | 3% |
| 3-HHB-1 | (4-4) | 5% |
| 3-HHB-O1 | (4-4) | 6% |
| 3-HHB-3 | (4-4) | 5% |

NI = 83.1°C; Tc < -20°C; Δn = 0.109; Δε = 9.9; Vth = 1.42 V; η = 19.6 mPa·s; γ1 = 114.3 mPa·s. Compound (1-2) was added to the composition in a proportion of 0.07% by weight, and a DC luminance relaxation time constant was measured. τ_{DC} = -0.065 %/s.

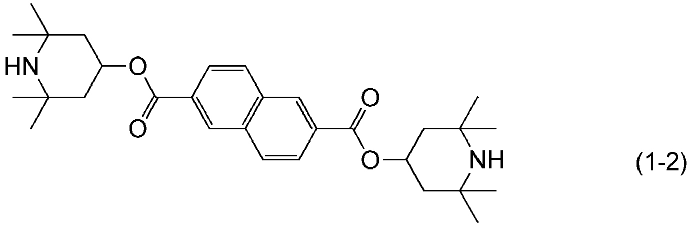

### Example 11

| | | |
|---|---|---|
| 3-HH-V1 | (2) | 10% |
| 4-HH-V | (2) | 13% |
| 5-HH-V | (2) | 10% |
| 3-BB(F,F)XB(F,F)-F | (3-18) | 5% |
| 2-HHBB(F,F)-F | (3-19) | 2% |
| 3-HHBB(F,F)-F | (3-19) | 3% |
| 4-HHBB(F,F)-F | (3-19) | 4% |
| 4-BB(F)B(F,F)XB(F,F)-F | (3-29) | 4% |
| 5-BB(F)B(F,F)XB(F,F)-F | (3-29) | 2% |
| 3-BB(2F,3F)XB(F,F)-F | (3-32) | 5% |
| 3-HB-CL | (3) | 6% |
| 3-HHB-CL | (3) | 6% |
| 5-HHB-CL | (3) | 5% |
| V-HHB-1 | (4-4) | 13% |
| 2-BB(F)B-3 | (4-6) | 5% |
| 2-BB(F)B-5 | (4-6) | 4% |
| 5-HBB(F)B-2 | (4-12) | 3% |

NI = 102.2°C; Tc < -20°C; Δn = 0.117; Δε = 4.5; Vth = 2.19 V; η = 17.8 mPa·s; γ1 = 85.4 mPa·s. Compound (1-3) was added to the composition in a proportion of 0.1% by weight, and a DC luminance relaxation time constant was measured. τ_{DC} = -0.068 %/s.

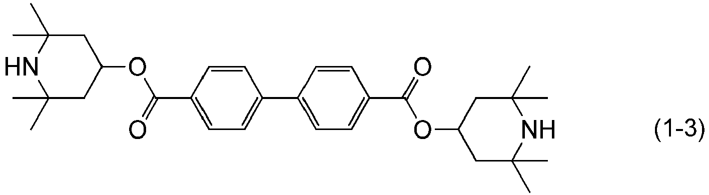

### Example 12

| | | |
|---|---|---|
| 3-HH-V | (2) | 41% |
| 3-HH-V1 | (2) | 7% |
| 5-HBB(F,F)XB(F,F)-F | (3-24) | 8% |
| 4-GB(F)B(F,F)XB(F,F)-F | (3-27) | 4% |
| 4-BB(F)B(F,F)XB(F,F)-F | (3-29) | 5% |
| 5-BB(F)B(F,F)XB(F,F)-F | (3-29) | 10% |
| V-HHB-1 | (4-4) | 9% |
| V2-HHB-1 | (4-4) | 10% |
| 2-BB(F)B-3 | (4-6) | 6% |

NI = 91.0°C; Tc < -20°C; Δn = 0.106; Δε = 5.6; Vth = 1.86 V; η = 15.7 mPa·s; γ1 = 80.3 mPa·s. Compound (1-3) was added to the composition in a proportion of 0.1% by weight, and a DC luminance relaxation time constant was measured. τ_{DC} = -0.059 %/s.

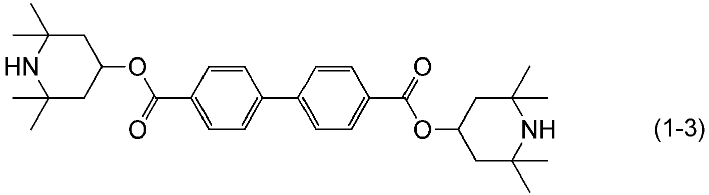

The DC luminance relaxation time constant in Comparative Example 1 was -0.024 %/s. On the other hand, the DC luminance relaxation time constants in Example 1 to Example 12 were in the range of -0.053 %/s to -0.075 %/s. Thus, the compositions in the Examples had a larger negative DC luminance relaxation time constant in comparison with the composition in the Comparative Example. Accordingly, the liquid crystal composition of the invention is concluded to have superb characteristics.

### Industrial Applicability

A liquid crystal composition of the invention satisfies at least one of characteristics such as high maximum temperature, low minimum temperature, small viscosity, suitable optical anisotropy, large dielectric anisotropy, large specific resistance, a large elastic constant, high stability to ultraviolet light and high stability to heat, or has a suitable balance regarding at least two of the characteristics. A liquid crystal display device including the composition has a short response time, a large voltage holding ratio, a large contrast ratio, a large negative DC luminance relaxation time constant, a long service life and so forth, and thus can be used in a liquid crystal projector, a liquid crystal television and so forth.

## Claims

1. A liquid crystal composition that has a nematic phase and positive dielectric anisotropy, and contains at least one compound selected from the group of compounds represented by formula (1) as an additive component, and at least one compound selected from the group of compounds represented by formula (2) as a first component: 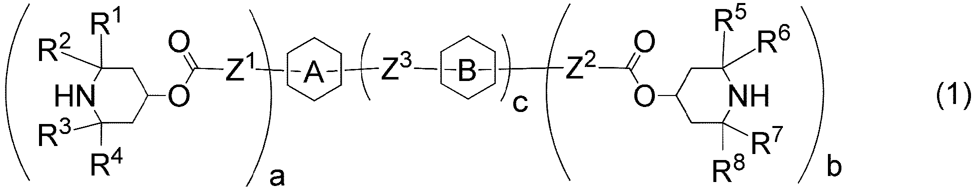 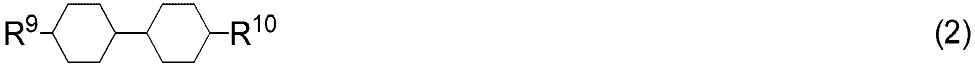
wherein, in formula (1), R¹, R², R³, R⁴, R⁵, R⁶, R⁷ and R⁸ are independently hydrogen or alkyl having 1 to 4 carbons; ring A and ring B are independently cyclohexylene, cyclohexenylene, decahydronaphthalenediyl, dihydropyrandiyl, tetrahydropyrandiyl, dioxanediyl, phenylene, naphthalenediyl, pyrimidinediyl or pyridinediyl, and in the rings, at least one hydrogen may be replaced by fluorine, chlorine, alkyl having 1 to 5 carbons, alkoxy having 1 to 5 carbons, or alkyl having 1 to 5 carbons in which at least one hydrogen is replaced by fluorine or chlorine; Z¹, Z² and Z³ are independently a single bond or alkylene having 1 to 10 carbons, and in the alkylene, at least one piece of -CH₂- may be replaced by -O-, -S-, -CO-, -COO-, -OCO- or -SiH₂-, and at least one piece of -CH₂-CH₂- may be replaced by -CH=CH- or -C≡C-, and in the groups, at least one hydrogen may be replaced by fluorine or chlorine; a and b are independently 1 or 2; c is 0, 1 or 2, and ring A when c is 0 is cyclohexenylene, decahydronaphthalenediyl, dihydropyrandiyl, tetrahydropyrandiyl, dioxanediyl, naphthalenediyl, pyrimidinediyl or pyridinediyl, and in the rings, at least one hydrogen may be replaced by fluorine, chlorine, alkyl having 1 to 5 carbons, alkoxy having 1 to 5 carbons, or alkyl having 1 to 5 carbons in which at least one hydrogen is replaced by fluorine or chlorine; and
in formula (2), R⁹ and R¹⁰ are independently alkyl having 1 to 12 carbons, alkoxy having 1 to 12 carbons, alkenyl having 2 to 12 carbons, alkyl having 1 to 12 carbons in which at least one hydrogen is replaced by fluorine or chlorine, or alkenyl having 2 to 12 carbons in which at least one hydrogen is replaced by fluorine or chlorine.

2. The liquid crystal composition according to claim 1, containing at least one compound selected from the group of compounds represented by formula (1-1) to formula (1-5) as the additive component: 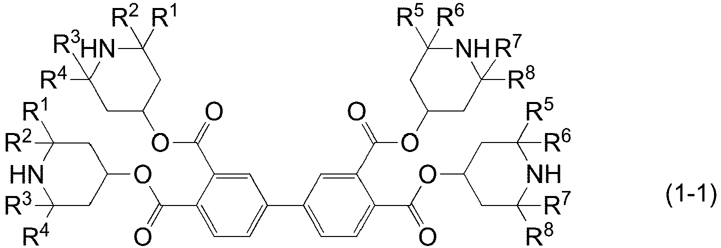 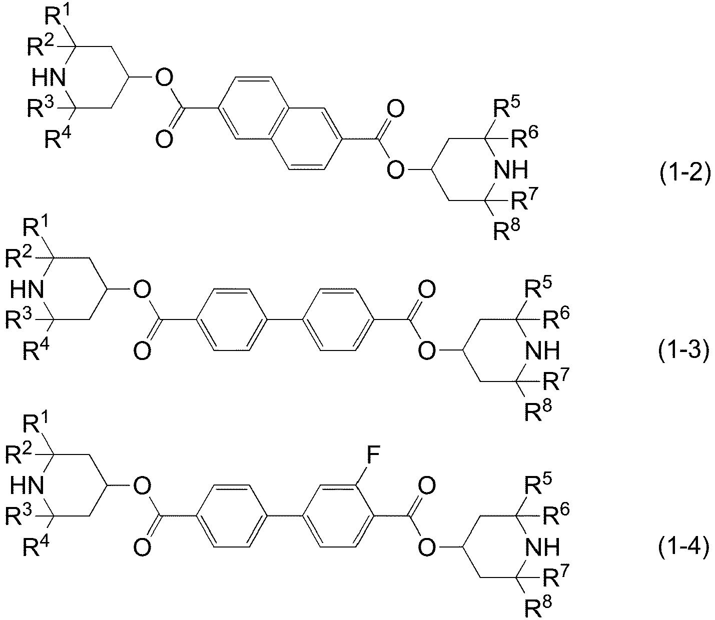 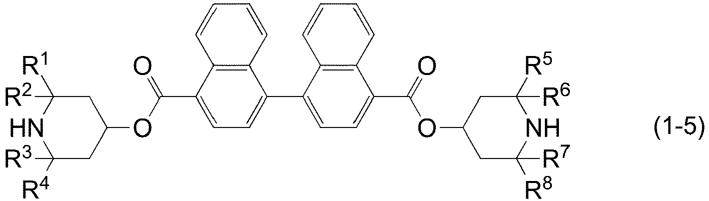 wherein, in formula (1-1) to formula (1-5), R¹, R², R³, R⁴, R⁵, R⁶, R⁷ and R⁸ are independently hydrogen or alkyl having 1 to 4 carbons.

3. The liquid crystal composition according to claim 1 or 2, wherein a proportion of the additive component is in the range of 0.005% by weight to 1% by weight, and a proportion of the first component is in the range of 5% by weight to 60% by weight, based on the weight of the liquid crystal composition.

4. The liquid crystal composition according to any one of claims 1 to 3, containing at least one compound selected from the group of compounds represented by formula (3) as a second component: 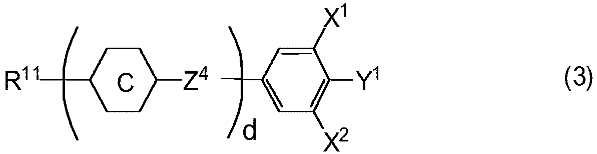 wherein, in formula (3), R¹¹ is alkyl having 1 to 12 carbons, alkoxy having 1 to 12 carbons or alkenyl having 2 to 12 carbons; ring C is 1,4-cyclohexylene, 1,4-phenylene, 2-fluoro-1,4-phenylene, 2,3-difluoro-1,4-phenylene, 2,6-difluoro-1,4-phenylene, pyrimidine-2,5-diyl, 1,3-dioxane-2,5-diyl or tetrahydropyran-2,5-diyl; Z⁴ is a single bond, ethylene, carbonyloxy or difluoromethyleneoxy; X¹ and X² are independently hydrogen or fluorine; Y¹ is fluorine, chlorine, alkyl having 1 to 12 carbons in which at least one hydrogen is replaced by fluorine or chlorine, alkoxy having 1 to 12 carbons in which at least one hydrogen is replaced by fluorine or chlorine, or alkenyloxy having 2 to 12 carbons in which at least one hydrogen is replaced by fluorine or chlorine; and d is 1, 2, 3 or 4.

5. The liquid crystal composition according to any one of claims 1 to 4, containing at least one compound selected from the group of compounds represented by formula (3-1) to formula (3-35) as the second component: 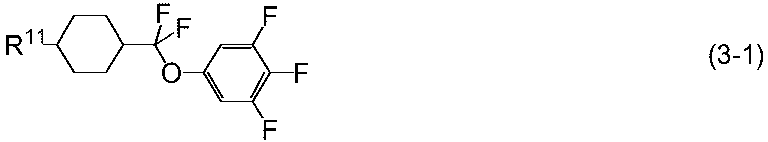 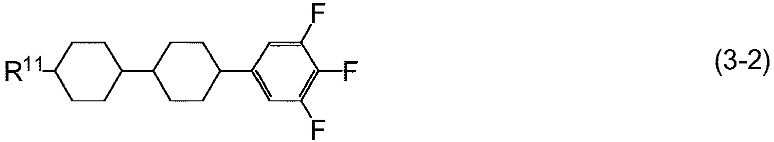 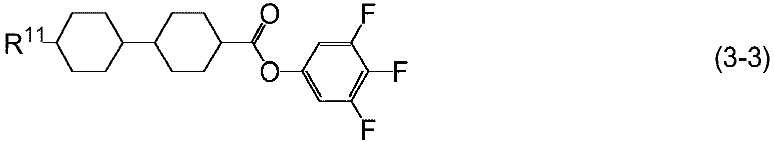 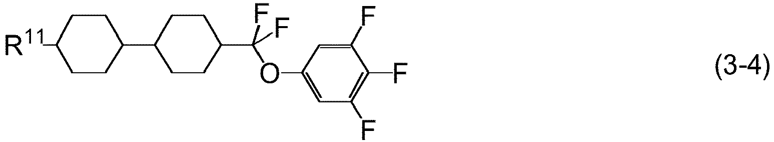 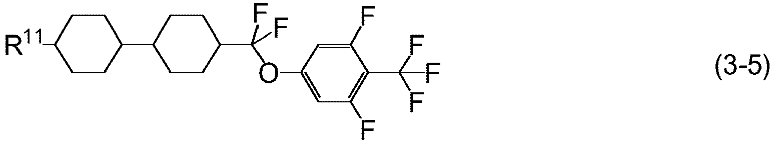 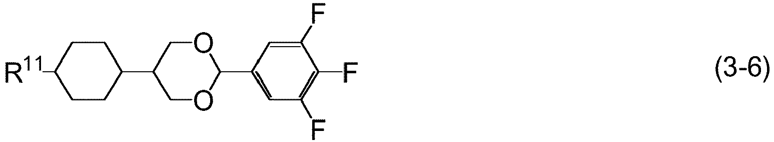 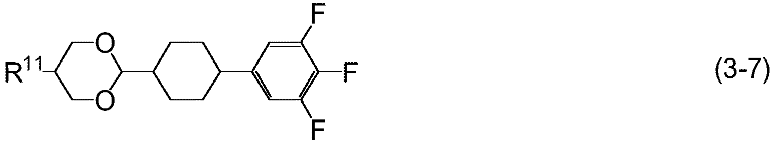 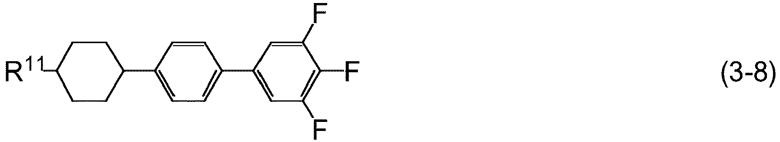 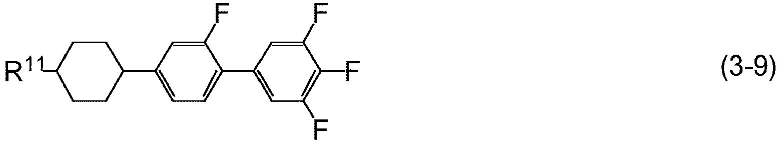 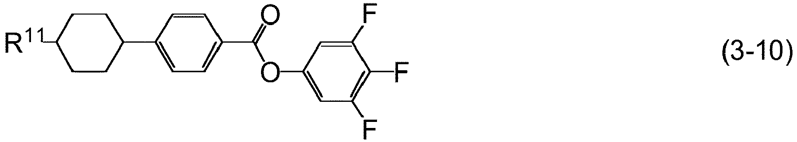 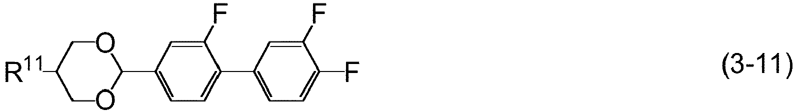 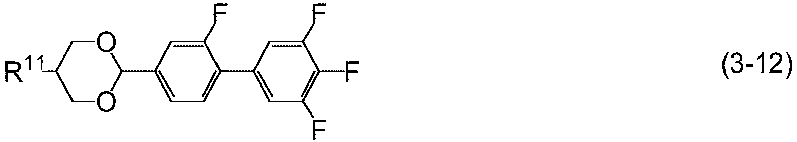 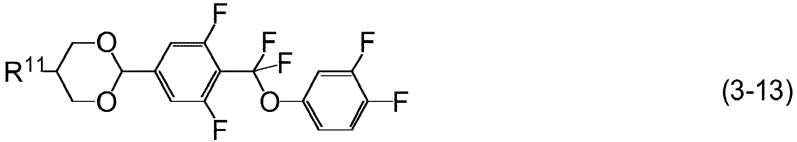 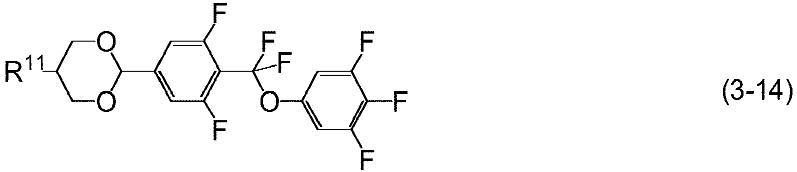 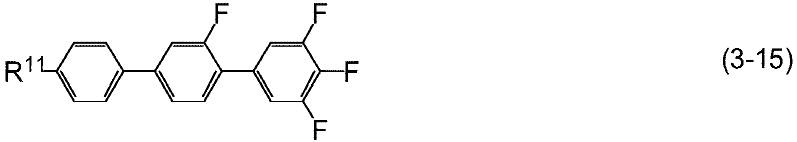 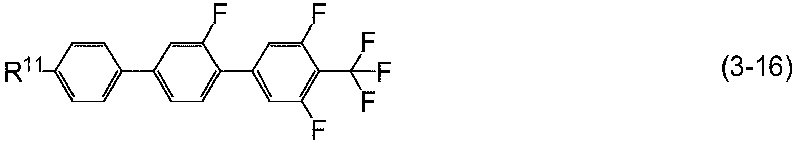 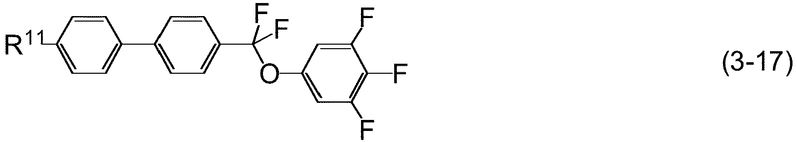 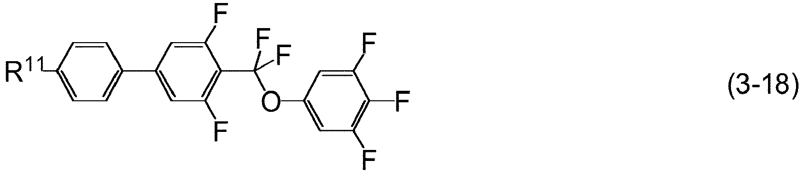 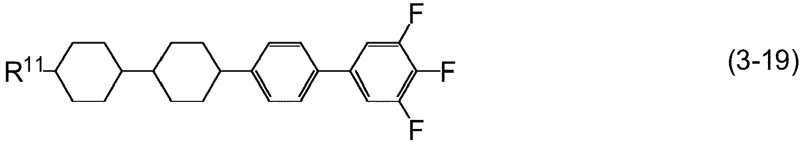 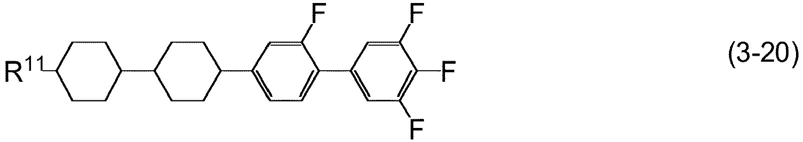 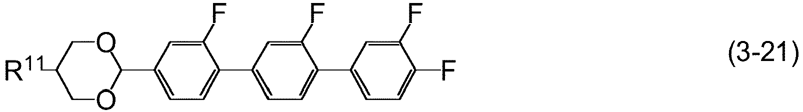 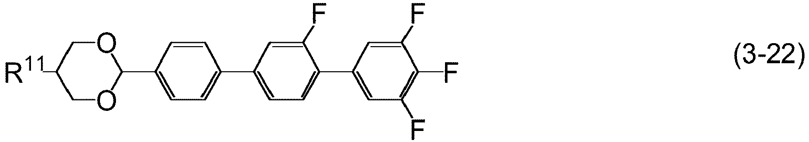 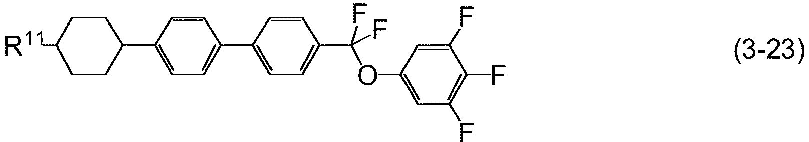 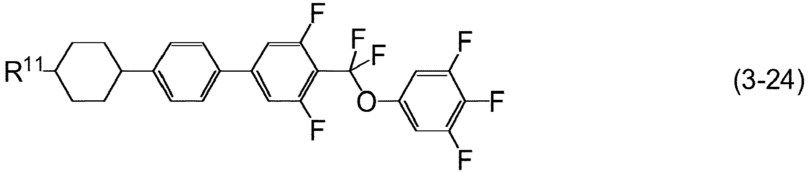 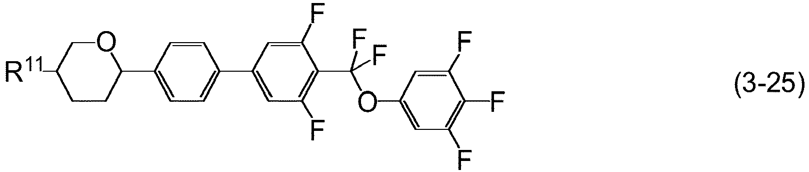 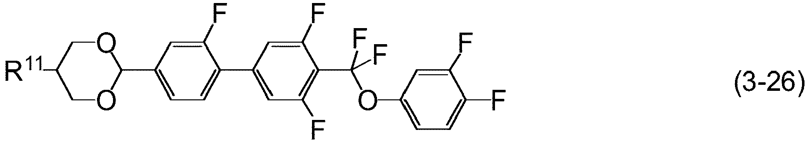 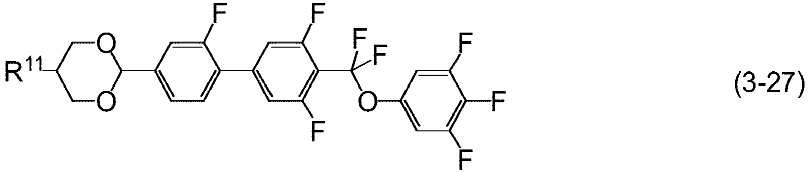 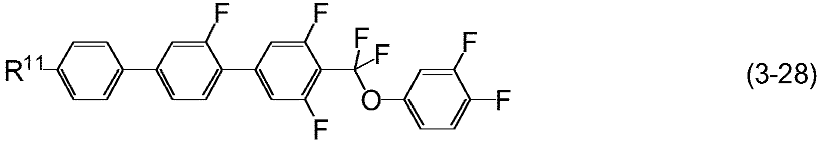 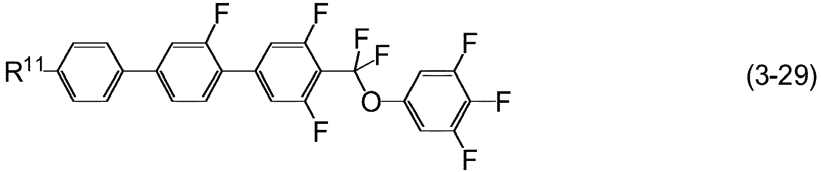 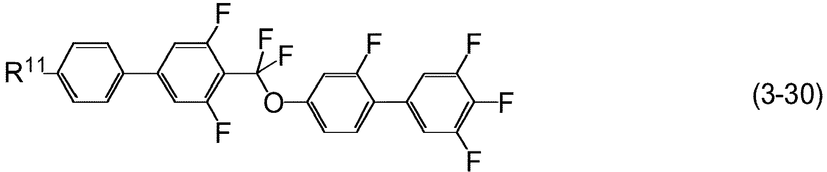 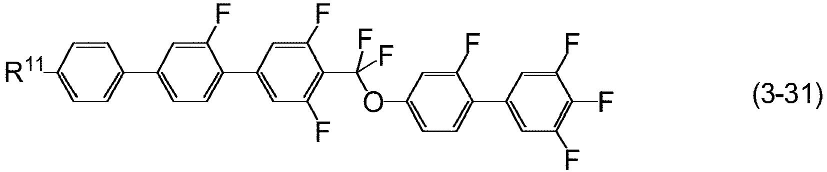 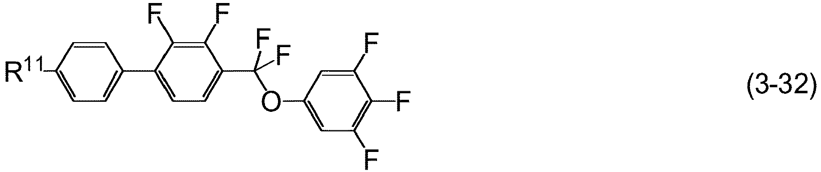 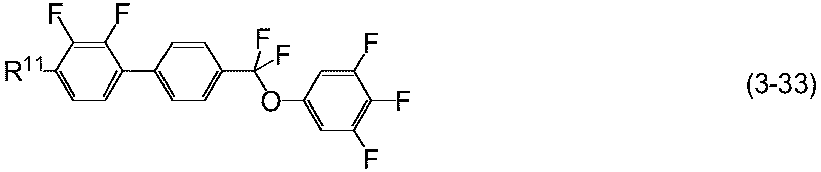 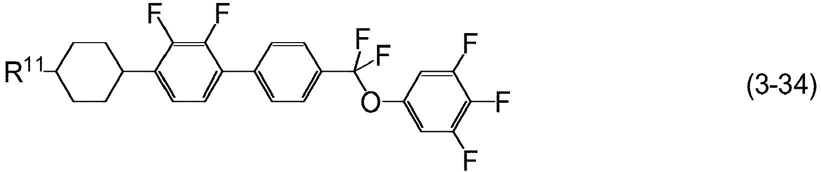 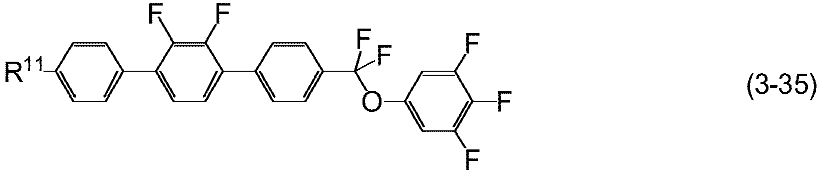 wherein, in formula (3-1) to formula (3-35), R¹¹ is alkyl having 1 to 12 carbons, alkoxy having 1 to 12 carbons or alkenyl having 2 to 12 carbons.

6. The liquid crystal composition according to claim 4 or 5, wherein a proportion of the second component is in the range of 10% by weight to 90% by weight based on the weight of the liquid crystal composition.

7. The liquid crystal composition according to any one of claims 1 to 6, containing at least one compound selected from the group of compounds represented by formula (4) as a third component: 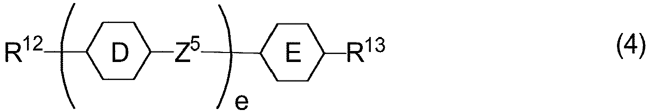 wherein, in formula (4), R¹² and R¹³ are independently alkyl having 1 to 12 carbons, alkoxy having 1 to 12 carbons, alkenyl having 2 to 12 carbons, or alkenyl having 2 to 12 carbons in which at least one hydrogen is replaced by fluorine or chlorine; ring D and ring E are independently 1,4-cyclohexylene, 1,4-phenylene, 2-fluoro-1,4-phenylene or 2,5-difluoro-1,4-phenylene; Z⁵ is a single bond, ethylene or carbonyloxy; and e is 1, 2 or 3, and ring E when e is 1 is 1,4-phenylene.

8. The liquid crystal composition according to any one of claims 1 to 7, containing at least one compound selected from the group of compounds represented by formula (4-1) to formula (4-12) as the third component: 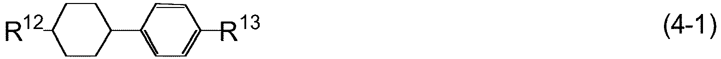 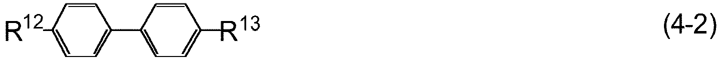 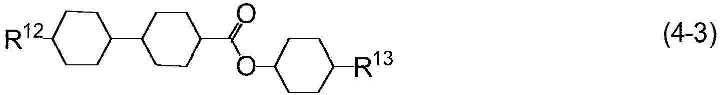 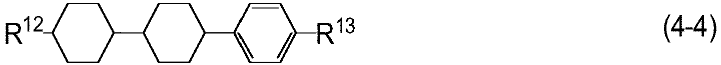 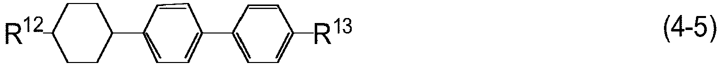 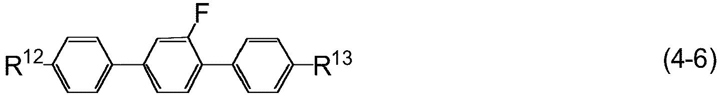 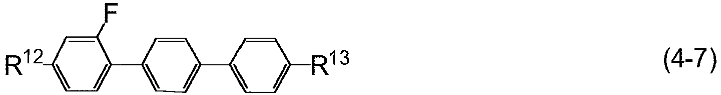 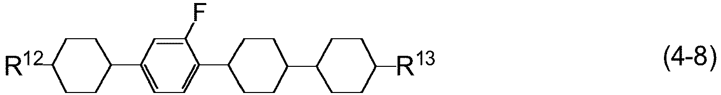 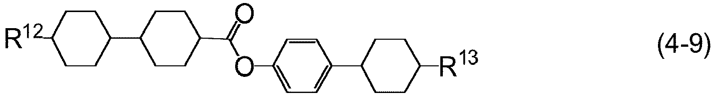 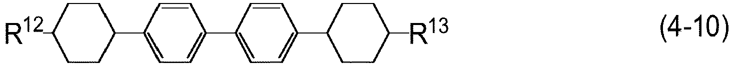 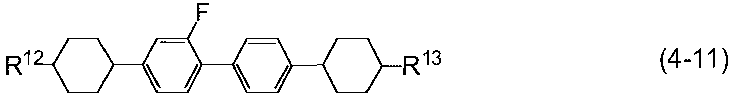 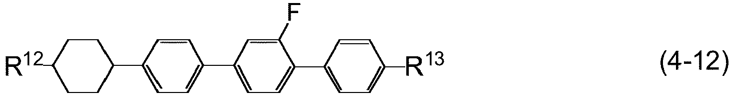 wherein, in formula (4-1) to formula (4-12), R¹² and R¹³ are independently alkyl having 1 to 12 carbons, alkoxy having 1 to 12 carbons, alkenyl having 2 to 12 carbons, or alkenyl having 2 to 12 carbons in which at least one hydrogen is replaced by fluorine or chlorine.

9. The liquid crystal composition according to claim 7 or 8, wherein a proportion of the third component is in the range of 5% by weight to 60% by weight based on the weight of the liquid crystal composition.

10. The liquid crystal composition according to any one of claims 1 to 9, containing at least one compound selected from the group of compounds represented by formula (5) as a fourth component: 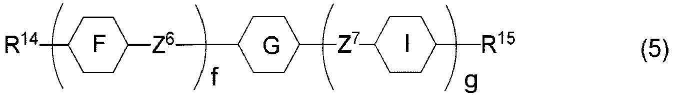 wherein, in formula (5), R¹⁴ and R¹⁵ are independently alkyl having 1 to 12 carbons, alkoxy having 1 to 12 carbons, alkenyl having 2 to 12 carbons or alkenyloxy having 2 to 12 carbons; ring F and ring I are independently1,4-cyclohexylene, 1,4-cyclohexenylene, 1,4-phenylene, 1,4-phenylene in which at least one hydrogen is replaced by fluorine or chlorine, or tetrahydropyran-2,5-diyl; ring G is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7,8-difluorochroman-2, 6-diyl; Z⁶ and Z⁷ are independently a single bond, ethylene, carbonyloxy or methyleneoxy; f is 1, 2 or 3, and g is 0 or 1; and a sum of f and g is 3 or less.

11. The liquid crystal composition according to any one of claims 1 to 10, containing at least one compound selected from the group of compounds represented by formula (5-1) to formula (5-21) as the fourth component: 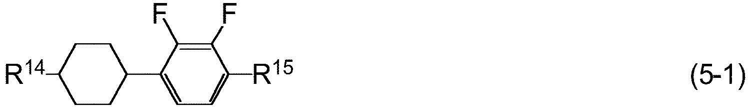 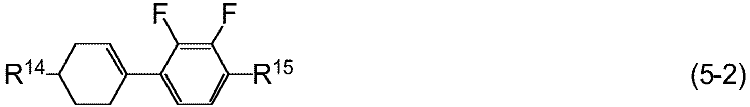 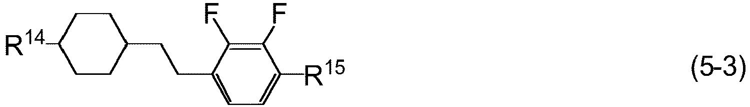 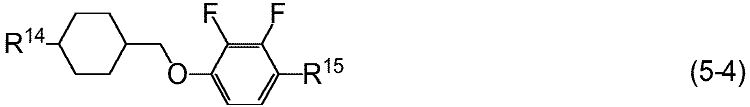 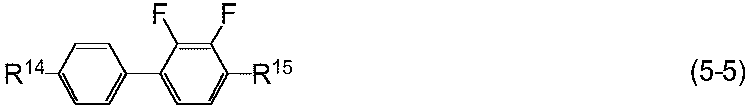 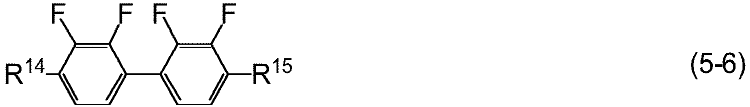 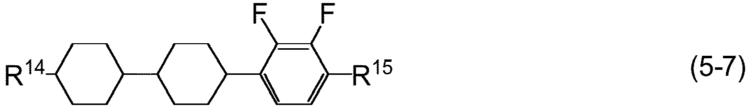 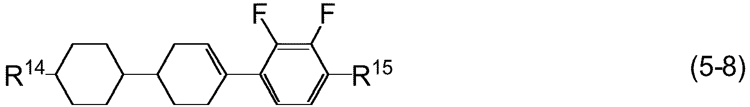 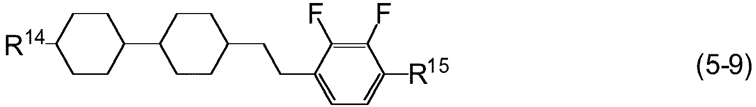 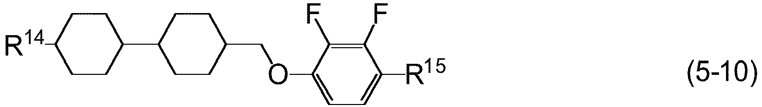 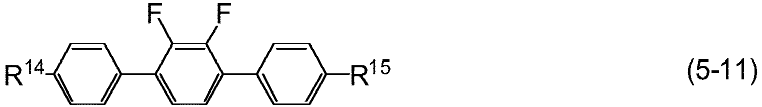 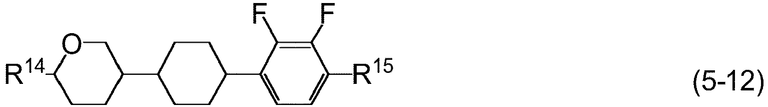 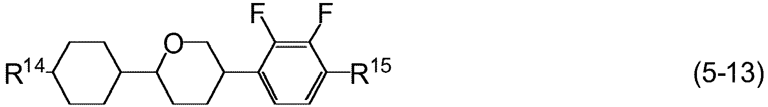 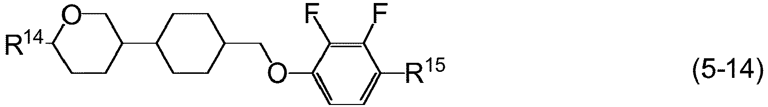 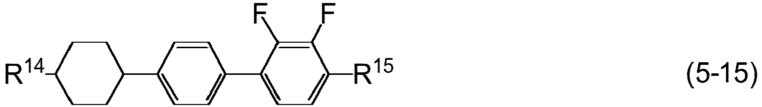 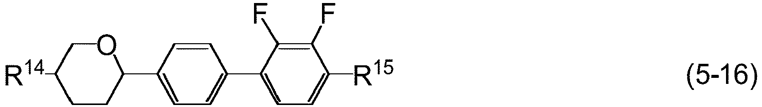 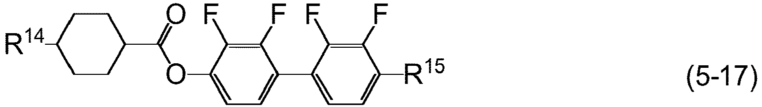 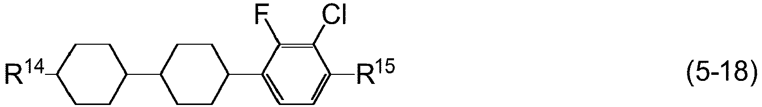 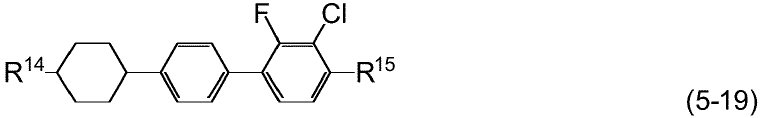 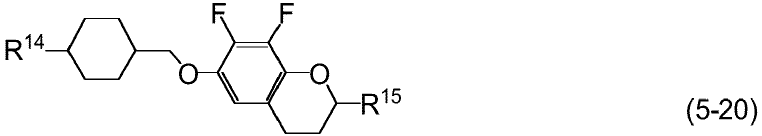 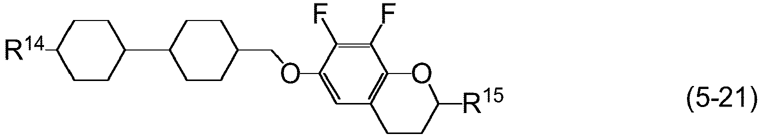 wherein, in formula (5-1) to formula (5-21), R¹⁴ and R¹⁵ are independently alkyl having 1 to 12 carbons, alkoxy having 1 to 12 carbons, alkenyl having 2 to 12 carbons or alkenyloxy having 2 to 12 carbons.

12. The liquid crystal composition according to claim 10 or 11, wherein a proportion of the fourth component is in the range of 3% by weight to 25% by weight based on the weight of the liquid crystal composition.

13. The liquid crystal composition according to any one of claims 1 to 12, wherein a maximum temperature of a nematic phase is 70°C or higher, an optical anisotropy (measured at 25°C) at a wavelength of 589 nanometers is 0.07 or more and a dielectric anisotropy (measured at 25°C) at a frequency of 1 kHz is 2 or more.

14. A liquid crystal display device, including the liquid crystal composition according to any one of claims 1 to 13.

15. Use of the liquid crystal composition according to any one of claims 1 to 13 in a liquid crystal display device.

## Patentansprüche

1. Flüssigkristallzusammensetzung, die eine nematische Phase und positive dielektrische Anisotropie aufweist, und zumindest eine Verbindung ausgewählt aus der Gruppe von durch Formel (1) dargestellten Verbindungen als eine Zusatzkomponente und zumindest eine Verbindung ausgewählt aus der Gruppe von durch Formel (2) dargestellten Verbindungen als eine erste Komponente: 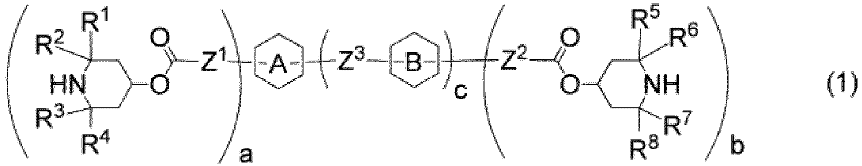 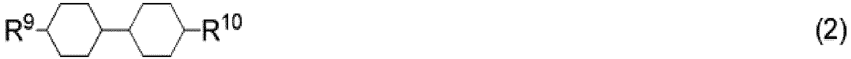
wobei in Formel (1), R¹, R², R³, R⁴, R⁵, R⁶, R⁷ und R⁸ unabhängig Wasserstoff oder Alkyl mit 1 bis 4 Kohlenstoffen sind; Ring A und Ring B unabhängig Cyclohexylen, Cyclohexenylen, Decahydronaphthalendiyl, Dihydropyrandiyl, Tetrahydropyrandiyl, Dioxandiyl, Phenylen, Naphthalendiyl, Pyrimidindiyl oder Pyridindiyl sind, und in den Ringen zumindest ein Wasserstoff ersetzt sein kann durch Fluor, Chlor, Alkyl mit 1 bis 5 Kohlenstoffen, Alkoxy mit 1 bis 5 Kohlenstoffen oder Alkyl mit 1 bis 5 Kohlenstoffen, in welchen zumindest ein Wasserstoff durch Fluor oder Chlor ersetzt ist; Z¹, Z² und Z³ unabhängig eine Einfachbindung oder Alkylen mit 1 bis 10 Kohlenstoffatomen sind, und in dem Alkylen zumindest ein Stück von -CH₂- durch -O-, -S-, -CO-, -COO-, -OCO- oder -SiH₂- ersetzt sein kann, und zumindest ein Stück von -CH₂-CH₂- durch -CH=CH- oder -C≡Cersetzt sein kann, und in den Gruppen zumindest ein Wasserstoffatom durch Fluor oder Chlor ersetzt sein kann; a und b unabhängig 1 oder 2 sind; c 0, 1 oder 2 ist, und Ring A, wenn c 0 ist, Cyclohexenylen, Decahydronaphthalendiyl, Dihydropyrandiyl, Tetrahydropyrandiyl, Dioxandiyl, Naphthalendiyl, Pyrimidindiyl oder Pyridindiyl ist, und in den Ringen zumindest ein Wasserstoff ersetzt sein kann durch Fluor, Chlor, Alkyl mit 1 bis 5 Kohlenstoffen, Alkoxy mit 1 bis 5 Kohlenstoffen, oder Alkyl mit 1 bis 5 Kohlenstoffen, in welchen zumindest ein Wasserstoff durch Fluor oder Chlor ersetzt sein kann; und
in Formel (2), R⁹ und R¹⁰ unabhängig sind Alkyl mit 1 bis 12 Kohlenstoffen, Alkoxy mit 1 bis 12 Kohlenstoffen, Alkenyl mit 2 bis 12 Kohlenstoffen, Alkyl mit 1 bis 12 Kohlenstoffen, in welchen zumindest ein Wasserstoff durch Fluor oder Chlor ersetzt ist, oder Alkenyl mit 2 bis 10 Kohlenstoffen, in welchen zumindest ein Wasserstoff durch Fluor oder Chlor ersetzt ist.

2. Flüssigkristallzusammensetzung nach Anspruch 1, enthaltend zumindest eine Verbindung ausgewählt aus der Gruppe von durch Formel (1-1) bis Formel (1-5) dargestellten Verbindungen als eine Zusatzkomponente: 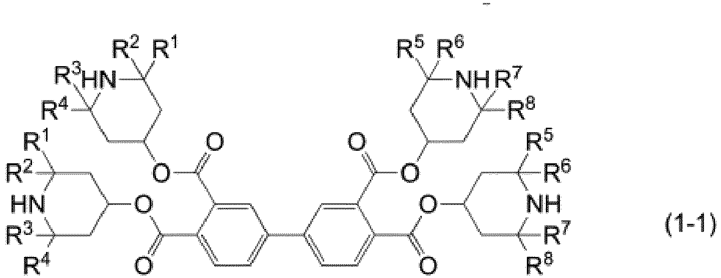 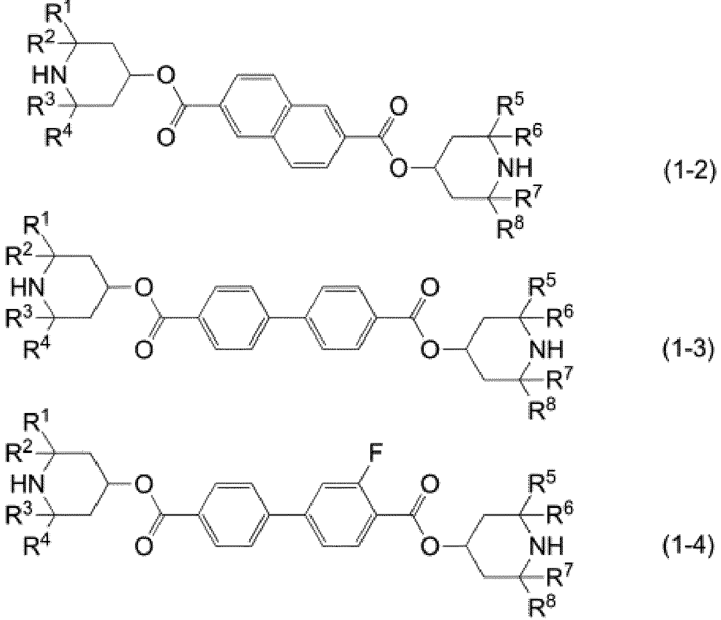 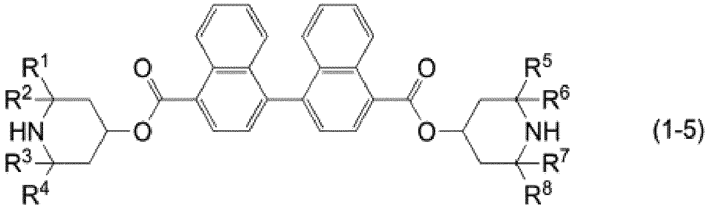 wobei in Formel (1-1) bis Formel (1-5), R¹, R², R³, R⁴, R⁵, R⁶, R⁷ und R⁸ unabhängig Wasserstoff oder Alkyl mit 1 bis 4 Kohlenstoffen sind.

3. Flüssigkristallzusammensetzung nach Anspruch 1 oder 2, wobei ein Anteil der Zusatzkomponente in dem Bereich von 0,005 Gew.-% bis 1 Gew.-% ist, und ein Anteil der ersten Komponente in dem Bereich von 5 Gew.-% bis 60 Gew.-% ist, basierend auf dem Gewicht der Flüssigkristallzusammensetzung.

4. Flüssigkristallzusammensetzung nach einem der Ansprüche 1 bis 3, enthaltend zumindest eine Verbindung ausgewählt aus der Gruppe von durch Formel (3) dargestellten Verbindungen als eine zweite Komponente: 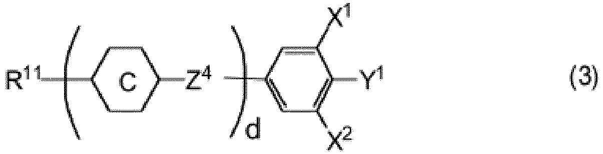 wobei in Formel (3), R¹¹ Alkyl mit 1 bis 12 Kohlenstoffen, Alkoxy mit 1 bis 12 Kohlenstoffen oder Alkenyl mit 2 bis 12 Kohlenstoffen ist; Ring C 1,4-Cyclohexylen, 1,4-Phenylen, 2-Fluoro-1,4-phenylen, 2,3-Difluoro-1,4-phenylen, 2,6-Difluoro-1,4-phenylen, Pyrimidin-2,5-diyl, 1,3-Dioxan-2,5-diyl oder Tetrahydropyran-2,5-diyl ist; Z⁴ eine Einfachbindung, Ethylen, Carbonyloxy oder Difluoromethylenoxy ist; X¹ und X² unabhängig Wasserstoff oder Fluor sind; Y¹ ist Fluor, Chlor, Alkyl mit 1 bis 12 Kohlenstoffen, in welchen zumindest ein Wasserstoff durch Fluor oder Chlor ersetzt ist, Alkoxy mit 1 bis 12 Kohlenstoffen, in welchen zumindest ein Wasserstoff durch Fluor oder Chlor ersetzt ist, oder Alkenyloxy mit 2 bis 12 Kohlenstoffen, in welchen zumindest ein Wasserstoff durch Fluor oder Chlor ersetzt ist; und d 1, 2, 3 oder 4 ist.

5. Flüssigkristallzusammensetzung nach einem der Ansprüche 1 bis 4, enthaltend zumindest eine Verbindung ausgewählt aus der Gruppe von durch Formel (3-1) bis Formel (3-35) dargestellten Verbindungen als eine zweite Komponente: 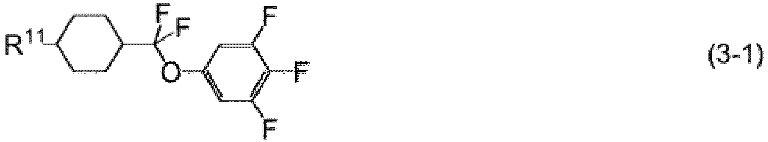 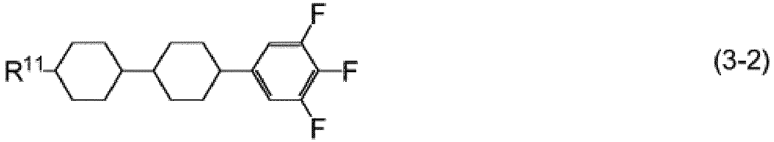 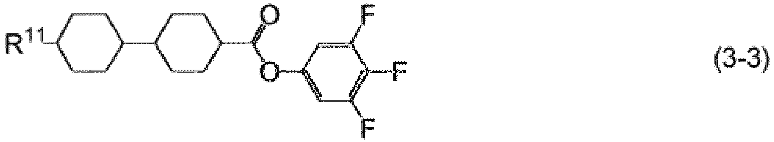 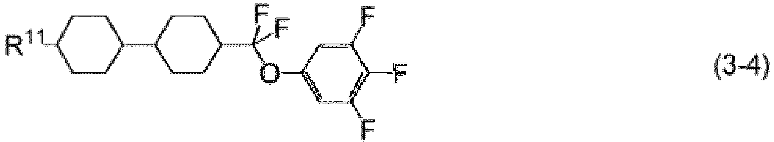 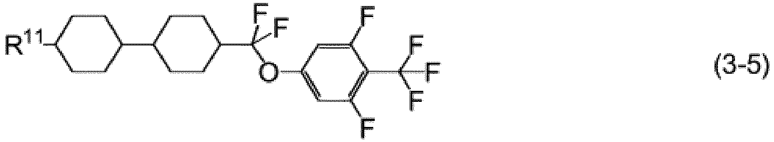 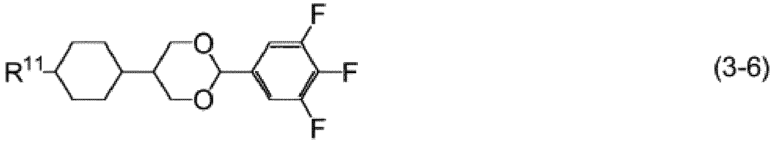 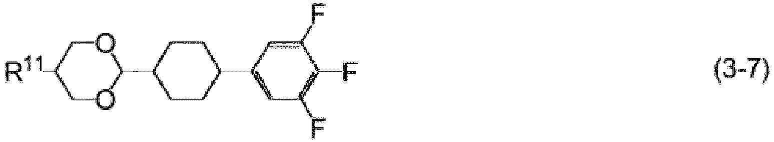 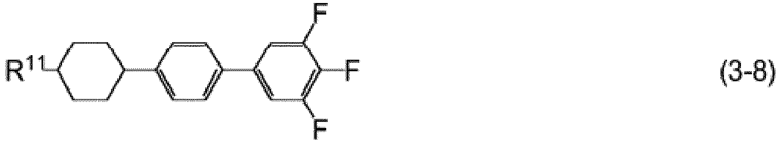 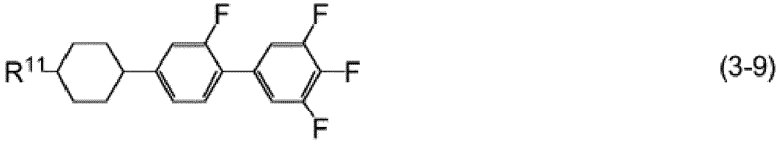 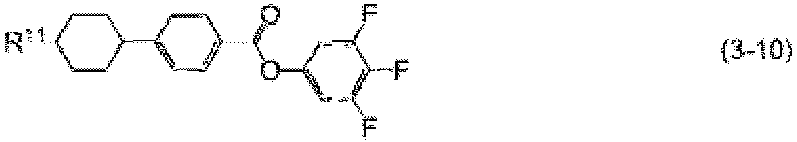 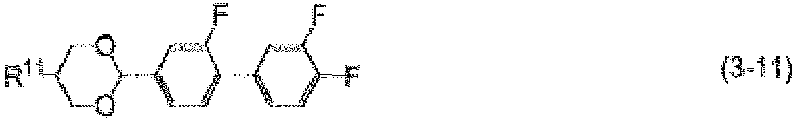 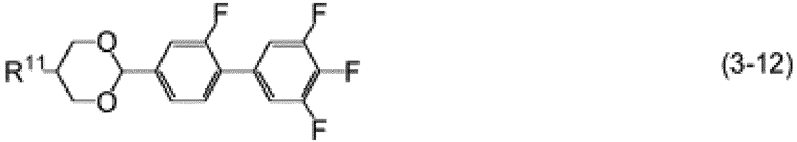 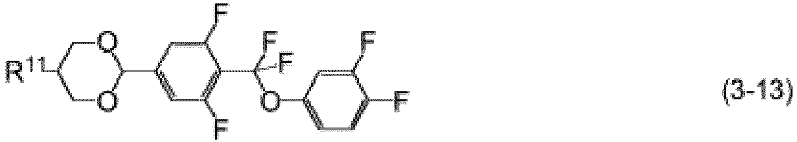 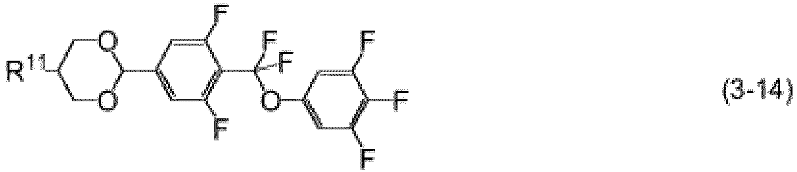 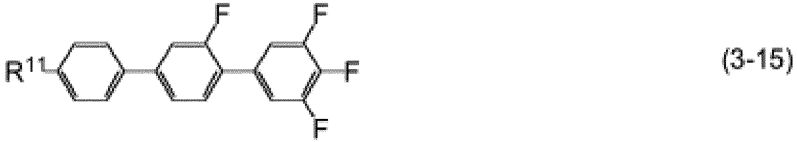 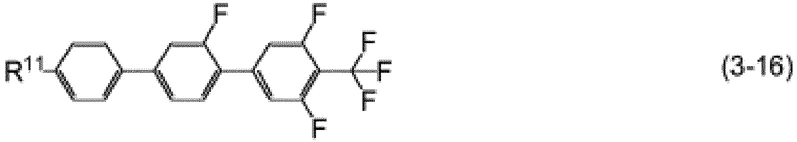 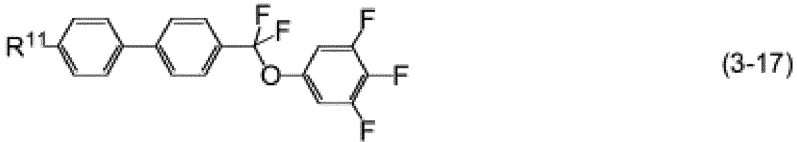 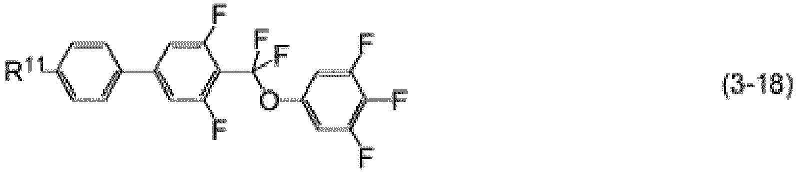 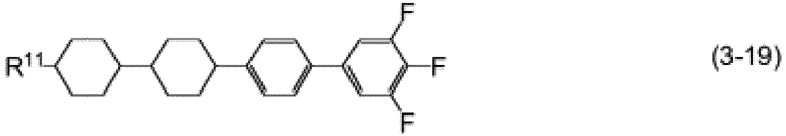 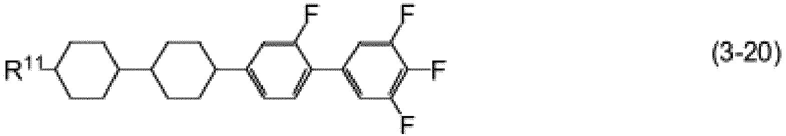 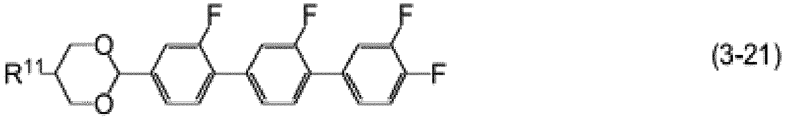 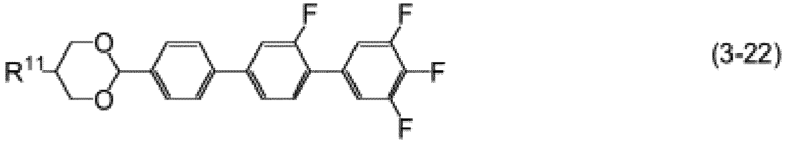 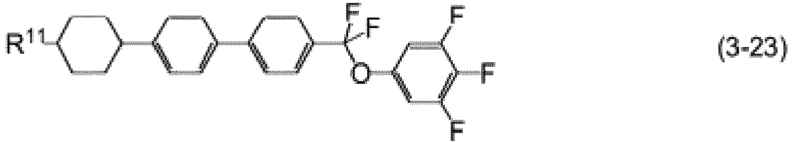 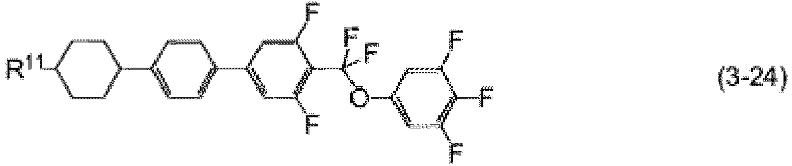 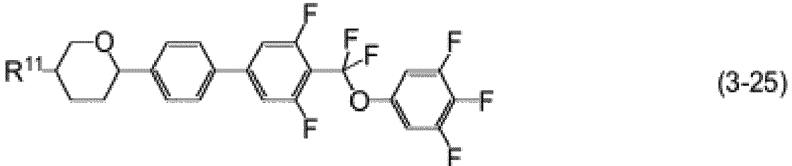 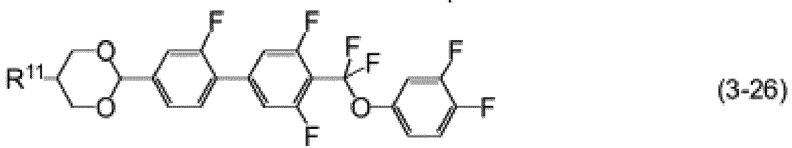 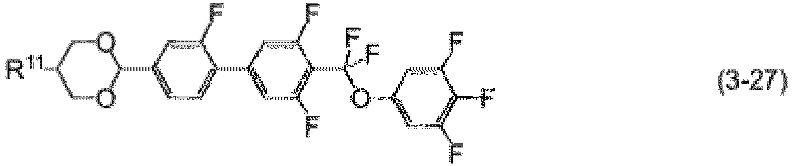 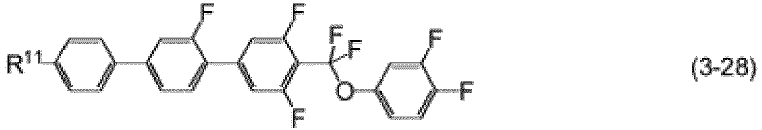 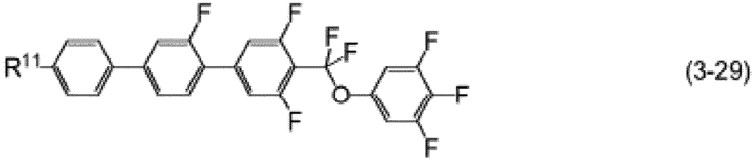 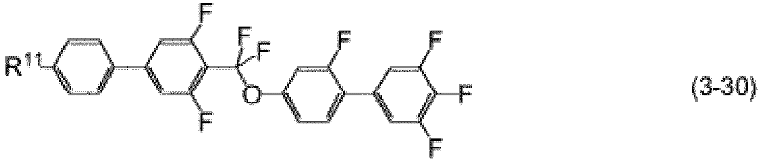 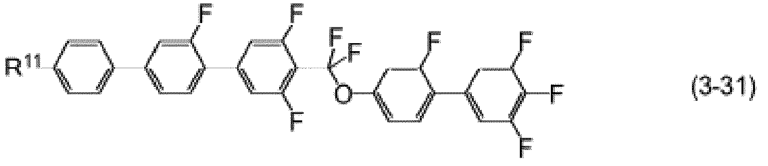 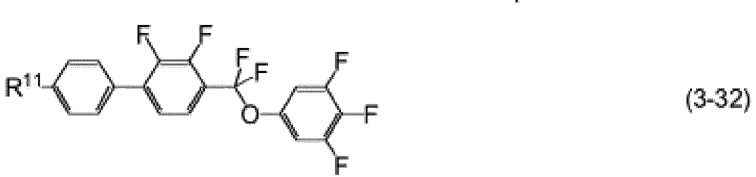 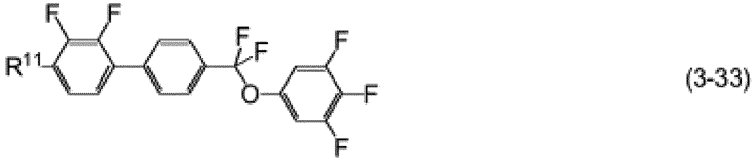 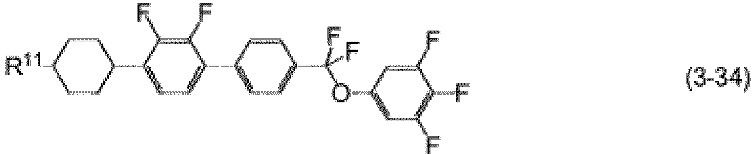 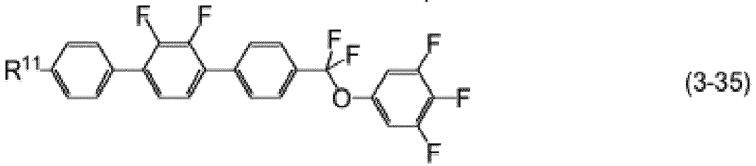 wobei in Formel (3-1) bis Formel (3-35), R¹¹ Alkyl mit 1 bis 12 Kohlenstoffen, Alkoxy mit 1 bis 12 Kohlenstoffen oder Alkenyl mit 2 bis 12 Kohlenstoffen ist.

6. Flüssigkristallzusammensetzung nach Anspruch 4 oder 5, wobei ein Anteil der zweiten Komponente in dem Bereich von 10 Gew.-% bis 90 Gew.-% basierend auf dem Gewicht der Flüssigkristallzusammensetzung ist.

7. Flüssigkristallzusammensetzung nach einem der Ansprüche 1 bis 6, enthaltend zumindest eine Verbindung ausgewählt aus der Gruppe von durch Formel (4) dargestellten Verbindungen als eine dritte Komponente: 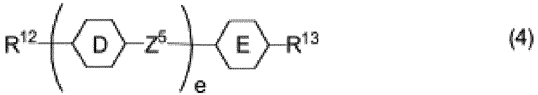 wobei in Formel (4), R¹² und R¹³ unabhängig sind Alkyl mit 1 bis 12 Kohlenstoffen, Alkoxy mit 1 bis 12 Kohlenstoffen, Alkenyl mit 2 bis 12 Kohlenstoffen oder Alkenyl mit 2 bis 12 Kohlenstoffen, in welchen zumindest ein Wasserstoff durch Fluor oder Chlor ersetzt ist; Ring D und Ring E unabhängig 1,4-Cyclohexylen, 1,4-Phenylen, 2-Fluoro-1,4-phenylen oder 2,5-Difluoro-1,4-phenylen sind; Z⁵ eine Einfachbindung, Ethylen oder Carbonyloxy ist; und e 1, 2 oder 3 ist, und Ring E, wenn e 1 ist, 1,4-Phenylen ist.

8. Flüssigkristallzusammensetzung nach einem der Ansprüche 1 bis 7, enthaltend zumindest eine Verbindung ausgewählt aus der Gruppe von durch Formel (4-1) bis Formel (4-12) dargestellten Verbindungen als die dritte Komponente: 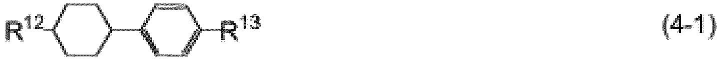 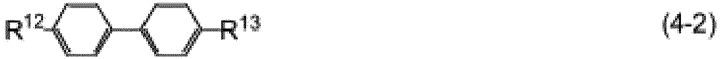 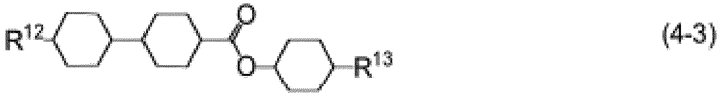 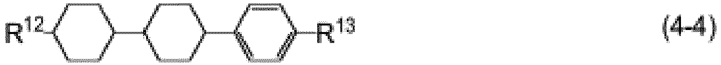 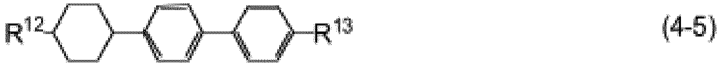 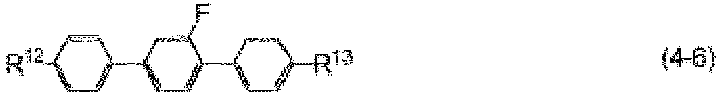 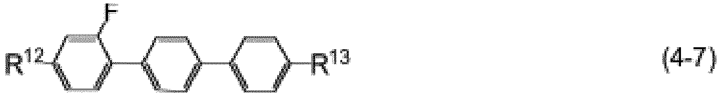 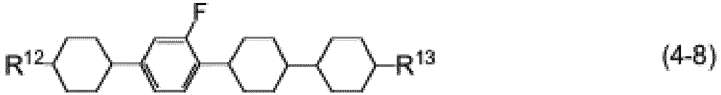 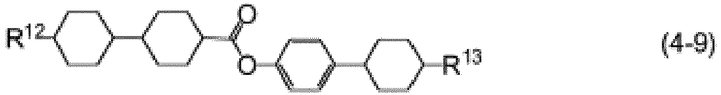 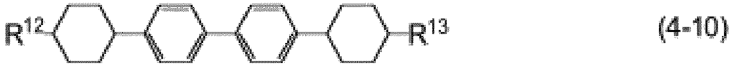 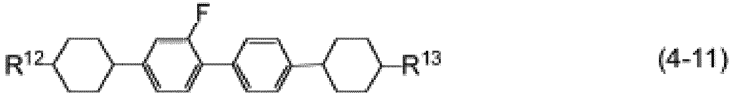 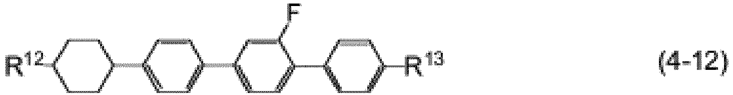 wobei in Formel (4-1) bis Formel (4-12), R¹² und R¹³ unabhängig Alkyl mit 1 bis 12 Kohlenstoffen, Alkoxy mit 1 bis 12 Kohlenstoffen, Alkenyl mit 2 bis 12 Kohlenstoffen oder Alkenyl mit 2 bis 12 Kohlenstoffen, in welchen zumindest ein Wasserstoff durch Fluor oder Chlor ersetzt ist, sind.

9. Flüssigkristallzusammensetzung nach Anspruch 7 oder 8, wobei ein Anteil der dritten Komponente in dem Bereich von 5 Gew.-% bis 60 Gew.-% basierend auf dem Gewicht der Flüssigkristallzusammensetzung ist.

10. Flüssigkristallzusammensetzung nach einem der Ansprüche 1 bis 9, enthaltend zumindest eine Verbindung ausgewählt aus der Gruppe von durch Formel (5) dargestellten Verbindungen als eine vierte Komponente: 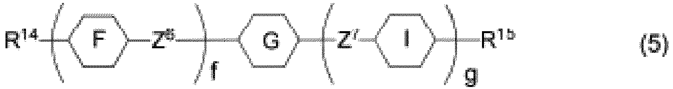 wobei in Formel (5), R¹⁴ und R¹⁵ unabhängig Alkyl mit 1 bis 12 Kohlenstoffen, Alkoxy mit 1 bis 12 Kohlenstoffen, Alkenyl mit 2 bis 12 Kohlenstoffen oder Alkenyloxy bei 2 bis 12 Kohlenstoffen sind; Ring F und Ring I unabhängig 1,4-Cyclohexylen, 1,4-Cyclohexenylen, 1,4-Phenylen, 1,4-Phenylen, in welchen zumindest ein Wasserstoff durch Fluor oder Chlor ersetzt ist, oder Tetrahydropyran-2,5-diyl sind; Ring G 2,3-Difluoro-1,4-phenylen, 2-Chloro-3-fluoro-1,4-phenylen, 2,3-Difluoro-5-methyl-1,4-phenylen, 3,4,5-Trifluoronaphthalen-2,6-diyl oder 7,8-Difluorochroman-2,6-diyl ist; Z⁶ und Z⁷ unabhängig eine Einfachbindung, Ethylen, Carbonyloxy oder Methylenoxy sind; f 1, 2 oder 3 ist, und g 0 oder 1 ist; und eine Summe von f und g 3 oder weniger ist.

11. Flüssigkristallzusammensetzung nach einem der Ansprüche 1 bis 10, enthaltend zumindest eine Verbindung ausgewählt aus der Gruppe von durch Formel (5-1) bis Formel (5-21) dargestellten Verbindungen als die vierte Komponente: 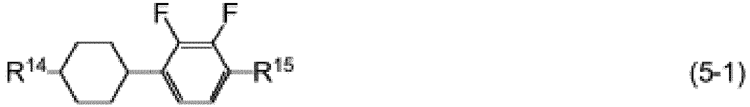 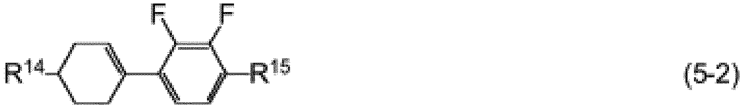 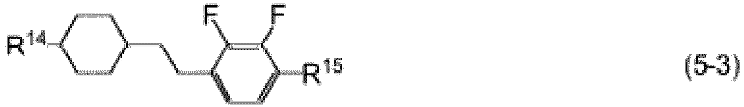 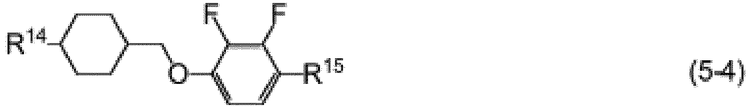 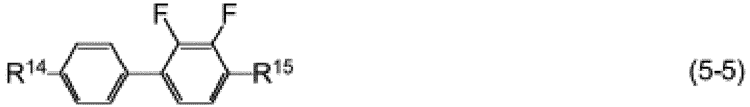 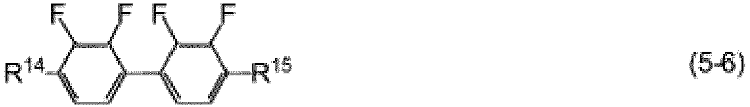 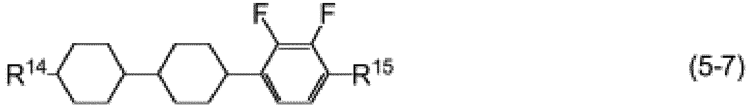 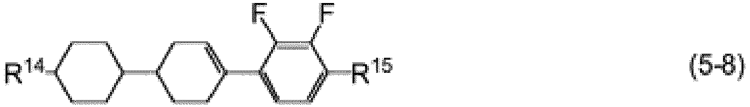 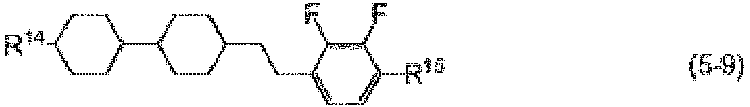 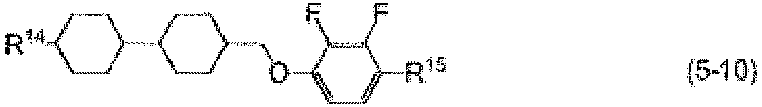 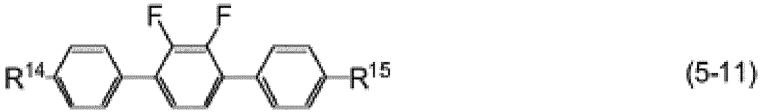 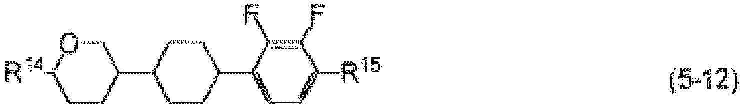 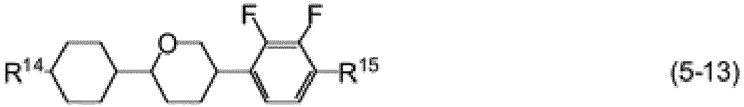 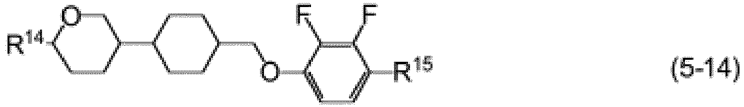 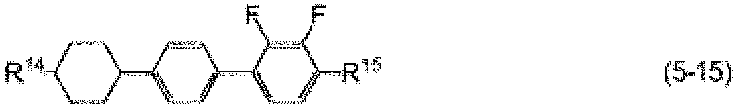 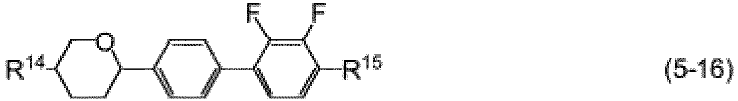 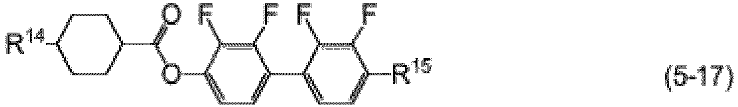 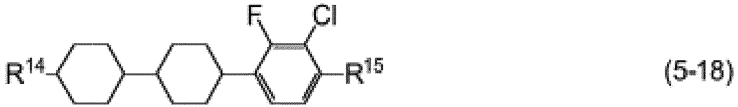 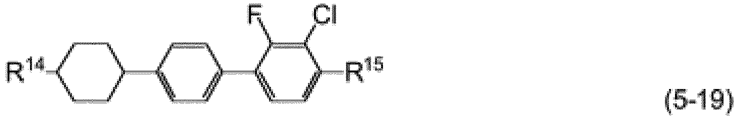 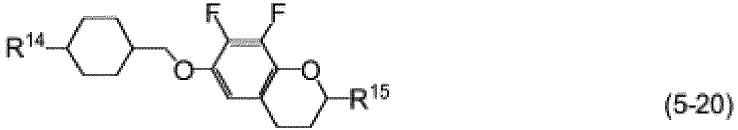 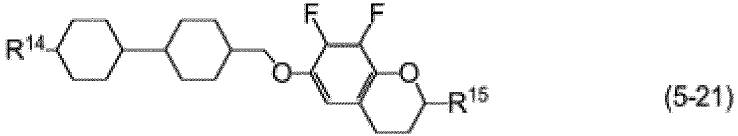 wobei in Formel (5-1) bis Formel (5-21), R¹⁴ und R¹⁵ unabhängig Alkyl mit 1 bis 12 Kohlenstoffen, Alkoxy mit 1 bis 12 Kohlenstoffen, Alkenyl mit 2 bis 12 Kohlenstoffen oder Alkenyloxy mit 2 bis 12 Kohlenstoffen sind.

12. Flüssigkristallzusammensetzung nach Anspruch 10 oder 11, wobei ein Anteil der vierten Komponente in dem Bereich von 3 Gew.-% bis 25 Gew.-% basierend auf dem Gewicht der Flüssigkristallzusammensetzung ist.

13. Flüssigkristallzusammensetzung nach einem der Ansprüche 1 bis 12, wobei eine Maximaltemperatur einer nematischen Phase 70°C oder höher ist, eine optische Anisotropie (gemessen bei 25°C) bei einer Wellenlänge von 589 nm 0,07 oder mehr ist, und eine dielektrische Anisotropie (gemessen bei 25°C) bei einer Frequenz von 1 kHz 2 oder mehr ist.

14. Flüssigkristallanzeigevorrichtung, beinhaltend die Flüssigkristallzusammensetzung nach einem der Ansprüche 1 bis 13.

15. Verwendung der Flüssigkristallzusammensetzung nach einem der Ansprüche 1 bis 13 in einer Flüssigkristallanzeigevorrichtung.

## Revendications

1. Composition de cristaux liquides qui a une phase nématique et une anisotropie diélectrique positive, et contient au moins un composé choisi dans le groupe des composés représentés par la formule (1) à titre de composant additif, et au moins un composé choisi dans le groupe des composés représentés par la formule (2) à titre de premier composant : 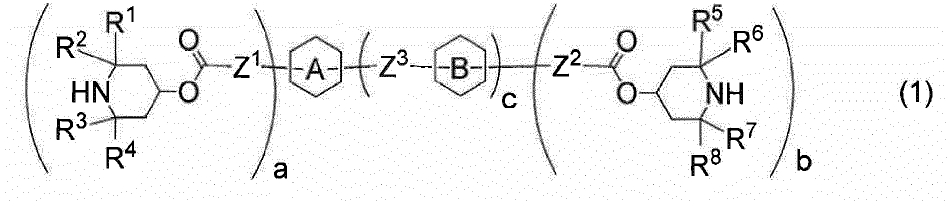 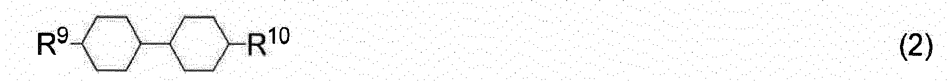
dans laquelle, dans la formule (1), R¹, R², R³, R⁴, R⁵, R⁶, R⁷ et R⁸ sont indépendamment un atome d'hydrogène ou un alkyle ayant 1 à 4 carbones ; cycle A et cycle B sont indépendamment un cyclohexylène, cyclohexénylène, décahydronaphtalènediyle, dihydropyrandiyle, tétrahydropyrandiyle, dioxanediyle, phénylène, naphtalènediyle, pyrimidinediyle ou pyridinediyle, et dans les cycles, au moins un hydrogène peut être remplacé par un atome de fluor, un atome de chlore, un alkyle ayant 1 à 5 carbones, un alcoxy ayant 1 à 5 carbones, ou un alkyle ayant 1 à 5 carbones dans lequel au moins un hydrogène est remplacé par un atome de fluor ou de chlore ; Z¹, Z² et Z³ sont indépendamment une liaison simple ou un alkylène ayant 1 à 10 carbones, et dans l'alkylène, au moins une partie de -CH₂-peut être remplacée par -O-, -S-, -CO-, -COO-, -OCO- ou -SiH₂-, et au moins une partie de -CH₂-CH₂- peut être remplacée par - CH=CH- ou -C≡C-, et dans les groupes, au moins un hydrogène peut être remplacé par un atome de fluor ou de chlore ; a et b sont indépendamment 1 ou 2 ; c est 0, 1 ou 2, et quand c est 0, cycle A est un cyclohexénylène, décahydronaphtalènediyle, dihydropyrandiyle, tétrahydropyrandiyle, dioxanediyle, naphtalènediyle, pyrimidinediyle ou pyridinediyle, et dans les cycles, au moins un hydrogène peut être remplacé par un atome de fluor, un atome de chlore, un alkyle ayant 1 à 5 carbones, un alcoxy ayant 1 à 5 carbones, ou un alkyle ayant 1 à 5 carbones dans lequel au moins un hydrogène est remplacé par un atome de fluor ou de chlore ; et
dans la formule (2), R⁹ et R¹⁰ sont indépendamment un alkyle ayant 1 à 12 carbones, un alcoxy ayant 1 à 12 carbones, un alcényle ayant 2 à 12 carbones, un alkyle ayant 1 à 12 carbones dans lequel au moins un hydrogène est remplacé par un atome de fluor ou de chlore, ou un alcényle ayant 2 à 12 carbones dans lequel au moins un hydrogène est remplacé par un atome de fluor ou de chlore.

2. Composition de cristaux liquides selon la revendication 1, contenant au moins un composé choisi dans le groupe des composés représentés par la formule (1-1) à la formule (1-5) à titre de composant additif : 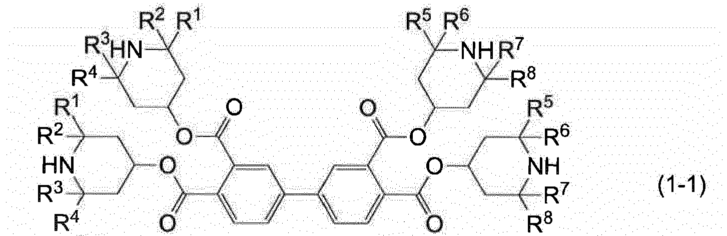 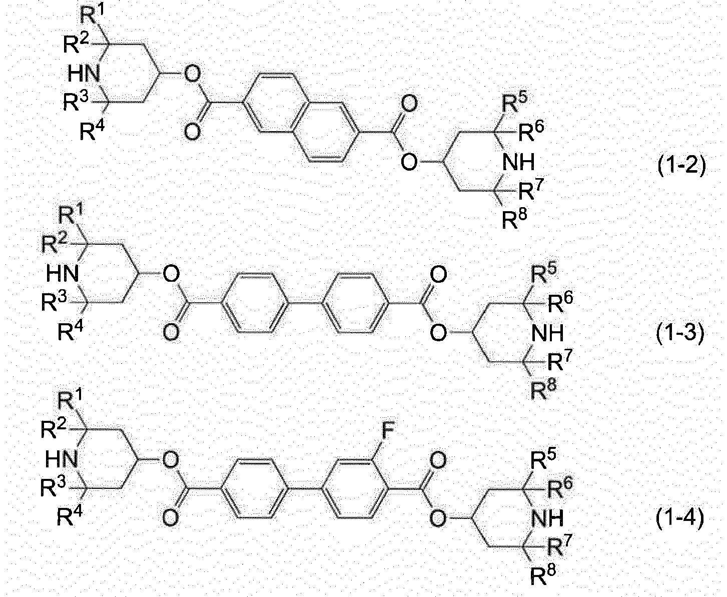 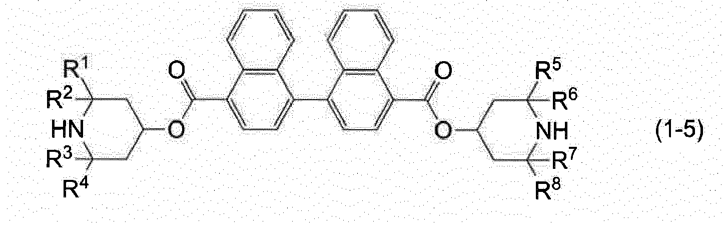 dans laquelle, dans la formule (1-1) à la formule (1-5), R¹, R², R³, R⁴, R⁵, R⁶, R⁷ et R⁸ sont indépendamment un atome d'hydrogène ou un alkyle ayant 1 à 4 carbones.

3. Composition de cristaux liquides selon la revendication 1 ou 2, dans laquelle une proportion du composant additif est dans la plage de 0,005 à 1 % en poids, et une proportion du premier composant est dans la plage de 5 à 60 % en poids, sur la base du poids de la composition de cristaux liquides.

4. Composition de cristaux liquides selon l'une quelconque des revendications 1 à 3, contenant au moins un composé choisi dans le groupe des composés représentés par la formule (3) à titre de deuxième composant : 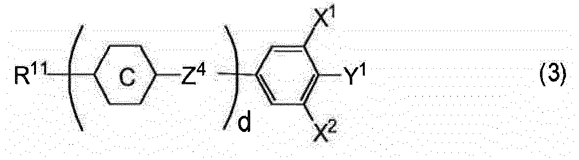 dans laquelle, dans la formule (3), R¹¹ est un alkyle ayant 1 à 12 carbones, un alcoxy ayant 1 à 12 carbones ou un alcényle ayant 2 à 12 carbones ; cycle C est un 1,4-cyclohexylène, 1,4-phénylène, 2-fluoro-1,4-phénylène, 2,3-difluoro-1,4-phénylène, 2,6-difluoro-1,4-phénylène, pyrimidine-2,5-diyle, 1,3-dioxane-2,5-diyle ou tétrahydropyran-2,5-diyle ; Z⁴ est une liaison simple, un éthylène, carbonyloxy ou difluorométhylèneoxy ; X¹ et X² sont indépendamment un atome d'hydrogène ou de fluor ; Y¹ est un atome de fluor, un atome de chlore, un alkyle ayant 1 à 12 carbones dans lequel au moins un hydrogène est remplacé par un atome de fluor ou de chlore, un alcoxy ayant 1 à 12 carbones dans lequel au moins un hydrogène est remplacé par un atome de fluor ou de chlore, ou un alcényloxy ayant 2 à 12 carbones dans lequel au moins un hydrogène est remplacé par un atome de fluor ou de chlore ; et d est 1,2, 3 ou 4.

5. Composition de cristaux liquides selon l'une quelconque des revendications 1 à 4, contenant au moins un composé choisi dans le groupe des composés représentés par la formule (3-1) à la formule (3-35) à titre de deuxième composant : 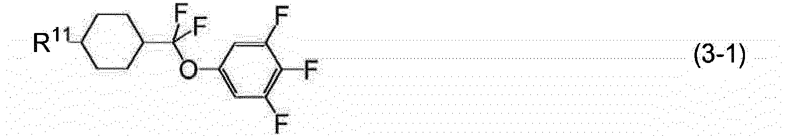 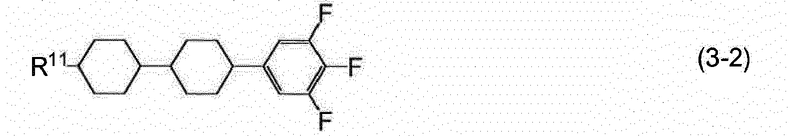 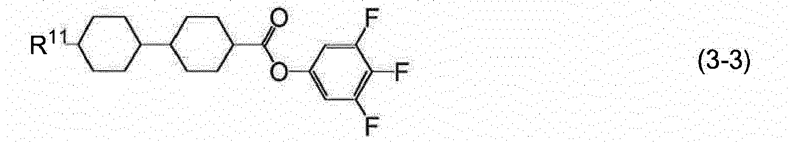 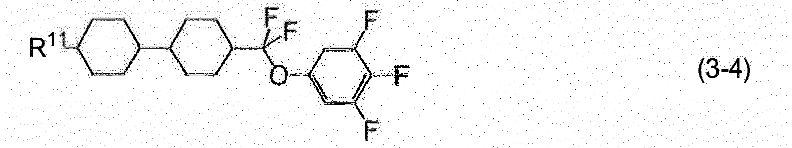 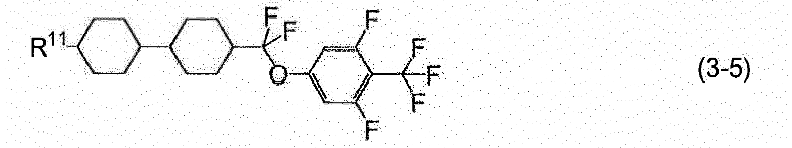 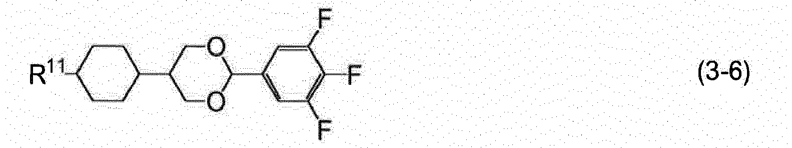 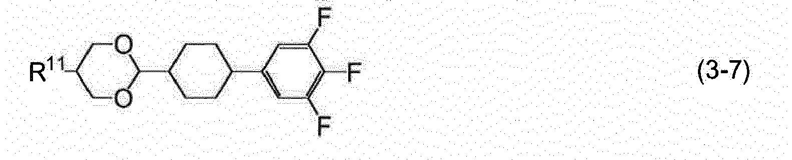 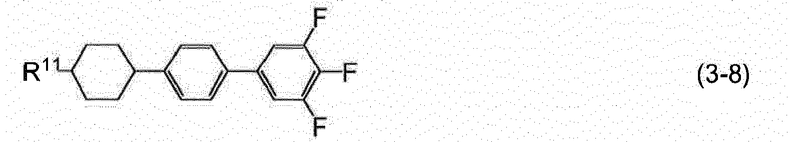 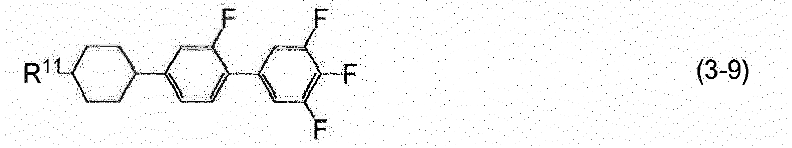 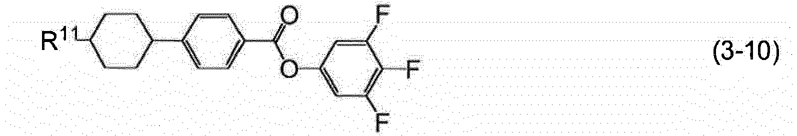 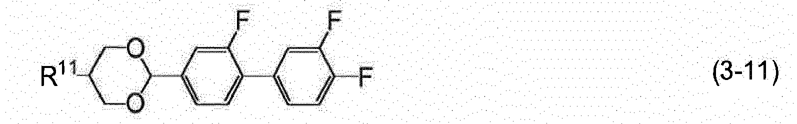 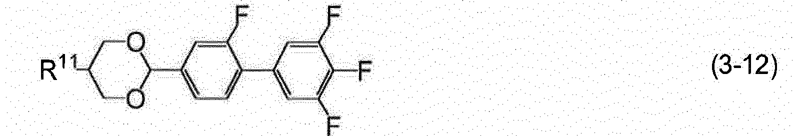 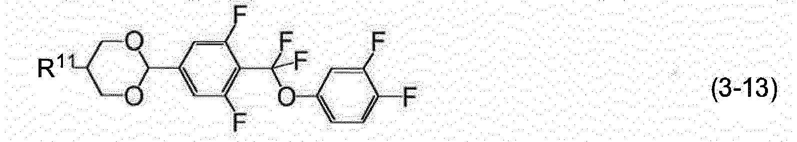 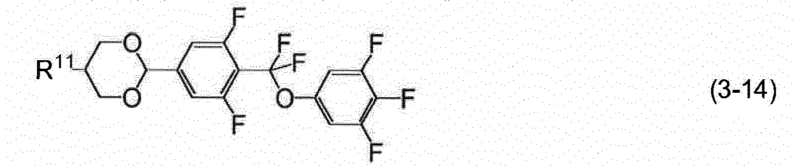 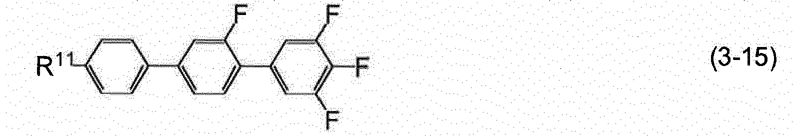 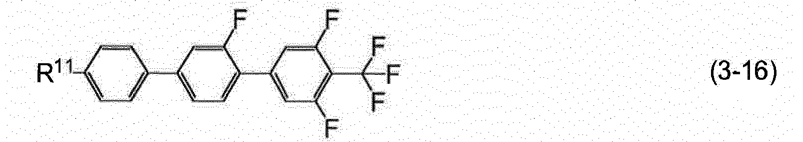 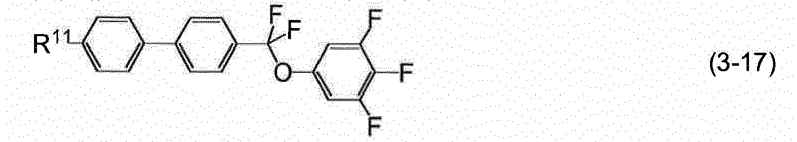 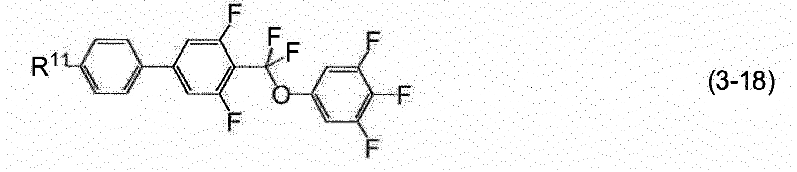 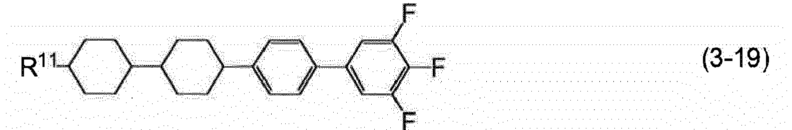 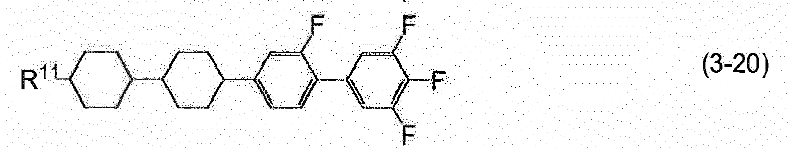 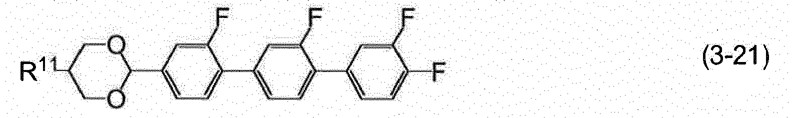 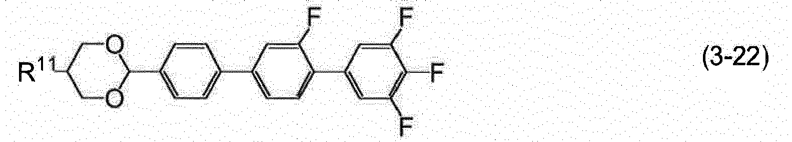 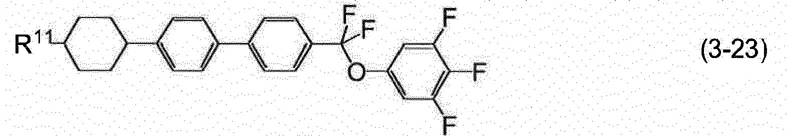 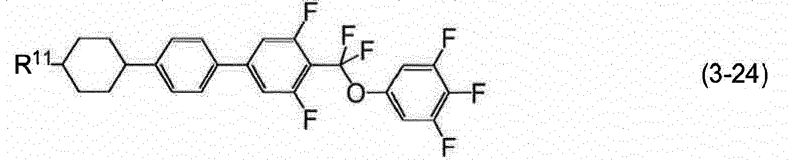 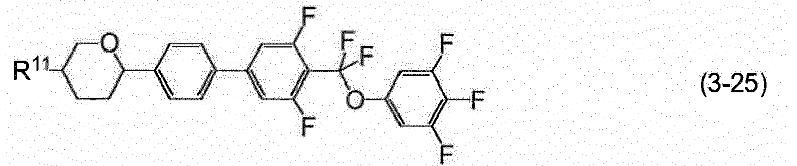 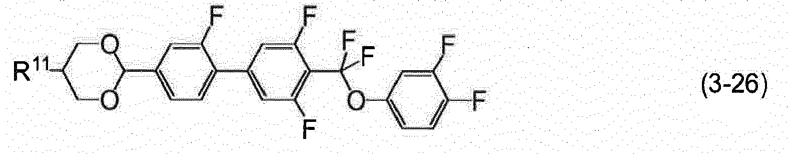 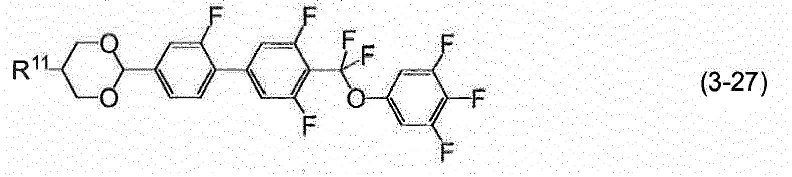 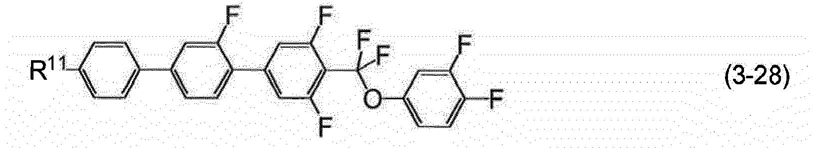 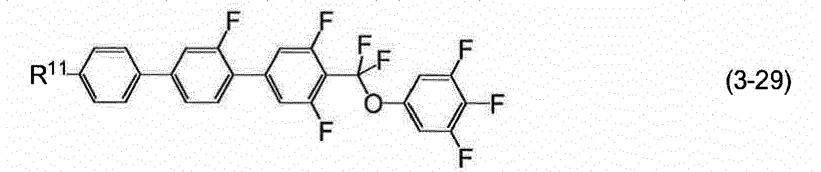 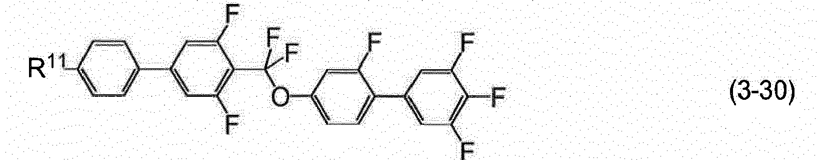 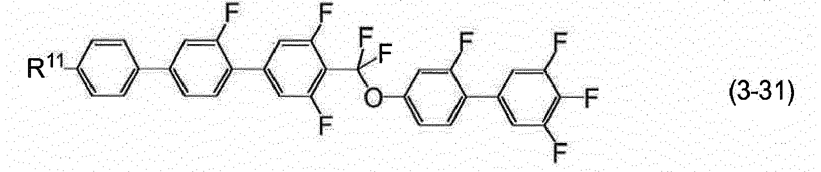 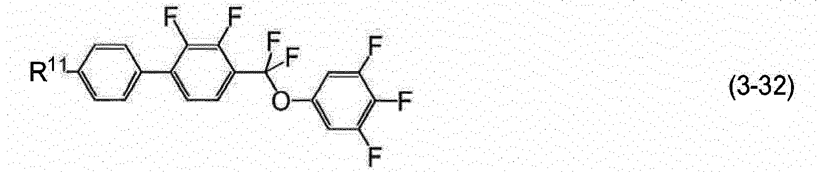 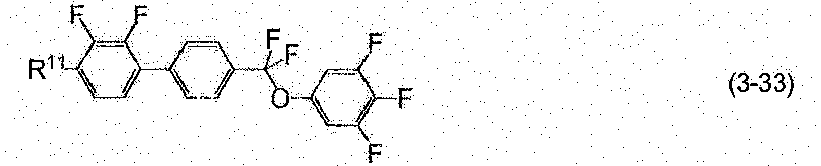 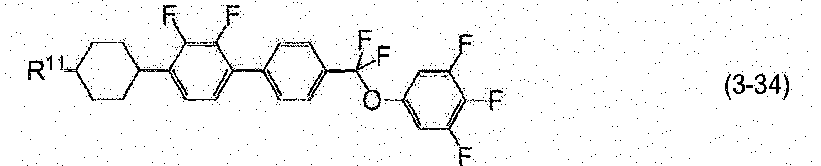 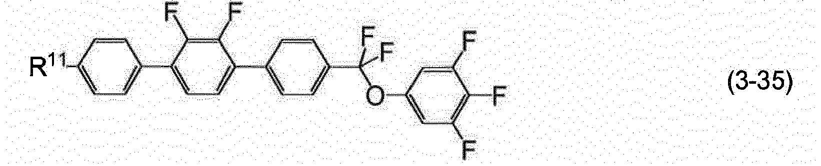 dans laquelle, dans la formule (3-1) à la formule (3-35), R¹¹ est un alkyle ayant 1 à 12 carbones, un alcoxy ayant 1 à 12 carbones ou un alcényle ayant 2 à 12 carbones.

6. Composition de cristaux liquides selon la revendication 4 ou 5, dans laquelle une proportion du deuxième composant est dans la plage de 10 à 90 % en poids, sur la base du poids de la composition de cristaux liquides.

7. Composition de cristaux liquides selon l'une quelconque des revendications 1 à 6, contenant au moins un composé choisi dans le groupe des composés représentés par la formule (4) à titre de troisième composant : 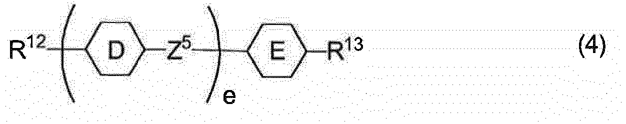 dans laquelle, dans la formule (4), R¹² et R¹³ sont indépendamment un alkyle ayant 1 à 12 carbones, un alcoxy ayant 1 à 12 carbones, un alcényle ayant 2 à 12 carbones, ou un alcényle ayant 2 à 12 carbones dans lequel au moins un hydrogène est remplacé par un atome de fluor ou de chlore ; cycle D et cycle E sont indépendamment un 1,4-cyclohexylène, 1,4-phénylène, 2-fluoro-1,4-phénylène ou 2,5-difluoro-1,4-phénylène ; Z⁵ est une liaison simple, un éthylène ou carbonyloxy ; et e est 1, 2 ou 3, et quand e est 1, cycle E est un 1,4-phénylène.

8. Composition de cristaux liquides selon l'une quelconque des revendications 1 à 7, contenant au moins un composé choisi dans le groupe des composés représentés par la formule (4-1) à la formule (4-12) à titre de troisième composant : 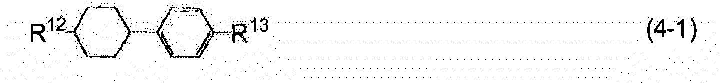 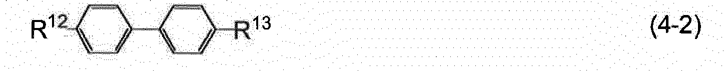 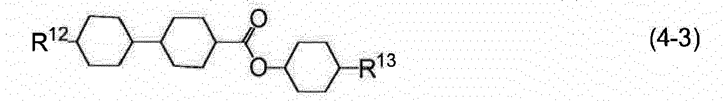 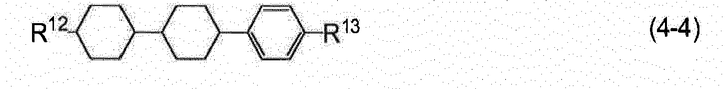 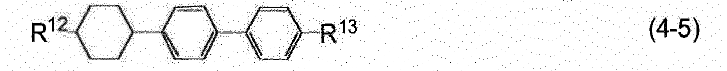 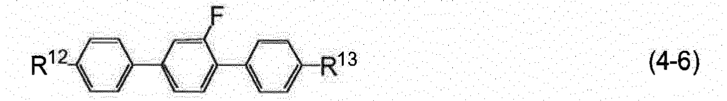 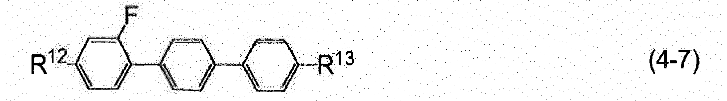 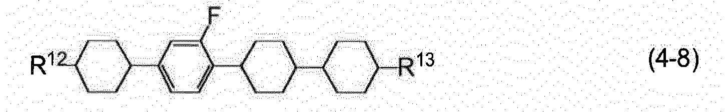 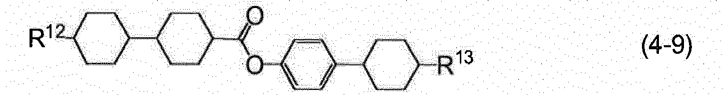 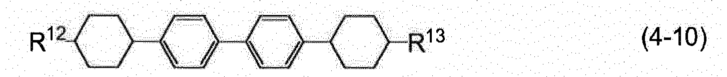 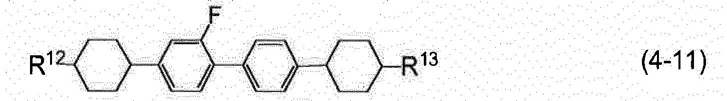 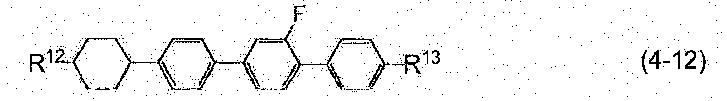 dans laquelle, dans la formule (4-1) à la formule (4-12), R¹² et R¹³ sont indépendamment un alkyle ayant 1 à 12 carbones, un alcoxy ayant 1 à 12 carbones, un alcényle ayant 2 à 12 carbones, ou un alcényle ayant 2 à 12 carbones dans lequel au moins un hydrogène est remplacé par un atome de fluor ou de chlore.

9. Composition de cristaux liquides selon la revendication 7 ou 8, dans laquelle une proportion du troisième composant est dans la plage de 5 à 60 % en poids, sur la base du poids de la composition de cristaux liquides.

10. Composition de cristaux liquides selon l'une quelconque des revendications 1 à 9, contenant au moins un composé choisi dans le groupe des composés représentés par la formule (5) à titre de quatrième composant : 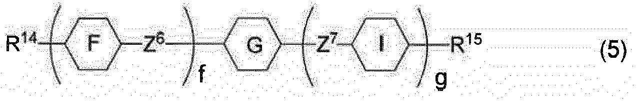 dans laquelle, dans la formule (5), R¹⁴ et R¹⁵ sont indépendamment un alkyle ayant 1 à 12 carbones, un alcoxy ayant 1 à 12 carbones, un alcényle ayant 2 à 12 carbones ou un alcényloxy ayant 2 à 12 carbones ; cycle F et cycle I sont indépendamment un 1,4-cyclohexylène, 1,4-cyclohexénylène, 1,4-phénylène, 1,4-phénylène dans lequel au moins un hydrogène est remplacé par un atome de fluor ou de chlore, ou un tétrahydropyran-2,5-diyle ; cycle G est un 2,3-difluoro-1,4-phénylène, 2-chloro-3-fluoro-1,4-phénylène, 2,3-difluoro-5-méthyl-1,4-phénylène, 3,4,5-trifluoronaphtalène-2,6-diyle ou 7,8-difluorochroman-2,6-diyle ; Z⁶ et Z⁷ sont indépendamment une liaison simple, un éthylène, carbonyloxy ou méthylèneoxy ; f est 1, 2 ou 3, et g est 0 ou 1 ; et une somme de f et g est de 3 ou moins.

11. Composition de cristaux liquides selon l'une quelconque des revendications 1 à 10, contenant au moins un composé choisi dans le groupe des composés représentés par la formule (5-1) à la formule (5-21) à titre de quatrième composant : 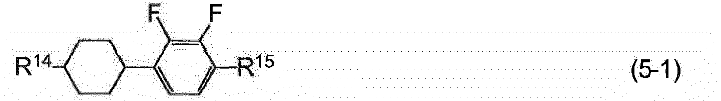 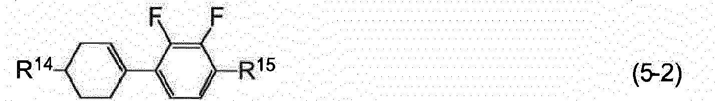 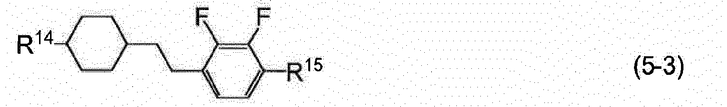 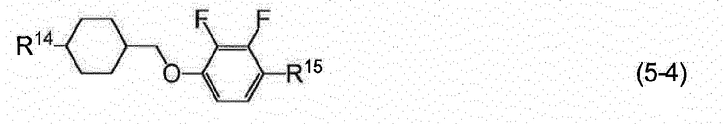 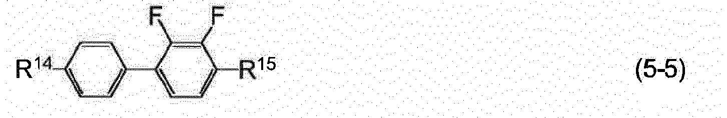 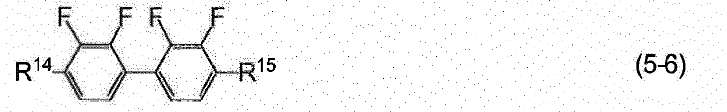 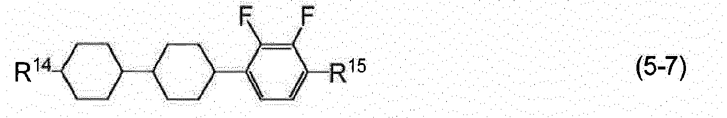 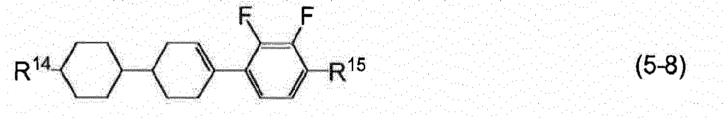 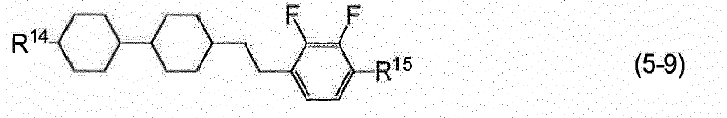 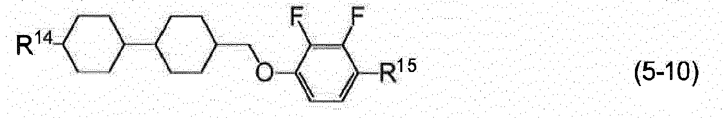 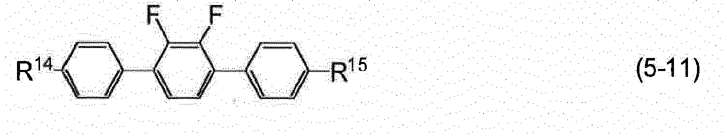 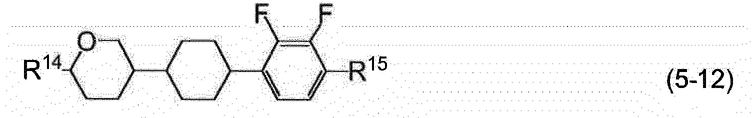 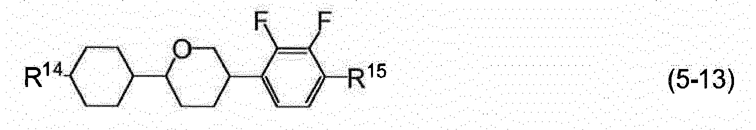 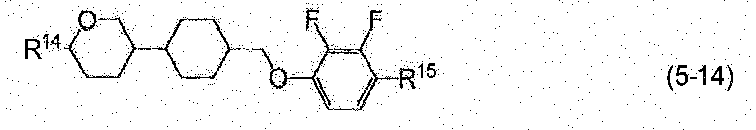 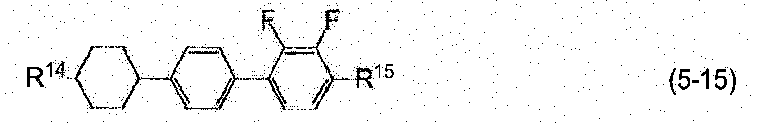 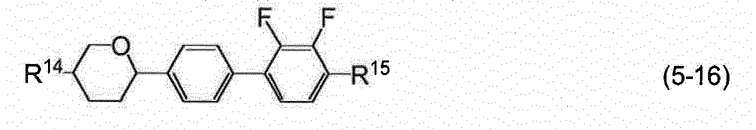 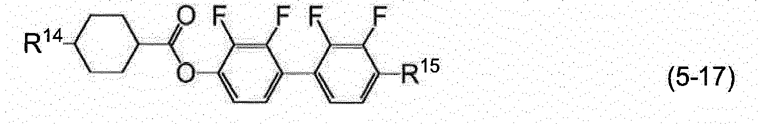 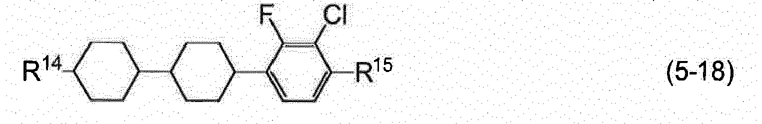 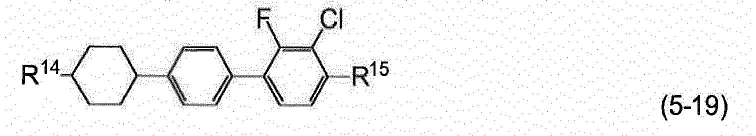 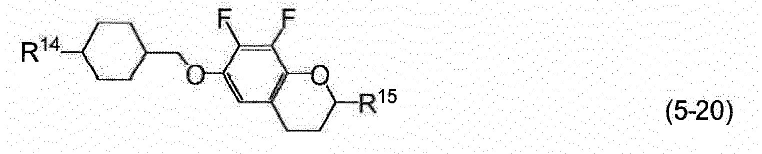 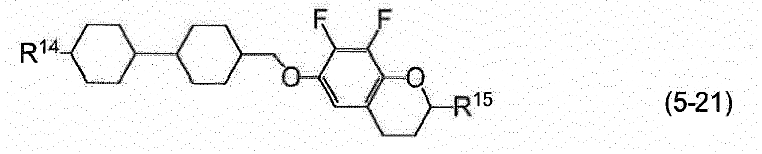 dans laquelle, dans la formule (5-1) à la formule (5-21), R¹⁴ et R¹⁵ sont indépendamment un alkyle ayant 1 à 12 carbones, un alcoxy ayant 1 à 12 carbones, un alcényle ayant 2 à 12 carbones ou un alcényloxy ayant 2 à 12 carbones.

12. Composition de cristaux liquides selon la revendication 10 ou 11, dans laquelle une proportion du quatrième composant est dans la plage de 3 à 25 % en poids, sur la base du poids de la composition de cristaux liquides.

13. Composition de cristaux liquides selon l'une quelconque des revendications 1 à 12, dans laquelle une température maximale d'une phase nématique est de 70 °C ou plus, une anisotropie optique (mesurée à 25 °C) à une longueur d'onde de 589 nanomètres est de 0,07 ou plus et une anisotropie diélectrique (mesurée à 25 °C) à une fréquence de 1 kHz est de 2 ou plus.

14. Dispositif d'affichage à cristaux liquides, comprenant la composition de cristaux liquides selon l'une quelconque des revendications 1 à 13.

15. Utilisation de la composition de cristaux liquides selon l'une quelconque des revendications 1 à 13 dans un dispositif d'affichage à cristaux liquides.
